# EUROPEAN PATENT APPLICATION

(11) **EP 3 239 278 A1**
(43) Date of publication of application: **01.11.2017**
(21) Application number: 16192129.1
(22) Date of filing: 11.02.2010
(51) Int. Cl.: C10L 1/02, C10L 1/19, C10L 1/12, C10L 1/18, C10L 1/182, C10L 1/185, C10L 1/188, C10L 1/198, C10L 1/20, C10L 1/228, C10L 1/23, C10L 1/232, C10L 1/24, C10L 1/30

(54) **FUEL COMPOSITION COMPRISING ALKYL ESTER**

(30) Priority: 11.02.2009 DK 200900197; 25.02.2009 US 155216 P; 03.06.2009 DK 200900694; 01.07.2009 US 222155 P; 01.07.2009 DK 200970051; 05.08.2009 DK 200970078
(62) Divisional of application: 10706907.2
(71) Applicant: Agowa IP APS, 7900 Nykøbing M (DK)
(72) Inventor: Møller, Kristian Kragh, 8320 Mårslet (DK); Pedersen, Per Henry, 9575 Terndrup (DK)
(74) Representative: Høiberg P/S

(57) **Abstract**

Use of a composition comprising a base formulation of one or more alkyl esters of a C₆-C₁₆ carboxylic acid or mixtures thereof as a fuel composition is provided. The use of the fuel composition is specifically provided for use as a lamp fuel, a lighter fuel, and/or a fuel for cooking, heating or cooling. Specifically, use of a composition as a lamp fuel is provided, wherein the composition comprises by weight 35-45% C₈ methyl esters, 25-35% C₁₀ methyl esters, 15-25% C₁₂ methyl esters, and/or 5-15% C₁₄ methyl esters. Also provided is a method for producing a fuel composition comprising the steps of a) providing a vegetable oil, b) preparing alkyl esters of carboxylic acids comprised in said vegetable oil by esterification and/or transesterification, c) optionally isolating one or more of said alkyl esters of said carboxylic acids, wherein said alkyl esters of carboxylic acids comprised in said vegetable oil and/or said one or more isolated alkyl esters constitute said fuel composition.

## Description

### Field of invention

The present invention relates to a non-petroleum fuel composition based on alkyl esters of a vegetable oil. The provided composition comprises a base formulation of one or more alkyl esters of a carboxylic acid, in particular, one or more alkyl esters of a C₆-C₁₆ carboxylic acid or mixtures thereof. The alkyl esters of the composition are preferably derived from renewable sources such as vegetable oil. Moreover, uses for the composition are provided as well as methods for production thereof. The composition is particularly suitable for use as lamp fuel.

### Background of invention

Conventional fuel compositions, such as lamp fuels are based on kerosene/paraffin or petrol. These fuel compositions suffer from the major drawback that they are highly toxic, especially upon ingestion. Even the slightest quantities of these dangerous fuels are sufficient to give heavy lung damages. Children are especially at risk, because infants often do not understand that for example lamp fuel is dangerous, and sometimes drink the lamp fuel directly out of oil lamps. Paraffin or kerosene arrive easily into the lungs, where it can cause chemical pneumonia, which in worst cases may even be mortal.

Chemical pneumonia or chemical pneumonitis is inflammation of the lung that may be caused by ingested gasoline or other petroleum distillates, such as lamp oils or lamp fuels. Chemical pneumonia or Chemical pneumonitis is an unusual type of lung irritation. Pneumonia usually is caused by a bacteria or virus, however, in chemical pneumonia, inflammation of lung tissue is from poisons or toxins. Signs and symptoms of chemical pneumonia vary greatly, but commonly include burning of the nose, eyes, lips, mouth, and throat, dry cough, wet cough producing clear, yellow, or green mucus, cough producing blood or frothy pink matter in your spit, nausea or abdominal pain, chest pain, shortness of breath, painful breathing or pleuritis (an inflammation of the outside covering of the lungs), headache, flu symptoms, weakness or a general ill feeling, delirium or disorientation, signs a doctor might observe, rapid or shallow breaths, rapid pulse, oral, nasal, or skin burns, pale or cyanotic skin and lips, much sweating, altered thinking and reasoning skills, unconsciousness, swelling of eyes or tongue, hoarse or muffled voice, chemical odours on other areas of the body, frothy spit from a cough, and/or fever.

Thus far, the problem of infants poisoned from drinking lamp fuel directly out of oil lamps, torches etc. has been addressed by providing "children-proof" oil lamps and torches which are constructed in a manner such that children can not open the device, and therefore can not drink the fuel from the fuel container.

In the present invention, a new route has been followed to address the problem of toxic lamp fuels. The present invention provides a "children-proof" non-petrol/non-paraffin lamp oil, which is based on refined vegetable oil, and therefore is non-toxic to ingest. The fuel compositions of the present invention are thus based on pure vegetable ingredients. In contrast to conventional lamp fuels, the fuel compositions of the present invention has the further advantages that its combustion products are harmless and do not create pollutants Less soot, whereby it is much more hygienic for general use than conventional paraffin or kerosene based fuel compositions. Therefore, the fuel compositions of the present invention are renewable, CO2-neutral and safe. The lamp fuel of the present invention may replace conventional lamp fuels as well as other fuel compositions, thereby avoiding the negative aspects of petrol-based fuel compositions.

### Summary of invention

The present invention relates to a non-toxic fuel composition, which is based on a vegetable oil. In one aspect, the present invention relates to use of a composition comprising a base formulation of one or more alkyl esters of a C₆-C₁₆ carboxylic acid or mixtures thereof as a fuel composition. The composition is in specific embodiments used as a lighter fluid, heating fuel, fuel for cooking and/or cooling fuel, preferably a lamp oil, such as a lamp oil for indoor and/or outdoor use.

In one embodiment, the composition comprises at least 50%, such as at least 60%, for example at least 70%, such as at least 80%, for example at least 90% by weight of one or more alkyl esters of a C₆-C₁₆ carboxylic acid or mixtures thereof as a lamp fuel.

The fuel composition in one embodiment comprises at least 80%, such as at least 90% by weight of one or more alkyl esters of C₈-C₁₄ carboxylic acids, at least 70% by weight of one or more alkyl esters of C₈-C₁₂ carboxylic acids, at least 60% by weight of one or more alkyl esters of C₈-C₁₀ carboxylic acids, at least 70% by weight of one or more alkyl esters of C₁₀-C₁₄ carboxylic acids, and/or at least 40% by weight of one or more alkyl esters of C₁₀-C₁₂ carboxylic acids. In another embodiment, the composition comprises less than 5% by weight of any alkyl ester of a C₆ or any lower chain order carboxylic acid and/or less than 5% by weight of any alkyl ester of a C₁₈ or any higher chain order carboxylic acid.

In another embodiment, the composition claimed for use according to the present invention comprises one or more alkyl esters of C₈-C₁₀, C₈-C₁₂, C₁₀-C₁₂, C₁₀-C₁₄ or C₁₂-C₁₄ carboxylic acids, such as by weight 10-80% C₈ alkyl esters, 10-80% C₁₀ alkyl esters, 10-70% C₁₂ alkyl esters, and/or 0-40% C₁₄ alkyl esters, or the composition for example comprises by weight 35-45% C₈ alkyl esters, 25-35% C₁₀ alkyl esters, 15-25% C₁₂ alkyl esters, and/or 5-15% C₁₄ alkyl esters, or for example by weight 15-25% C₈ alkyl esters, 10-20% C₁₀ alkyl esters, 45-55% C₁₂ alkyl esters, and/or 15-25% C₁₄ alkyl esters. Preferably at least 80% of the alkyl esters are fully saturated.

The compositions claimed for use as a fuel, such as a lamp fuel composition has a melting point of less than 0 °C; and the composition is preferably liquid at least in the temperature range from 0-100 °C, such as 0-80 °C, for example 0-60 °C. The composition has in certain embodiments a viscosity, which is less than 10 cPoise (cP), such as less than 5 cP, such as less than 4 cP, for example less than 3 cP, such as less than 2.5 cP, for example less than 2 cP, such as less than 1.5 cP, for example less than 1 cP, preferably between 5 and 0 cP, for example between 4 and 1 cP, such as between 3 and 1.5 cP, such as between 2.5 and 1.5 cP.

The alkyl esters of the used composition are in one embodiment selected from the group consisting of methyl ester, ethyl ester, propyl ester, buthanyl ester and mixtures thereof, such as selected from the group consisting of methyl ester, ethyl ester, and mixtures thereof, preferably the alkyl ester is a methyl ester, and the alkyl ester is preferably methyl octanate, methyl decanoate, methyl dodecanoate, methyl tetradecanoate and/or mixtures thereof.

In another embodiment, the compositions claimed for use according to the present invention further comprises an alcohol, for example between 0.5 and 5 % by weight alcohol. The alcohol is for example selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate. Preferably, the alcohol comprises one to six carbon atoms, and is for example selected from the group consisting of methanol, ethanol, propanol, butanol, pentanol, hexanol, and mixtures thereof, such as methanol, ethanol, propanol and/or butanol, for example the alcohol is ethanol, methanol and/or butanol.
In one embodiment, the composition further comprises an antioxidant, such as an antioxidant selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidises, and/or the composition may also comprise a coloring agent, such as a coloring agent is selected from the group consisting of a lithium salt or strontiumsalt, boric acid, borax sodiumsalt, barium salt, calcium salt, copper salt, potassium salt, cerium salt, cesium salt, and nitromethane, and/or the composition may comprise a fragrance, which is suitable for use in a fuel composition, such as a lamp oil, in particular a lamp oil for indoor use.
In a specific embodiment, the present invention relates to the use of a composition comprising by weight 35-45% C₈ alkyl esters, 25-35% C₁₀ alkyl esters, 15-25% C₁₂ alkyl esters, and/or 5-15% C₁₄ alkyl esters as an indoor lamp fuel. In another specific embodiment, a composition comprising by weight 15-25% C₈ alkyl esters, 10-20% C₁₀ alkyl esters, 45-55% C₁₂ alkyl esters, and/or 15-25% C₁₄ alkyl esters is claimed for use as an outdoor lamp fuel.

In another aspect, the present invention relates the a method for producing a fuel composition comprising the steps of: a) providing a vegetable oil, b) preparing alkyl esters of carboxylic acids comprised in said vegetable oil by esterification and/or transesterification, and c) optionally isolating one or more of said alkyl esters of said carboxylic acids, wherein said alkyl esters of carboxylic acids comprised in said vegetable oil and/or said one or more isolated alkyl esters constitute said fuel composition. The isolation of the one or more alkyl esters of a carboxylic acid is for example obtained by fractionation and/or distillation, and/or the vegetable oil and/or alkyl esters are for example refined by desliming/delicithination, fractionation, distillation, and/or bleaching. In one embodiment, the vegetable oil and/or alkyl esters are refined by of extensive bleaching of the fuel composition, for example the extensive bleaching comprising the steps of a) heating the vegetable oil to 220-300 degrees Celsius, b) adding 1 -10 % bleaching clay, c) stirring optionally under vacuum in at least 15 minutes, and d) separation of the bleaching clay and refined vegetable oil by filtration.

In one embodiment, the alkyl ester isolated according the method of the present invention is selected from the group consisting of methyl ester, ethyl ester, and mixtures thereof.

In a further embodiment, the method comprises removing a substantial amount of C₆ carboxylic acids and/or derivatives thereof from said fuel composition and/or comprising removing a substantial amount of C₁₆ and/or any higher order carboxylic acids and/or derivatives thereof from said fuel composition. A substantial amount is meant as at least 80%, such as at least 90%, and preferably at least 95, such as at least 98% of the C₆ carboxylic acids and/or derivatives thereof and/or C₁₆ and/or any higher order carboxylic acids and/or derivatives thereof.

In one embodiment, the one or more isolated alkyl esters are one or more alkyl esters of C₈ - C₁₄ carboxylic acids, such as one or more alkyl esters of C₈-C₁₀, C₈-C₁₂, C₁₀-C₁₂, C₁₀-C₁₄ or C₁₂-C₁₄ carboxylic acids. For example, the one or more isolated alkyl esters have been isolated to the extent that the fuel composition comprises by weight 10-80% C₈ alkyl esters, 10-80% C₁₀ alkyl esters, 10-70% C₁₂ alkyl esters, and/or 0-40% C₁₄ alkyl esters. Specifically, the one or more isolated alkyl esters have been isolated to the extent that the fuel composition comprises by weight 35-45% C₈ alkyl esters, 25-35% C₁₀ alkyl esters, 15-25% C₁₂ alkyl esters, and/or 5-15% C₁₄ alkyl esters. In another specific embodiment the one or more isolated alkyl esters have been isolated to the extent that the fuel composition comprises by weight 15-25% C₈ alkyl esters, 10-20% C₁₀ alkyl esters, 45-55% C₁₂ alkyl esters, and/or 15-25% C₁₄ alkyl esters.

In another embodiment, the method comprises an additional step of adding at least one alcohol, such as an alcohol defined herein above for compositions for use as a fuel composition, such as a lamp fuel. The method also in a specific embodiment comprises the additional step of adding at least one antioxidant, such as an antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases. The method may also comprise adding at least one coloring agent, such as a coloring agent is selected from the group consisting of a lithium salt or strontiumsalt, boric acid, borax sodiumsalt, barium salt, calcium salt, copper salt, potassium salt, cerium salt, cesium salt, and nitromethane. Moreover, the method may further comprise a fragrance, such as any fragrance suitable for a fuel composition, including a lamp fuel.

The vegetable oil provided in the method of the present invention is in one embodiment selected from the group consisting of coconut, corn, cottonseed, olive, palm, peanut, rape, rapeseed, canola, safflower, sesame, soybean, jatropha and/or sunflower oils; for example, the vegetable oil is selected from the group consisting of sunflower oil, olive oil, rape oil soy bean oil and jatropha oil. In a preferred embodiment, the vegetable oil is a rapeseed oil, and an even more preferred embodiment, the vegetable oil is palm tree oil or palm kernel oil.

In another aspect, the present invention relates to the use of a fuel composition prepared by any method of the present invention as a lamp fuel, lighter fluid, heating fuel, fuel for cooking and/or cooling fuel.
Yet another aspect relates to the use of a fuel composition prepared by any method of the present invention for the preparation of a lamp fuel, lighter fluid, heating fuel, fuel for cooking and/or cooling fuel.

In a further broad aspect, the present invention relates to a fuel composition comprising
a. a base formulation of one or more alkyl esters of a C₂-C₁₂ carboxylic acid or mixtures thereof, and/or
b. one or more alkyl esters of a vegetable oil.
The alkyl ester is in a preferred embodiment an a methyl, ethyl, propyl, butanyl, pentyl or a hexanyl ester or a mixture thereof. In one embodiment, the composition further comprise an alcohol, such as butanol. The vegetable oil is preferably refined, for example by bleaching, extensive bleaching.

In another aspect, the present invention relates to a lamp fuel composition comprising a composition of the present invention.

In another aspect, the invention relates to a use of a composition as defined in any of the preceding claims for the preparation of a lamp fuel, heating fuel, fuel for cooking and/or cooling fuel.

In yet another aspect, the invention relates to a composition of the present invention for use as a lamp fuel, lighter fluid, and/or heating fuel.

In a further aspect, the present invention relates to a method for producing a fuel composition, such as a lamp fuel, said method comprising the steps of:
a. providing a vegetable oil,
b. preparing an alkyl ester of carboxylic acids comprised in said vegetable oil.

In another aspect, the invention relates to a fuel composition comprising refined and bleached vegetable oil, and at least one fuel supporter. The vegetable oil is preferably selected from the group consisting of coconut, corn, cottonseed, olive, palm, peanut, , rapeseed, canola, safflower, sesame, soybean, jatropha and/or sunflower oils as well as any other industrial grown non-eatable oils.

In another aspect, the invention relates to a composition as defined in any of the preceding claims for use as a lamp fuel, a fuel for heating or for kindling.

In yet another aspect, the present invention relates to a method for producing a fuel composition, such as a lamp fuel, said method comprising the steps of:
a. providing a mixture of an alcohol and hydroxide ions,
b. heating a vegetable oil,
c. adding said mixture of step a. to the heated vegetable oil of step b,
d. stirring the components of step c in order to mix the heated vegetable oil with the alcohol and hydroxide ion mixture,
e. heating the mixture components of step d, and
f. separating a refined vegetable oil comprising a fatty acid fraction from a glycerol fraction.

### Description of drawings

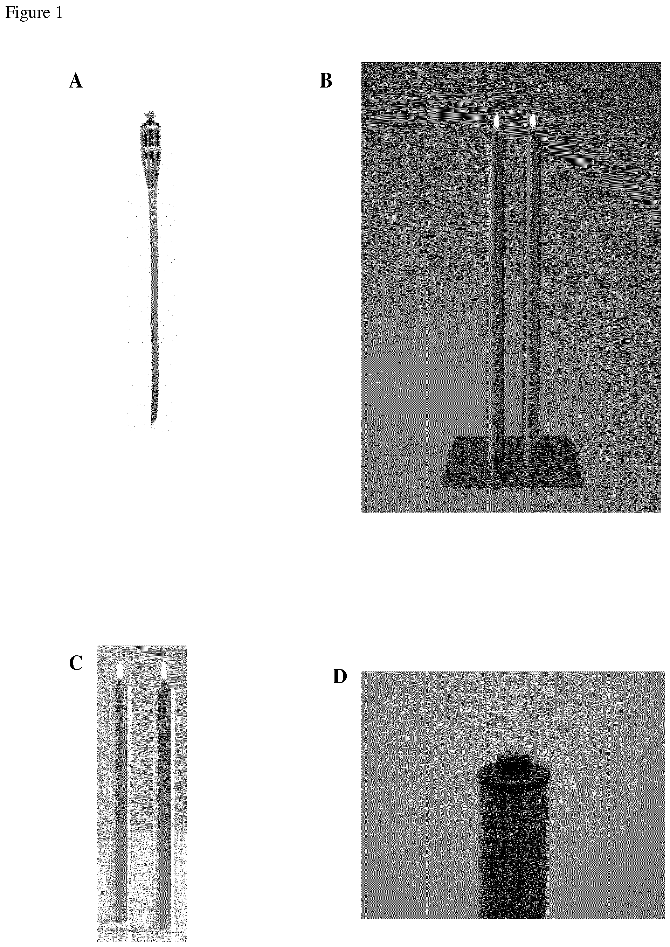

Figure 1: Examples of oil lamps and torches, which may be fuelled with a lamp fuel composition of the present invention. Panel A shows a bamboo torch; panel B shows a Mag. oilstick; C is a Mag. Simplicity; and D shows a black top torch.

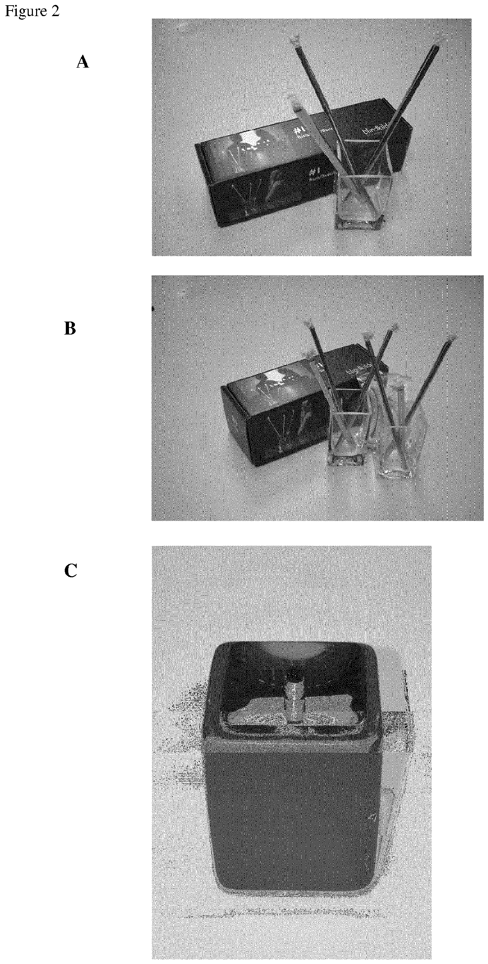

Figure 2: Examples of stix oil lamps, which may be fuelled with a lamp fuel composition of the present invention. Panel A is a 14 cm stix oil lamp; panel B is a 19 cm stix oil lamp; panel C shows a Menu oil lamp.
Figure 3: A. Set-up of all indoor lamps with a lamp oil of the present invention, B. Outdoor lamp with a lamp oil of the present invention setup for particle collection, C. Outdoor lamp with conventional paraffin based lamp oil setup for particle collection

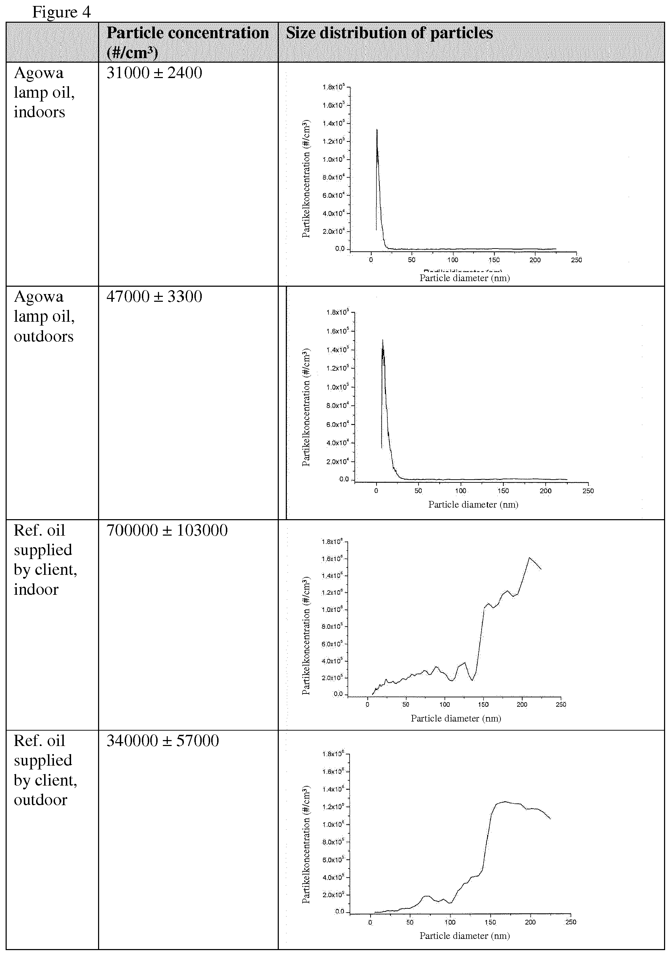

Figure 4: Particle concentration and size distribution.

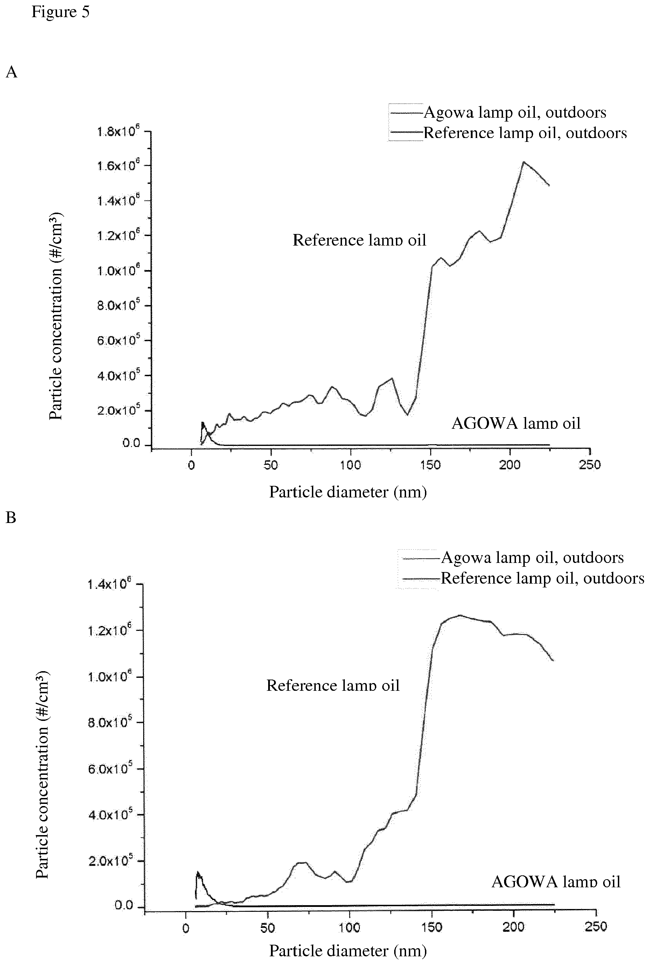

Figure 5: A. Comparison of particle concentration in the range 5-225 nm for a lamp oil of the present invention and the paraffin based conventional reference lamp oil used for indoor lamps. B Comparison of particle concentration in the range 5-225 nm for a lamp oil of the present invention and the paraffin based conventional reference lamp oil used for outdoor lamps.

### Detailed description of the invention

The present invention relates to a fuel composition, which is not based on petrol, kerosene or paraffin. In the fuel compositions of the present invention, the dangerous petrol/kerosene/paraffin component is replaced by alkyl esters of carboxylic acids from vegetable oil or biodiesel. Thus, in one aspect, the present invention relates to a fuel composition comprising a base formulation of one or more alkyl esters of a C₆-C₁₆ carboxylic acid or mixtures thereof, and the use of said composition as a fuel, such as a lamp fuel. The terms "lamp fuel" and "lamp oil" are used synonymously herein and refers to a fuel for oil lamps.

In another broad aspect, the present invention relates to a composition comprising fatty acid derivatives of refined vegetable oil, and optionally at least one fuel supporter. The composition of the present invention is a flammable liquid that releases energy in the form of light and/or heat when hydrocarbons burn.

The term an "ester" as used herein refers to a chemical compound derived formally from an oxoacid (one containing an oxo group, X=O), and a hydroxyl compound such as an alcohol or phenol. In the present invention, the ester compounds are preferably formed by a reaction between a carboxylic acid/fatty acid, as defined herein below and an alcohol, preferably an alcohol comprising 1 to 6 carbon atoms. The chemical reaction of forming an ester from an alcohol and an acid, such as a carboxylic acid, is referred herein to as "esterification" A general formula of a carboxylic acid ester, wherein R and R' denote any alkyl or aryl group is

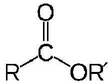

In the compositions claimed in the present invention, the R group is preferably the aliphatic chain of a carboxylic acid, such as a C₆-C₁₆ aliphatic chain, and R' is a C₁-C₆ chain, i.e. preferably a methyl, ethyl, propyl, butyl, pentyl, or a hexyl group. In general, the R' group is herein referred to as an alkyl group, and this alkyl group is preferrably methyl or ethyl.
The term "transesterification" refers to the process of exchanging the organic group R" of an ester with the organic group R' of an alcohol. These reactions may be catalyzed by the addition of an acid or base.

The term "base formulation" as used herein refers to a formulation of one or more alkyl esters of a carboxylic acid, as defined herein. The base formulation comprises specific alkyl esters or mixtures thereof as designated herein below. In particular, the base formulation as defined herein is comprised in the compositions of the present invention. However, the composition may further comprise one or more additional components, such that the composition e.g. comprises 90% of a base formulation, while the remaining 10 % of the composition is constituted by one or more additional components, such as an alcohol, other additives and/or residuals.

### Carboxylic acid/Fatty acid

In one aspect, the invention relates to a fuel composition comprising a base formulation of one or more alkyl esters of a carboxylic acid. For example, the invention relates to a fuel composition comprising a. a base formulation of one or more alkyl esters of a carboxylic acid or mixtures thereof, and/or b. one or more alkyl esters of a vegetable oil, such as a refined vegetable oil, wherein said vegetable oil is preferably refined by bleaching/extensive bleaching.
In another aspect, the present invention relates to a fuel composition comprising a base formulation of one or more alkyl esters of a C₆-C₁₆ carboxylic acid or mixtures thereof, and the use of said composition as a fuel, such as a lamp fuel.
The carboxylic acid is also sometimes referred to as a fatty acid, and the carboxylic acid of the present invention comprise any organic acid with the general formula R-COOH, wherein R represents a side chain/substituent. A carboxylic acid of the present invention includes saturated and non-saturated forms, straight unbranched chains and branched side chains, as well as monocarboxylic acids and multicarboxylic acids, such as di- and tri-carboxylic acids. The carboxylic acid may comprise any number of carbon atoms, but preferably comprise between 2-20 carbon atoms, designated as C₂-C₂₀ carboxylic acids/fatty acids, but in a preferred embodiment, the carboxylic acids may comprise 6-16 carbon atoms, and even more preferred 8-14 carbon atoms; i.e. C₆-C₁₆, or C₈-C₁₄. In a preferred embodiment, the composition of the present invention, claimed as a composition and for use as a fuel, such as a lamp fuel or lighter fluid, comprises one or more alkyl esters of C₈-C₁₀, C₈-C₁₂, C₁₀-C₁₂, C₁₀-C₁₄ or C₁₂-C₁₄ carboxylic acids.

In one embodiment, the invention relates to a fuel composition comprising a. a base formulation of one or more alkyl esters of a C₂-C₁₂ carboxylic acid or mixtures thereof, and/or b. one or more alkyl esters of a vegetable oil. In another embodiment, the base formulation of the composition of the present invention comprises one or more alkyl esters of a C₂-C₂₀ carboxylic acid. In a specific embodiment, the base formulation comprises one or more alkyl esters of a C₄-C₁₂ carboxylic acid, such as a C₄-C₁₀ carboxylic acid, or more preferred a, C₆-C₈ carboxylic acid, and/or mixtures thereof.

Examples of carboxylic acids are provided in table 1 below, and in one embodiment, the one or more alkyl ester of the present invention is one or more alkyl ester of a carboxylic acid selected from the group set out in table 1, or mixtures thereof.

**Table 1. list of saturated carboxylic acids**

| **Systematic name** | **Trivial name** | **Shorthand designation** | **Molecular wt.** | **Melting point (°C)** |
|---|---|---|---|---|
| butanoic | butyric | 4:0 | 88.1 | -7.9 |
| pentanoic | valeric | 5:0 | | |
| hexanoic | caproic | 6:0 | 116.1 | -3.4 |
| octanoic | caprylic | 8:0 | 144.2 | 16.7 |
| nonanoic | pelargonic | 9:0 | 158.2 | 12.5 |
| decanoic | capric | 10:0 | 172.3 | 31.6 |
| dodecanoic | lauric | 12:0 | 200.3 | 44.2 |
| tetradecanoic | myristic | 14:0 | 228.4 | 53.9 |
| hexadecanoic | palmitic | 16:0 | 256.4 | 63.1 |
| heptadecanoic | margaric (daturic) | 17:0 | 270.4 | 61.3 |
| octadecanoic | stearic | 18:0 | 284.4 | 69.6 |
| eicosanoic | arachidic | 20:0 | 312.5 | 75.3 |

Thus, in one embodiment, the base formulation of the composition of the present invention comprise alkyl butanoate ester, alkyl pentanoate, alkyl hexanoate, alkyl octanoate, alkyl nonanoate, alkyl decanoate, alkyl dodecanoate, alkyl tetradecanoate, alkyl hexadecanoate, alkyl heptadecanoate, alkyl octadecanoate, alkyl eicosanoate and/or mixtures thereof. In a preferred embodiment, the base formulation of the composition comprises alkyl butanoate ester, alkyl pentanoate, alkyl hexanoate, alkyl octanoate, alkyl nonanoate, alkyl decanoate and/or mixtures thereof. In a more preferred embodiment, the base formulation of the composition comprises alkyl butanoate ester, alkyl pentanoate, alkyl hexanoate, alkyl octanoate and/or mixtures thereof. In another preferred embodiment, the base formulation of the composition comprises alkyl hexanoate, alkyl octanoate and/or mixtures thereof. In another preferred embodiment, the base formulation comprises an alkyl ester of a C₁₈ carboxylic acid, such as alkyl linoleate, alkyl linolenate and/or mixtures thereof.

Preferred fatty acids for production of a fuel composition/lamp fuel of the present invention are listed in table 2 below.

**Table 2. Physical characteristics of preferred carboxylic acids.**

| Name | Source | Amount in composition | Melting point, Centigrade °C | Boiling point °C at 4 mm Hg | Flash point, centigrade °C | Viscosity |
|---|---|---|---|---|---|---|
| C4 *n*-Butanoic acid | Primary source is Milk fat | 100 % | -8 | 164 | - | not available |
| C6 Caproic Acid | Primary source cocao butter or soya bean oil | 100 % | -52 | 152 | 63 | Appr.. 2 cps |
| C8 Caprylic acid | Primary source palmkernal oil or cocunot oil | 100 % | -38 | 204 | 90 | < 10 cps |
| C10 capric acid (decanoic acid) | Primary source palmkernal oil or cocunot oil | 100 % | 7 | 233 | 82 | 13 cps at 22°C |
| C18:2 Linoleic acid | not available | | | | | |
| C18:3 Linolenic acid | not available | | | | | |
| Refined vegetable oils, for example hydrolysed | Primary source rapeseed oil or canola oil, soy bean oil, sunflower, olive oil, Jathrofa oil. However, other sources are also applicable | 100 % | Depends on oil type +10--20 | | above 110 | Depends on oil type 3-9cps |

The most preferred carboxylic acid of the present invention is a C₈-C₁₆ carboxylic acid or mixtures thereof, such as C₈-C₁₀, C₈-C₁₂, C₁₀-C₁₂, C₁₀-C₁₄ or C₁₂-C₁₄ carboxylic acids or mixtures thereof.

The components of the compositions of the present invention are preferably prepared from renewable sources, such as plant-derived, vegetable oils. The fatty acids/carboxylic acids and/or alkyl esters, such as methyl or ethyl esters, are isolated from the vegetable oil by conventional methods, as described herein below, for example by degumming, bleaching, and/or distillation of the vegetable oil. The carboxylic acids are esterified or transesterified by reaction with an organic alcohol, which may comprise any number of carbon atoms. However, the alcohol used for esterification is preferably an alcohol comprising one to six carbons, such as methanol, ethanol, propanol, butanol, pentanol, and/or hexanol, such that the alkyl group of the alkyl esters are , methyl, ethyl, propyl, butyl, pentyl and/or hexanyl esters, respectively of a carboxylic acid of the present invention. The alcohol comprising one to six carbon atoms may however also be a secondary alcohol such as isopropanol, isobutanol, isopentanol, isohexanol etc., or a tertiary alcohol. In a preferred embodiment, the alcohol is methanol or ethanol, or a mixture thereof.

In a preferred embodiment, the composition for use as a fuel, such as a lamp fuel/lamp oil, according to the present invention comprises at least 40%, such as at least 45%, for example at least 50%, such as at least 55%, for example at least 60%, such as at least 65%, for example at least 70%, such as at least 75%, for example at least 80% such as at least 85%, for example at least 90%, such as at least 95%, for example at least 99% by weight of one or more alkyl esters of C₆-C₁₆ carboxylic acid or mixtures thereof. In a preferred embodiment, the one or more alkyl esters of C₆-C₁₆ carboxylic acid or mixtures thereof are one or more alkyl esters of C₈-C₁₄ carboxylic acids, such as C₈-C₁₀, C₈-C₁₂, C₁₀-C₁₂, C₁₀-C₁₄ or C₁₂-C₁₄ carboxylic acids. The composition claimed for use as a fuel/lamp fuel according to the present invention in one embodiment comprise comprises at least 40%, such as at least 45%, for example at least 50%, such as at least 55%, for example at least 60%, such as at least 65%, for example at least 70%, such as at least 75%, for example at least 80% such as at least 85%, for example at least 90%, such as at least 95%, for example at least 99% by weight of one or more alkyl esters of C₈-C₁₂ carboxylic acids, comprises at least 40%, such as at least 45%, for example at least 50%, such as at least 55%, for example at least 60%, such as at least 65%, for example at least 70%, such as at least 75%, for example at least 80% such as at least 85%, for example at least 90%, such as at least 95%, for example at least 99% by weight of one or more alkyl esters of C₈-C₁₀ carboxylic acids, comprises at least 40%, such as at least 45%, for example at least 50%, such as at least 55%, for example at least 60%, such as at least 65%, for example at least 70%, such as at least 75%, for example at least 80% such as at least 85%, for example at least 90%, such as at least 95%, for example at least 99% by weight of one or more alkyl esters of C₁₀-C₁₄ carboxylic acids, and/or comprises at least 40%, such as at least 45%, for example at least 50%, such as at least 55%, for example at least 60%, such as at least 65%, for example at least 70%, such as at least 75%, for example at least 80% such as at least 85%, for example at least 90%, such as at least 95%, for example at least 99% by weight of one or more alkyl esters of C₁₀-C₁₂ carboxylic acids.

In a preferred embodiment, the composition comprises at least 80%, such as at least 90% by weight of one or more alkyl esters of C₈-C₁₄ carboxylic acids, at least 70% by weight of one or more alkyl esters of C₈-C₁₂ carboxylic acids, at least 60% by weight of one or more alkyl esters of C₈-C₁₀ carboxylic acids, at least 70% by weight of one or more alkyl esters of C₁₀-C₁₄ carboxylic acids, and/or at least 40% by weight of one or more alkyl esters of C₁₀-C₁₂ carboxylic acids.
In another embodiment, the composition comprises less than 5%, such as less than 4%, for example less than 3%, such as less than 2%, for example less than 1%, such as 0% by weight of any alkyl ester of a C₆ or any lower chain order carboxylic acid and/or less than 5%%, such as less than 4%, for example less than 3%, such as less than 2%, for example less than 1%, such as 0% by weight of any alkyl ester of a C₁₈ or any higher chain order carboxylic acid. The term "C₆ or any lower chain order carboxylic acid" refers to C₆ aliphatic chains and any shorter chain, such as C₅, C₄, C₃, C₂, and/or C₁; and "C₁₈ or any higher chain order carboxylic acid" refers to any alkyl ester of a carboxylic acid comprising 18 or more carbon atoms, e.g. C₂₀, C₂₂, C₂₄, C₂₆, and/or C₂₈ carboxylic acids and so on.
In another embodiment, the composition comprises less than 5%, such as less than 4%, for example less than 3%, such as less than 2%, for example less than 1%, such as 0% by weight of any alkyl ester of a C₁₆ or any higher chain order carboxylic acid, and in a further embodiment, the composition comprises less than 5%, such as less than 4%, for example less than 3%, such as less than 2%, for example less than 1%, such as 0% by weight of any alkyl ester of a C₁₄ or any higher chain order carboxylic acid. In an even more specific embodiment, the composition claimed herein for use as a fuel, such as a lamp fuel, comprises less than 5%, such as less than 4%, for example less than 3%, such as less than 2%, for example less than 1%, such as 0% by weight of any alkyl ester of a C₁₂ or any higher chain order carboxylic acid. Thus, in one embodiment, the present invention relates to the use of a composition comprising at least 60%, such as at least 70%, for example at least 75% at least 80%, such as at least 90%, for example at least 95% by weight of one or more alkyl esters of a C₈-C₁₀ carboxylic acid or mixtures thereof as a lamp fuel. Alternatively, the composition comprises at least 60%, such as at least 70%, for example at least 75% at least 80%, such as at least 90%, for example at least 95% by weight of one or more alkyl esters of a C₈-C₁₂ carboxylic acid or mixtures thereof, or at least 60%, such as at least 70%, for example at least 75% at least 80%, such as at least 90%, for example at least 95% by weight of one or more alkyl esters of a C₁₀-C₁₂ carboxylic acid or mixtures thereof

In one embodiment, the composition claimed for use according to the present invention comprises one or more alkyl esters of C₈-C₁₀, C₈-C₁₂, C₁₀-C₁₂, C₁₀-C₁₄ or C₁₂-C₁₄ carboxylic acids, such as by weight 10-100%, such as 10-20%, 20-30%, 30-40%, 40-50%, 50-60%, 60-70%, 70-80%, 80-90%, or 90-100%, C₈ alkyl esters, and/or by weight 10-100%, such as 10-20%, 20-30%, 30-40%, 40-50%, 50-60%, 60-70%, 70-80%, 80-90%, or 90-100%, and/or by weight 10-100%, such as 10-20%, 20-30%, 30-40%, 40-50%, 50-60%, 60-70%, 70-80%, 80-90%, or 90-100%, C₁₀ alkyl esters, and/or by weight 0-100%, such as 0-10%, 10-20%, 20-30%, 30-40%, 40-50%, 50-60%, 60-70%, 70-80%, 80-90%, or 90-100%, C₁₂ alkyl esters, and/or by weight 0-100%, such as 0-10%, 10-20%, 20-30%, 30-40%, 40-50%, 50-60%, 60-70%, 70-80%, 80-90%, or 90-100%, C₁₄ alkyl esters. In a preferred embodiment, the composition claimed for use according to the present invention comprises by weight 10-80% C₈ alkyl esters, 10-80% C₁₀ alkyl esters, 10-70% C₁₂ alkyl esters, and/or 0-40% C₁₄ alkyl esters, or the composition for example comprises by weight 35-45% C₈ alkyl esters, 25-35% C₁₀ alkyl esters, 15-25% C₁₂ alkyl esters, and/or 5-15% C₁₄ alkyl esters, or for example by weight 15-25% C₈ alkyl esters, 10-20% C₁₀ alkyl esters, 45-55% C₁₂ alkyl esters, and/or 15-25% C₁₄ alkyl esters. The alkyl ester is preferably methyl and/or ethyl ester.

In a preferred embodiment, the composition claimed for use as a fuel, such as a lamp fuel according to the present invention comprises one or more alkyl esters of C₈-C₁₄, C₈-C₁₂, C₈-C₁₀, or C₁₀-C₁₂ carboxylic acids, wherein the alkyl ester is preferably ethyl or methyl ester. The composition comprises by weight 10-100%, such as 10-20%, 20-30%, 30-40%, 40-50%, 50-60%, 60-70%, 70-80%, 80-90%, or 90-100%, of one or more C₈-C₁₄ alkyl esters, and/or by weight 10-100%, such as 10-20%, 20-30%, 30-40%, 40-50%, 50-60%, 60-70%, 70-80%, 80-90%, or 90-100% of one or more C₈-C₁₂ alkyl esters, and/or by weight 10-100%, such as 10-20%, 20-30%, 30-40%, 40-50%, 50-60%, 60-70%, 70-80%, 80-90%, or 90-100%, of one or more C₈-C₁₀ alkyl esters. The alkyl ester is preferably methyl and/or ethyl ester.

The composition in another example comprise by weight 0-100%, such as 0-10%, 10-20%, 20-30%, 30-40%, 40-50%, 50-60%, 60-70%, 70-80%, 80-90%, or 90-100%, C₈ alkyl esters, and/or by weight 0-100%, such as 0-10%, 10-20%, 20-30%, 30-40%, 40-50%, 50-60%, 60-70%, 70-80%, 80-90%, or 90-100%, C₁₀ alkyl esters, and/or by weight 0-100%, such as 0-10%, 10-20%, 20-30%, 30-40%, 40-50%, 50-60%, 60-70%, 70-80%, 80-90%, or 90-100%, C₁₂ alkyl esters, and/or by weight 0-100%, such as 0-10%, 10-20%, 20-30%, 30-40%, 40-50%, 50-60%, 60-70%, 70-80%, 80-90%, or 90-100%, C₁₄ alkyl esters. The alkyl ester is preferably methyl and/or ethyl ester.

In a preferred embodiment, the composition claimed for use according to the present invention comprises by weight 10-80% C₈ alkyl esters, 10-80% C₁₀ alkyl esters, 10-70% C₁₂ alkyl esters, and/or 0-40% C₁₄ alkyl esters, or the composition for example comprises by weight 35-45% C₈ alkyl esters, 25-35% C₁₀ alkyl esters, 15-25% C₁₂ alkyl esters, and/or 5-15% C₁₄ alkyl esters, or for example by weight 15-25% C₈ alkyl esters, 10-20% C₁₀ alkyl esters, 45-55% C₁₂ alkyl esters, and/or 15-25% C₁₄ alkyl esters.

The aliphatic chains of the alkyl esters of the present invention are preferably saturated, and for example, at least 30%, such as at least 40%, at least 50%, at least such as at least 60%, at least 70%, such as at least 80%, such as at least 90%, such as at least 95% of the alkyl esters are fully saturated. It is appreciated by those of skill in the art, that the length of the alkyl esters and the extent of saturation of the alkyl esters affects important features of a fuel such as a lamp fuel, for example melting point, viscosity, soot emission, and flash point. Therefore, the length of the alkyl esters, and the extent of saturation which results in a composition suitable as a lamp oil will be appreciated by those of skill in the art, based on the teachings provided herein in respect of viscosity, melting point, temperature range of liquid state, soot emission and flash point.

In particular, the present invention does not relate to the use of fatty acid derivatives with a solidification point below 0°C, an iodine value below 20 and a surface tension of more than 25 mN/m as lamp oils. Thus, the present invention relates in one embodiment relates to the use of a composition comprising a base formulation of one or more alkyl esters of a C₆-C₁₆ carboxylic acid or mixtures thereof as a lamp fuel, provided that the composition is not fatty acid derivatives with a solidification point below 0°C, an iodine value below 20 and a surface tension of more than 25 mN/m, or does not comprise fatty acid derivatives with a solidification point below 0°C, an iodine value below 20 and a surface tension of more than 25 mN/m.

The alkyl esters of the used composition are in one embodiment selected from the group consisting of methyl ester, ethyl ester, propyl ester, butyl ester and mixtures thereof, such as selected from the group consisting of methyl ester, ethyl ester, and mixtures thereof, preferably the alkyl ester is a methyl ester, and the alkyl ester is preferably methyl octanate, methyl decanoate, methyl dodecanoate, methyl tetradecanoate and/or mixtures thereof. Alternatively, the alkyl ester is an ethyl ester, and the alkyl ester is preferably ethyl octanate, ethyl decanoate, ethyl dodecanoate, ethyl tetradecanoate and/or mixtures thereof.

In a one embodiment of the composition of the present invention, the one or more alkyl ester is an alkyl ester of a C₆ and/or C₈ carboxylic acid, such as an alkyl hexate (caproate (C₆)) and/or an alkyl octanate (caprylate (C₈)).

The base formulation of the composition of the present invention consists substantially of preferably of an alkyl ester of the present invention, such that the base formulation consists essentially of 100 % alkyl ester of the present invention. However, the base formulation may comprise small amounts of residuals from the purification of the alkyl esters or carboxylic acids from the vegetable oil, for example smaller amounts of glycerol derived from the vegetable oil from which the carboxylic acid or alkyl/methyl esters have been isolated. However, the base formulation comprises one or more alkyl esters, and thus, the base formulation may comprise from 0-100 % of any of the alkyl esters disclosed herein.

In a specific embodiment, the base formulation comprises between 0-100 % by weight alkyl hexate (caproate (C6)), such as between 10-100 %, for example between 20-90 %, for example between 30-80 %, for example between 40-80 %, for example between 50-70 %, for example between 55-65 %, such as approximately 60 % by weight of an alkyl hexate (also called caproate (C6)), preferably methyl and/or ethyl hexate. That base formulation comprising said indicated relative amount of alkyl hexate, in one embodiment, further comprise an alkyl ester of another carboxylic acid, such as a C8 or higher carboxylic acid, including alkyl octanate, for example between 10-80 %, 20-70%, 20-60%, 30-50 %, 35-45 %, such as approximately 40 % of said alkyl ester of a C8 or higher carboxylic acid, such as alkyl octanate, preferably methyl and/or ethyl octanate.

In a preferred embodiment, the base formulation comprises between 0-100 % by weight alkyl hexate (C6) and between 0-100 % by weight alkyl octanate (C8), such as between 50-100 % by weight of said alkyl hexate ((C6) and between 0-50 % by weight of said alkyl octanate (C8), preferably between 50-70 weight of said alkyl hexate (C6) and between 30-50 % by weight of said alkyl octanate (C8), for example 60 % by weight of said alkyl hexate (C6) and 40 % by weight of said alkyl octanate (C8), wherein said alkyl ester preferably is methyl and/or ethyl hexate and/or octanate, respectively, however, see below.

The term "alkyl", as used herein, unless otherwise specified, refers to a saturated straight, branched, or cyclic hydrocarbon having 1 to 6 carbon atoms, and includes for example methyl, ethyl, propyl, isopropyl, butyl, isobutyl, t-butyl, pentyl. cyclopentyl, isopentyl, neopentyl, hexyl, isohexyl, cyclohexyl, 3-methylpentyl, 2,2-dimethylbutyl, and 2,3-dimethylbutyl. Thus, the alkyl group of the carboxylic esters of the present invention comprise any alkyl group, but preferably an alkyl group comprising 6 or less carbon atoms; i.e. methyl, ethyl, propyl, buthanyl, pentanyl and/or hexanyl. Thus, the esters of the base formulation disclosed herein are selected from the group consisting of methyl ester, ethyl ester, propyl ester, buthanyl ester, pentanyl ester, and/or hexanyl ester. In a preferred embodiment, the alkyl group is selected from the group consisting of methyl, ethyl, propyl, butyl, and mixtures thereof, and most preferred the alkyl group is selected from the group consisting of methyl, ethyl and mixtures thereof.

In one embodiment, the alkyl esters of the composition claimed for use according to the present invention is methyl ester, and thus, in one embodiment, the composition claimed for use as a fuel, such as a lamp fuel, comprises one or more methyl esters of C₈-C₁₀, C₈-C₁₂, C₁₀-C₁₂, C₁₀-C₁₄ or C₁₂-C₁₄ carboxylic acids, such as by weight 10-100%, such as 10-20%, 20-30%, 30-40%, 40-50%, 50-60%, 60-70%, 70-80%, 80-90%, or 90-100%, C₈ methyl esters, and/or by weight 10-100%, such as 10-20%, 20-30%, 30-40%, 40-50%, 50-60%, 60-70%, 70-80%, 80-90%, or 90-100%, and/or by weight 10-100%, such as 10-20%, 20-30%, 30-40%, 40-50%, 50-60%, 60-70%, 70-80%, 80-90%, or 90-100%, C₁₀ methyl esters, and/or by weight 0-100%, such as 0-10%, 10-20%, 20-30%, 30-40%, 40-50%, 50-60%, 60-70%, 70-80%, 80-90%, or 90-100%, C₁₂ methyl esters, and/or by weight 0-100%, such as 0-10%, 10-20%, 20-30%, 30-40%, 40-50%, 50-60%, 60-70%, 70-80%, 80-90%, or 90-100%, C₁₄ methyl esters. In a preferred embodiment, the composition claimed for use according to the present invention comprises by weight 10-80% C₈ methyl esters, 10-80% C₁₀ methyl esters, 10-70% C₁₂ methyl esters, and/or 0-40% C₁₄ methyl esters, or the composition for example comprises by weight 35-45% C₈ methyl esters, 25-35% C₁₀ methyl esters, 15-25% C₁₂ methyl esters, and/or 5-15% C₁₄ methyl esters, or for example by weight 15-25% C₈ methyl esters, 10-20% C₁₀ methyl esters, 45-55% C₁₂ methyl esters, and/or 15-25% C₁₄ methyl esters.

In another embodiment, the alkyl esters of the composition claimed for use according to the present invention is ethyl ester, and thus, in one embodiment, the composition claimed for use as a fuel, such as a lamp fuel, comprises one or more ethyl esters of C₈-C₁₀, C₈-C₁₂, C₁₀-C₁₂, C₁₀-C₁₄ or C₁₂-C₁₄ carboxylic acids, such as by weight 10-100%, such as 10-20%, 20-30%, 30-40%, 40-50%, 50-60%, 60-70%, 70-80%, 80-90%, or 90-100%, C₈ ethyl esters, and/or by weight 10-100%, such as 10-20%, 20-30%, 30-40%, 40-50%, 50-60%, 60-70%, 70-80%, 80-90%, or 90-100%, and/or by weight 10-100%, such as 10-20%, 20-30%, 30-40%, 40-50%, 50-60%, 60-70%, 70-80%, 80-90%, or 90-100%, C₁₀ ethyl esters, and/or by weight 0-100%, such as 0-10%, 10-20%, 20-30%, 30-40%, 40-50%, 50-60%, 60-70%, 70-80%, 80-90%, or 90-100%, C₁₂ ethyl esters, and/or by weight 0-100%, such as 0-10%, 10-20%, 20-30%, 30-40%, 40-50%, 50-60%, 60-70%, 70-80%, 80-90%, or 90-100%, C₁₄ ethyl esters. In a preferred embodiment, the composition claimed for use according to the present invention comprises by weight 10-80% C₈ ethyl esters, 10-80% C₁₀ ethyl esters, 10-70% C₁₂ ethyl esters, and/or 0-40% C₁₄ ethyl esters, or the composition for example comprises by weight 35-45% C₈ ethyl esters, 25-35% C₁₀ ethyl esters, 15-25% C₁₂ ethyl esters, and/or 5-15% C₁₄ ethyl esters, or for example by weight 15-25% C₈ ethyl esters, 10-20% C₁₀ ethyl esters, 45-55% C₁₂ ethyl esters, and/or 15-25% C₁₄ ethyl esters.

In one embodiment of the composition of the present invention, the base formulation comprises methyl hexate (C6) and/or methyl octanate (C8). For example, the base formulation comprises between 0-100 % by weight of said methyl hexate and/or between 10-100 % by weight of said methyl octanate, such as between 50-100 % by weight of said methyl hexate and between 0-50 % by weight of said methyl octanate. In one embodiment, the base formulation comprises 100 % by weight methyl hexate. In another embodiment, the base formulation comprises 60-80 % by weight methyl hexate and 20-40 % by weight methyl octanate, such as 70 % and 30 %, respectively. In another embodiment, the base formulation comprises 50-70 % by weight methyl hexate and 30-50 % by weight methyl octanate, such as 60 % and 40 %, respectively. In another embodiment, the base formulation comprises 50 % by weight methyl hexate and 50 % by weight methyl octanate.

In addition to the base formulation of the present invention as defined herein, in certain embodiment, a composition of the present invention further comprise at least one additional ingredient. In a preferred embodiment, the composition further comprises at least one alcohol. The alcohol is selected from any alcohol, including alcohols mentioned herein above for use in esterification. In a preferred embodiment, the alcohol comprises 1 to six carbon atoms. Thus, the at least one alcohol is preferably selected from the group consisting of methanol, ethanol, propanol, butanol, pentanol, and hexanol. In another embodiment, the alcohol is selected from the group consisting of methanol, ethanol, propanol, and butanol. The alcohol is preferably butanol.

The alcohol serves in one aspect to conserve the composition; however, addition of alcohol lowers the flash point and may also affect the viscosity of the composition. Thus, the amount of alcohol in the composition should be adjusted to comply with the requirements to the composition of the present invention with respect to flash point and/or viscosity.

The composition may comprise any amount of alcohol; the amount of alcohol in the composition depends on the specific composition, and may be determined by the skilled practitioner. In one embodiment, the composition comprises up to 40% alcohol, such as less than 30 %, for example less than 20 %, such as less than 10 %, for example less than 9, 8, 7, 6, 5, 4, 3 %, such as less than 2 %, such as less than 1 %, for example less than 0.5 % by weight alcohol. In one embodiment, the composition comprises between 0.5 and 10 % by weight alcohol, such as between 0.5 and 5 % by weight alcohol, such as between 0.5 and 2 % by weight alcohol as defined above, such as methanol, ethanol, propanol, and/or butanol, preferably butanol.

Thus, the composition of the present invention comprise in one embodiment between 80-100 % by weight of a base formulation as disclosed herein and between 0-20 % by weight of an alcohol, such as between 90-100 % and 0-10 %, for example 95-100 % and 0-5 %, for example 95-98 % and 2-5 %, or 98-100 and 0-2 %, respectively, wherein said alcohol is as defined above, such as methanol, ethanol, propanol, and/or butanol, preferably butanol. In a preferred embodiment, the base formulation comprises 99 % by weight of said base formulation and 1 % by weight alcohol; or 99.5 base formulation and 0.5 % alcohol, respectively, wherein said alcohol is as defined above, such as methanol, ethanol, propanol, and/or butanol, preferably butanol.

Specific embodiments of the present invention include compositions as defined herein, comprising 66.5 % by weight methyl hexate, 28.5 % by weight methyl octanate and 5% butanol.
In one embodiment compositions of the present invention comprises 1-5 % butanol and 95-99 % by weight of a base formulation of approximately 70% by weight methyl hexate and/or approximately 30 % by weight methyl octanate, for example approximately 5 % butanol and approximately 95 % of said base formulation.

Other embodiment include compositions as defined herein, comprising 57 % by weight methyl hexate, 38 % by weight methyl octanate and/or 5% butanol, as well as compositions comprising 47.5 % by weight methyl hexate, 47.5 % by weight methyl octanate and/or 5% butanol, and compositions comprising 45 % by weight methyl hexate, 45 % by weight methyl octanate and/or 10% butanol.
Other embodiment include compositions as defined herein, comprising 1-5% butanol and 95-99 % by weight of a base formulation comprising approximately 60 % by weight methyl hexate and/or approximately 30 % by weight methyl octanate, for example approximately 5 % butanol and approximately 95 % of said base formulation.

Other composition of the present invention comprise 1-10% butanol and 90-99 % by weight of a base formulation comprising approximately 50 % by weight methyl hexate and/or approximately 50 % by weight methyl octanate, for example approximately 5 or 10 % butanol and approximately 90 % or 95% of said base formulation, respectively.

### Vegetable oil

In one aspect, the present invention relates to a method for producing a fuel composition comprising the steps of: a. providing a vegetable oil, b. preparing alkyl esters of carboxylic acids comprised in said vegetable oil by esterification and/or transesterification, and c. optionally isolating one or more of said alkyl esters of said carboxylic acids, wherein said alkyl esters of carboxylic acids comprised in said vegetable oil and/or said one or more isolated alkyl esters constitute said fuel composition.

In another aspect, the present invention relates to a fuel composition comprising a. a base formulation of one or more alkyl esters of a carboxylic acid, such as a C₂-C₁₈ or mixtures thereof, or preferably a C₂-C₁₂ carboxylic acid or mixtures thereof, and/or b. one or more alkyl esters of a vegetable oil, such as a refined/bleached/extensively bleached vegetable oil. In a preferred embodiment, the alkyl esters of the present invention are prepared from carboxylic acids of a vegetable oil. The alkyl esters may be produced from crude vegetable oil and form part of a composition of the present invention, or specific alkyl esters or ranges of alkyl esters may be isolated by distillation, fractionation or other purification methods. Alternatively, carboxylic acids or specific ranges of carboxylic acids are purified/isolated from the vegetable oil and used for preparation of alkyl esters of the present invention. Thus, in one embodiment of the compositions of the present invention, the one or more carboxylic acid or one or more alkyl ester of a carboxylic acid is/are extracted from a vegetable oil.

The vegetable oil of the present invention may be provided as a waste vegetable oil or a pure vegetable oil. The use of waste vegetable oil may be economically beneficial when producing large amounts of refined oil. Enormous amounts of waste vegetable oil are produced annually, mainly from industrial deep fryers in potato processing plants, snack food factories and fast food restaurants. This waste product may be recycled for use in production of compositions of the present invention. Pure vegetable oil (pure plant oil (PPO) or Straight Vegetable Oil (SVO)), in contrast to waste vegetable oil, is not a by-product of other industries, and thus its prospects for use as fuel are not limited by the capacities of other industries. Important considerations when selecting a suitable vegetable oil for use in the present invention includes its suitability as a fuel, based on flash point, energy content, viscosity, combustion products and other factors, as well as the cost, based in part on yield, effort required to grow and harvest, and post-harvest processing cost.

The most common commercially used oil crops are particularly preferred. Thus, in one embodiment, the vegetable oil of the present invention, for example the vegetable oil provided in a method of the present invention, is selected from the group consisting of coconut, corn, cottonseed, olive, palm, peanut, rape, rapeseed, safflower, sesame, soybean, jatropha and sunflower oils. In a preferred embodiment, the vegetable oil is rape oil, rapeseed oil, soybean oil, jatropha or sunflower oil.

In another embodiment, the vegetable oil is a nut oil, such as oil extracted from almond, cashew, hazelnut, macadamia, mongongo, pecan, pine, pistachio, and walnut. In yet another embodiment, the vegetable oil of the present invention is extracted from Castor, Coconut, Corn, Cottonseed, False, Hemp, Mustard, Palm, Peanut, Radish, Rapeseed, Ramtil, Rice, Safflower, Salicornia, Soybean, Sunflower, and/or Tung.

In yet another embodiment, the vegetable oil provided in the method of the present invention is in one embodiment selected from the group consisting of coconut, corn, cottonseed, olive, palm, peanut, rape, rapeseed, canola, safflower, sesame, soybean, jatropha and/or sunflower oils; for example, the vegetable oil is selected from the group consisting of sunflower oil, olive oil, rape oil soy bean oil and jatropha oil. In a preferred embodiment, the vegetable oil is a rapeseed oil, and in an even more preferred embodiment, the vegetable oil is palm tree oil or palm kernel oil.

In yet another embodiment, the vegetable oil of the present invention extracted from algae, which can be grown using waste materials such as sewage and without displacing land currently used for food production. Oil from halophytes such as salicornia bigelovii, may also be used as a source for a vegetable oil of the present invention, and can be grown using saltwater in coastal areas, where conventional crops cannot be grown, with yields equal to the yields of soybeans and other oilseeds grown using freshwater irrigation.

### Refined vegetable oil

The compositions of the present invention in one aspect comprise a vegetable oil, which is refined. In the method of the present invention for producing a fuel composition, one or more of said alkyl esters of said carboxylic acids are isolated. The term "isolation" as used in the context of the method of the present invention for producing a fuel composition, refers to the extraction of one or more alkyl esters from other alkyl esters, for example extracting alkyl esters of C₆-C₁₆ carboxylic acids, such as C₈-C₁₄ carboxylic acids, from higher and/or lower chain length alkyl (methyl or ethyl) esters. Isolation is not meant to indicate that the relevant alkyl esters have been 100% purified or completely isolated from other compounds, molecules or alkyl ester. Isolation of alkyl esters of a specific length (C₆-C₁₆) is meant to describe that the relative concentration of the isolated alkyl esters have been increased, such that the composition for example comprises at least 50%, such as at least 60%, 70%, 80%, or 90% of an alkyl ester of a C₆-C₁₆ carboxylic acid.

The isolation according to the method of the invention of the one or more alkyl esters of a carboxylic acid is for example obtained by fractionation and/or distillation. Any other method available to those of skill in the art may also be used for fractionating or isolating the alkyl esters prepared according to the method of the present invention.

In the method of the invention, the vegetable oil and/or the prepared alkyl esters may be further refined. Several methods for refining a fuel composition or alkyl ester composition are available, including desliming/delicithination, fractionation, distillation, charcoal adsorption and/or bleaching. In one embodiment, the vegetable oil and/or alkyl esters are refined by of extensive bleaching of the fuel composition, for example the extensive bleaching comprising the steps of a) heating the vegetable oil to 220-300 degrees Celsius, b) adding 1 -10 % bleaching clay, c) stirring optionally under vacuum in at least 15 minutes, and d) separation of the bleaching clay and refined vegetable oil by filtration.

The vegetable oil is for example refined and used as a biological non-petrol-based fuel, suitable for example for use as a lamp fuel. Refined vegetable oil may be used for production of biodiesel. The term biodiesel as used herein refers to a non-petroleumbased diesel fuel consisting of long chain alkyl (e.g. ethyl, methyl, or propyl) esters, made by transesterification of vegetable oil, which can be used for a wide range of applications.

Thus, the vegetable oil of the present invention is in one embodiment a refined vegetable oil, wherein certain components are removed or isolated from the crude oil. The oil may be refined by any method conventionally used. For example, a refined vegetable oil of the present invention is refined by one or more methods selected from the group consisting of desliming/delicithination, bleaching, and/or isolation of carboxylic acids by fractionation or distillation. In particular, specific carboxylic acids and/or alkyl ester, preferably methyl esters, of specific carboxylic acids may be isolated by fractionation and/or distillation.

Moreover, the composition of the present invention is in one embodiment a fuel composition based on refined vegetable oil and a fuel supporter. A refinement of vegetable oil may comprise hydrolyzing triacylglycerol and separating a carboxylic acid fraction from a glycerol fraction, distillation or fractionation for isolation of specific carboxylic acids or alkyl esters, bleaching or extensive bleaching of the oil, deliming/delicithination, as well as other methods conventionally applied for refinement of oils including vegetable oils. The vegetable oil is preferably bleached, and more preferably extensively bleached/double bleached, cf. below and example 6.

In one embodiment, the vegetable oil is distilled, and/or the fatty acids/carboxylic acid of the vegetable oil are isolated by distillation, such that fuel composition can be prepared which primarily contains fatty acids/carboxylic acids and derivatives thereof, such as specific carboxylic acids or alkyl ester thereof, such as methyl esters, ethyl esters, propyl esters or butyl esters of specific carboxylic acid, wherein the carbon chain of the fatty acid consists of for example 4 (C4), 5 (C5), 6 (C6), 7 (C7), 8 (C8), 9 (C9), 10 (C10) carbon atoms.

The vegetable oil has optionally been delecithined (deslimed/degummed), i.e. the lecithin has been removed from the crude oil. This may be accomplished by bleaching or degumming with clay. The vegetable oil for use in a fuel composition of the present invention, degumming may be performed at a considerably higher temperature than normal, thereby removing a larger proportion of colorants from the oil. A lamp oil or fuel composition of the present invention prepared from a vegetable oil, which has been degummed at increased temperature, has a lower viscosity and reduced amounts of slag on the wick when burning.

Thus, in one embodiment, the invention relates to a composition, which comprises a refined vegetable oil. Vegetable oils of the present invention include all vegetable oils that are extractable from plants. Vegetable oils may be removed from the plant by any conventional method known to those of skill within the art. In one method, the oil may be extracted from the plant by placing the relevant part of the plant under pressure, thereby producing an expressed oil. Oils may also be extracted from plants by dissolving parts of plants in water or another solvent. The solution may be separated from the plant material and concentrated, thus providing an extracted or leached oil. Moreover, the mixture may be separated by distilling the oil away from the plant material. Oils extracted by this latter method are called essential oils. Essential oils often have different properties and uses than pressed or leached vegetable oils. Macerated oils are made by infusing parts of plants in a base oil. The vegetable oil of the present invention may be extracted from any plant.

In one embodiment, the composition of the present invention further comprises a refined vegetable oil and/or a refined transesterified or esterified vegetable oil. For example, the vegetable oil and/or refined transesterified or esterified vegetable oil has been refined by isolation of carboxylic acids, desliming/delicithination, fractionation, distlliation, and/or bleaching. The present invention also relates to a method for producing a fuel composition, wherein a vegetable oil and/or alkyl esters is/are refined by extensive bleaching. Preferably refinement comprises extensive bleaching/double bleaching. In one embodiment said double bleaching/extensive bleaching comprises the steps of
a. heating the vegetable oil to 220-300 degrees Celsius,
b. adding 1 -10 % bleaching clay,
c. stirring optionally under vacuum in at least 15 minutes, and
d. separation of the bleaching clay and refined vegetable oil by filtration.

In one embodiment, the composition of the present invention comprises between 0-100 % by weight of said refined vegetable oil and/or a refined transesterified or esterified vegetable oil. In another embodiment, the composition comprises between 50 and 70 % by weight of a base formulation as described herein and between 30 and 50% by weight of said one or more refined vegetable oil and/or a refined transesterified or esterified vegetable oil. In a preferred embodiment, the refined vegetable oil and/or a refined transesterified or esterified vegetable oil is based on a rapeseed oil, and in a more preferred embodiment, the rapeseed oil based vegetable oil and/or transesterified or esterified vegetable oil is extensively bleached.

In a preferred embodiment, the composition of the present invention comprises a refined vegetable oil and/or a refined transesterified or esterified vegetable oil, wherein said vegetable oil has been refined by bleaching, and in a preferred embodiment, the oil has been refined by extensive bleaching/double bleaching. Extensive bleaching comprises heating the vegetable oil to higher temperatures than employed in conventional bleaching procedures.
In one such embodiment, the vegetable oil and/or alkyl esters prepared by a method of the invention has been refined by extensive bleaching comprising the steps of heating the vegetable oil to more than 100 degrees Celsius, such as more than 150, such as between 150-200 degrees Celsius, between 180-220 degrees Celsius, between 200-230 degrees Celsius, between 220-280 degrees Celsius, or between 250-300 degrees Celsius.
Another embodiment comprises the further step of adding between 0-20% bleaching clay, such as between 1 -10 % bleaching clay.
The mixture of vegetable oil and bleaching clay is optionally stirred, preferably under vacuum; and the mixtures should be stirred/mixed at least 15 minutes, before separation of the bleaching clay and refined vegetable oil for example by filtration.

In a specific embodiment, the vegetable oil and/or alkyl esters has been refined by extensive bleaching comprising the steps of
a. heating the vegetable oil to 220-300 degrees Celsius, preferably between 250-270, such as 255-265 degrees Celsius,
b. adding 1 -10 % bleaching clay, such as preferably 2-3 % bleaching clay,
c. stirring, optionally under vacuum, in at least 15 minutes, such as between 20-40 minutes, and
d. separation of the bleaching clay and refined vegetable oil by filtration.

Specifically, alkyl ester such as methyl and/or ethyl esters of a carboxylic acid of a vegetable oil may be prepared before or after bleaching or double bleaching/extensive bleaching of the oil. For example, the composition of the present invention comprises in one embodiment an alkyl ester, such as a methyl and/or ethyl ester of a vegetable oil, such as a refined vegetable oil, in particular a deslimed and/or an extensively bleached vegetable oil. In a preferred embodiment, the vegetable oil is rapeseed oil or palm oil.

The composition of the present invention in one embodiment comprises between 0-100 % by weight of said one or more alkyl esters of a refined, deslimed and/or extensively/double bleached vegetable oil. The composition preferably comprises between 50 and 70 % by weight of a base formulation as disclosed herein above and between 30 and 50% by weight of said one or more alkyl esters of a vegetable oil or a refined vegetable oil, such as between 55 and 65 % by weight of a base formulation as disclosed herein above and between 35 and 45% by weight of said one or more alkyl esters of a vegetable oil or a refined vegetable oil, such as between 59 and 61 % by weight of a base formulation as disclosed herein above and between 39 and 41% by weight of said one or more alkyl esters of a vegetable oil or a refined vegetable oil, for example 60 % and 40 %, respectively. In a preferred embodiment, the one or more alkyl esters of a vegetable oil or a refined vegetable oil are alkyl esters of a rapeseed oil, and the alkyl esters are preferably methyl esters of an extensively bleached rapeseed oil.

The vegetable oil is selected from any suitable vegetable oil as described herein above, and is for example selected from the group consisting of coconut, corn, cottonseed, olive, palm, peanut, rape, rapeseed, canola, safflower, sesame, soybean, jatropha and/or sunflower oils, preferably rapeseed oil.

Hydrolysed vegetable oil comprises the carboxylic acids of the triacylglycerols of a vegetable oil, and a glycerol fraction has typically been removed from the hydrolyzed oil. In one embodiment, the vegetable oil is refined by hydrolyzing the triacylglocerol of the oil, such that a glycerol fraction may be removed from a fatty acid/carboxylic acid fraction of the vegetable oil, thereby decreasing the glycerol concentration of the refined vegetable oil, or isolating carboxylic acids of the vegetable oil. In one embodiment, the vegetable oil of the present invention is refined by alkaline hydrolysis, wherein a base is supplied to the vegetable oil as a source of hydroxide ions. Thus, in one embodiment of the compositions of the present invention, the vegetable oil is refined by removing a glycerol fraction of said vegetable oil by alkaline hydrolysis. The alkaline hydrolysis is for example performed by addition of hydroxide ions, for example in the form of potassium hydroxide (KOH) or sodium hydroxide (NaOH). An alcohol, such as ethanol, methanol, propanol or butanol us further added, and a fatty acid fraction in then separated from a glycerol fraction of the vegetable oil. The refined vegetable oil comprises a fatty acid fraction of said vegetable oil. The refined vegetable oil may be devoid of glycerol, or may comprise residual amounts of glycerol from the vegetable oil, for example in the range of 0-40% glycerol. The final concentration of glycerol in the compositions of the present invention, i.e. when the refined vegetable oil is mixed with at least one fuel supporter and/or alcohol is described herein below.

The refined esterified vegetable oil is also sometimes referred to as a biodiesel, which generally refers to a fuel, comparable to petrodiesel, that is produced, not from a fossil fuel, but from a renewable fuel such as rapeseed, soy, jatropha or other virgin biomass, for example any of the vegetable oils mentioned herein above. Pure biodiesel consists of fatty acid methyl esters (FAME), from the isomers of glycerides up to C24. Depending on the feedstock, the distribution tends to be around C16 (Palmitic), Oleic (C18:1), Linoleic (C18:2), and others. The FAME content can be determined by Gas Chromatography using the European Norm 14103 methodology or similar ASTM method.

Biodiesel and/or alkyl esters of the present invention are commonly produced by the esterification/transesterification of the vegetable oil. There are several methods for carrying out this esterification/transesterification reaction including the common batch process, supercritical processes, ultrasonic methods, and even microwave methods. Biodiesel is a fatty acid/carboxylic acid alkyl ester, where the ester is not a glycerol ester, but rather, an ester formed with a monohydroxy alcohol. Examples of alcohols used to prepare biodiesel/alkyl ester fuel composition of the present invention are described elsewhere herein, and include methanol, ethanol, and mixtures thereof, although virtually any C₁₋₁₀ alcohol can be used. The biodiesel and alkyl esters of the present invention are typically formed by transesterification of a triglyceride with an alcohol, although it can also be formed by esterification of a free fatty acid.
Any source of triglycerides can be used to prepare a biodiesel fuel or an alkyl ester of the present invention, as long as the source provides the fuel composition with acceptable properties (that is, which functions as a fuel as disclosed herein). Preferred sources of triglycerides for use in practicing the present invention include, but are not limited to, vegetable oils and fats, as well as animal oils and fats. Examples of suitable vegetable oils include, but are not limited to, crude or refined soybean, corn, coconut (including copra), palm, rapeseed, cotton and oils. Examples of suitable animal fats include, but are not limited to, tallow, lard, butter, bacon grease and yellow grease. Naturally-occurring fats and oils are the preferred source of triglycerides because of their abundance and renewability. Oils with a higher boiling point are preferred over oils with a lower boiling point.

### Alcohol

Compositions of the present invention comprise in one embodiment at least one additional component, such as an alcohol and/or fuel supporter. The function of an alcohol or fuel supporter in the composition is to ensure the production of a stable flame when the composition is used for example as a lamp fuel composition and to ensure a low viscosity to ensure transportation in the wick. Moreover, the alcohol or fuel supporter may serve for conservation of the composition or lamp fuel. An alcohol or fuel of the present invention includes any suitable substance and include, for example, alcohol such as methanol, ethanol, propyl alcohol, isopropyl alcohol, butyl alcohol, isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; glycols such as propylene glycol, ethylene glycol, dipropylene glycol, glycerol, diethylene glycol, triethylene glycol, trimethylene glycol, hexylene glycol, butylene glycol, 1,3-butanediol, thiodiethylene glycol, ammonium thioglycolate, cefatrizine glycol, polypropylene glycol, propylene glycol alginate; dichloromethane; butyl acetate; acetone; acetonitrile; ethyl acetate; and the like as well as mixtures thereof. In a preferred embodiment, the fuel supporter or alcohol is ethanol, methanol, butanol, or mixtures thereof, however preferably butanol.

In another embodiment, the compositions claimed for use according to the present invention further comprises an alcohol, for example between 0.5 and 10 %, for example between 1 and 5% by weight alcohol. The alcohol is for example selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate. Preferably, the alcohol comprises one to six carbon atoms, and is for example selected from the group consisting of methanol, ethanol, propanol, butanol, pentanol, hexanol, and mixtures thereof, such as methanol, ethanol, propanol and/or butanol, for example the alcohol is ethanol, methanol and/or butanol.

### Fuel composition

The fuel composition of the present invention comprises in a specific embodiment a refined vegetable oil or alkyl/methyl ester of a refined/extensively bleached vegetable oil, and at least one fuel supporter. In another embodiment, the fuel composition comprises a. a base formulation of one or more alkyl esters of C₂-C₁₆ carboxylic acids, such as C₂-C₁₂ or C₆-C₁₆ or C₈-C₁₄ carboxylic acids or mixtures thereof, and/or b. one or more alkyl/methyl esters of a refined vegetable oil.

The components of the composition are mixed into a homogenous or nearly homogeneous mixture. The selection and mixing ratio of the components of the composition, including the relative amount specific alkyl/methyl esters, additional components, refined vegetable oil or alkyl/methyl ester of a refined/extensively bleached vegetable oil and fuel supporter/alcohol can be practiced and modified in any manner by skilled persons in the art based in the teachings of the present invention, specifically with respect to physical parameters of the composition of the present invention with respect to flash point, viscosity, flame point, soot emission, melting point/solidification point, temperature range of liquid state etc., and thus such practice and modification by the skilled persons come under the scope of the present invention. Specific embodiments of the present invention are provided elsewhere herein; e.g. cf. the examples below.

In one embodiment, the composition of the present invention comprises 60-99% by weight refined vegetable oil or alkyl/methyl ester of a refined/extensively bleached vegetable oil and 1-40% by weight fuel supporter, such as 80-98% by weight refined vegetable oil or alkyl/methyl ester of a refined/extensively bleached vegetable oil and 2-20% by weight fuel supporter, for example 85-98% by weight refined vegetable oil or alkyl/methyl ester of a refined/extensively bleached vegetable oil and 2-15% by weight fuel supporter, for example 85-95% by weight refined vegetable oil or alkyl/methyl ester of a refined/extensively bleached vegetable oil and 5-15% by weight fuel supporter, such as 90-95% by weight refined vegetable oil or alkyl/methyl ester of a refined/extensively bleached vegetable oil and 5-10% by weight fuel supporter. In a preferred embodiment, the composition of the present invention comprises 92.5% by weight refined vegetable oil or alkyl/methyl ester of a refined/extensively bleached vegetable oil and 7.5% by weight fuel supporter. Note that the refined vegetable oil or alkyl/methyl ester of a refined/extensively bleached vegetable oil may comprise a residual amount of glycerol, and that the composition therefore also may comprise a final concentration of glycerol in the area of 0-5% glycerol, preferably 0.5% glycerol provided in the refined vegetable oil or alkyl/methyl ester of a refined/extensively bleached vegetable oil.

In a specific embodiment of the fuel composition of the present invention, the final concentration of glycerol by weight is less than 5%, such as less than 4%, for example less than 3%, such as less than 2, for example less than 1%, such as less than 0.5%, such as 0%. In another embodiment, the final concentration of glycerol is between 0 and 1%, such as between 0.25 and 0.75% by weight. In a preferred embodiment, the final concentration of glycerol in a composition of the present invention is 0.5% by weight.

In other specific embodiments of the fuel composition of the present invention comprises 60-99% by weight refined vegetable oil or alkyl/methyl ester of a refined/extensively bleached vegetable oil and 1-40% by weight butanol, such as 80-98% by weight refined vegetable oil or alkyl/methyl ester of a refined/extensively bleached vegetable oil and 2-20% by weight butanol, for example 85-98% by weight refined vegetable oil or alkyl/methyl ester of a refined/extensively bleached vegetable oil and 2-15% by weight butanol, such as 85-95% by weight refined vegetable oil or alkyl/methyl ester of a refined/extensively bleached vegetable oil and 5-15% by weight butanol, for example 90-95% by weight refined vegetable oil or alkyl/methyl ester of a refined/extensively bleached vegetable oil and 5-10% by weight butanol, such as 92.5% by weight refined vegetable oil or alkyl/methyl ester of a refined/extensively bleached vegetable oil and 7.5% by weight butanol. In a preferred embodiment, the composition of the present invention comprises a final concentration by weight of 92% fatty acid, 0.5% glycerol and 7.5% butanol.
The refined vegetable oil or alkyl/methyl ester of a refined/extensively bleached vegetable oil is refined by methods disclosed herein above, and is preferably double bleached/extensively bleached.

### Melting point

The melting point is the temperature at which the solid and liquid phase exists in equilibrium. The melting point is a more precise measure of this equilibrium than the solidification point, as some substances are able to supercool. Therefore, the solidification point is a very poor and unclear measure of the precise temperature, at which the solid and liquid phase exists in equilibrium. Consequently, the melting point is used as a structural feature of specific embodiment of the compositions of the present invention. Thus, the compositions used and produced according to the present invention have a melting point and/or a freezing point below 0°C.

In particular, the composition is in a liquid state in any normal temperature range for the use of a fuel composition, in particular a lamp oil or lighter fluid composition. Thus, the composition is preferably in a liquid state in the temperature range from -30 to 300°C, or for example from -15 to 200 °C, or -10 to 100 °C. In particular, the compositions claimed for use as a fuel, such as a lamp fuel, has a melting point of less than 0°C; the melting point composition is for example below -5°C, such as below -10°C, for example between -15°C.

The melting point and range of liquid state is inter alia determined by the length of the alkyl ester chain, and the alkyl esters which are indicated according to the present invention, such as alkyl esters of C₆-C₁₆ carboxylic acids, wherein the alkyl esters are predominantly saturated are characterized by a melting temperature and liquid state temperature, which are optimal for the use of the compositions according to the present invention. For example, the aliphatic chains of the alkyl esters of the present invention are preferably saturated, and for example, at least 50%, such as 60%, at least 70%, such as 80%, at least 90%, such as 95% of the alkyl esters are fully saturated. The extent of saturation and chain length of the alkyl, such as methyl or ethyl, esters affects the melting point, viscosity, soot emission, flash point and other important features of a fuel composition, such as a lamp fuel.

### Soot emission

An important feature of a fuel composition is the soot emission. It is of course desirable that the soot emission of a lamp oil is kept to a minimum. Therefore, the soot index of a composition of the present invention is preferably below 100 Si/h, for example below 50 Si/h, such as below 40 Si/h, for example below 30 Si/h, such as below 20 Si/h, for example below 10 Si/h, such as below 5 Si/h, for example below 4 Si/h, such as below 3 Si/h, for example below 2 Si/h, such as below 1 Si/h, for example below 0.5 Si/h. The soot index of a composition claimed for use as a lamp oil according to the present invention is preferably in the range from 0.01 to 0.90 Si/h.

### Viscosity

The viscosity is an important factor for the use of a composition as a lamp fuel; i.e. the use of a lamp fuel composition/lamp oil, since the viscosity of the composition determines the distance that the composition can travel in a wick from the surface of the fuel composition to the top of the wick, where the combustion occurs. Thus, there is a direct correlation between the lamp fuel viscosity and capillary effect, and between lamp fuel viscosity and wick composition (such as wick diameter, structure and composition, e.g. cotton or synthetic fibre). A small wick diameter allows a lamp fuel with a relatively low viscosity to travel through the wick, whereas more viscous composition travel relatively poor in a small diameter wick.

In general, viscosity is a measure of the resistance of a fluid which is being deformed by either shear stress or extensional stress. In everyday terms (and for fluids only), viscosity is "thickness". Thus, water is "thin", having a lower viscosity, while honey is "thick" having a higher viscosity. Viscosity describes a fluid's internal resistance to flow and may be thought of as a measure of fluid friction. Viscosity can be indicated by a viscosity coefficient. For example, Dynamic viscosity (or absolute viscosity) determines the dynamics of an incompressible Newtonian fluid, and the Kinematic viscosity coefficient is the dynamic viscosity divided by the density for a Newtonian fluid. The cgs (centimetre-gram-second system) physical unit for dynamic viscosity is the poise (P), named after Jean Louis Marie Poiseuille. It is more commonly expressed, particularly in ASTM standards, as centipoise (cP). 1 P = 1 g·cm⁻¹·s⁻¹. Water at 20 °C has a viscosity of 1.0020 cP. The higher (and the cP value), the higher is the viscosity.

The cgs physical unit for kinematic viscosity is stokes (St), named after George Gabriel Stokes. It is sometimes expressed in terms of centistokes (cSt or ctsk).
1 cSt = 1 mm²·s⁻¹ = 10⁻⁶m²·s⁻¹. Water at 20 °C has a kinematic viscosity of about 1 cSt

Thus, an important characteristic of the fuel composition of the present invention is the viscosity. The viscosity of the composition allows for transport of the composition in a wick by capillary transport. A highly viscous fuel composition will not transfer by capillary force in a normal oil lamp wick, and thus fuel composition with a viscosity which is higher than about 10 cP, such as 15 cP, such as higher than about 20 cP are not suitable as lamp fuel/lamp oil. Typically, the viscosity increases with the size of the fatty acid derived alcohol in a composition, and thus, compositions comprising substantial amounts of alcohols, or methyl esters, ethyl esters, propyl esters or butyl esters of fatty acids, wherein the fatty acid comprise more than 12, or 14, and in particular 16 or more carbons is too high to allow efficient transport of the lamp fuel in a normal oil lamp wick.

Thus, the lamp fuel or fuel composition of the present invention preferably does not comprise substantial amounts of alcohols, or methyl esters, ethyl esters, propyl esters or butyl esters of fatty acids, wherein the fatty acid comprise more than 12 or 14 carbons. In particular, the composition for use as a lamp fuel preferably does not comprise substantial amounts of methyl esters, ethyl esters, propyl esters or butyl esters of C₁₆ or longer chain carboxylic acids.

Specifically, the composition for use as a lamp fuel, the lamp fuel or fuel composition of the present invention is not:
a lamp oil composition, comprising: a base formulation including by weight %: 40-60 methyl palmitate; 25-45 methyl stearate; and 10-20 myristyl alcohol; said composition further comprising an alcohol with less than six carbons, wherein the weight percentage of the composition of the alcohol with less than six carbons is between 5 and 15 and that of the base formulation is between 85 and 95.

The viscosity of a liquid depends on the temperature of the liquid. The relevant measure of viscosity of a composition of the present invention is the viscosity at the temperature, at which the composition would normally be used as a lamp oil. Therefore, the viscosity for a lamp oil should be optimal to allow sufficient transport in a wick at temperatures ranging from -20 °C to about 30 °C. The composition of the present invention for use as a fuel, such as a lamp fuel has in certain embodiments a viscosity at 20°C, which is less than 10 cPoise (cP), such as less than 5 cP, such as less than 4 cP, for example less than 3 cP, such as less than 2.5 cP, for example less than 2 cP, such as less than 1.5 cP, for example less than 1 cP, preferably between 5 and 0 cP, for example between 4 and 1 cP, such as between 3 and 1.5 cP, such as between 2.5 and 1.5 cP.

Preferably, the viscosity of the fuel composition or lamp fuel of the present invention as measured at 4 mmHg and 22 degrees Celsius is below 15 cP, such as below 10 cP, for example below 5 cP. More preferred, the viscosity is between 1-4 cP, such as approximately 2, or 2.5 cP. In one embodiment, the viscosity of the composition is less than 10 cPoise (cP), such as less than 5 cPoise, such as less than 4 cP, for example less than 3 cP, such as less than 2.5 cP, for example less than 2 cP, such as less than 1.5 cP, for example less than 1 cP. In another embodiment, the composition has a viscosity, which is between 5 and 0 cP, for example between 4 and 1 cP, such as between 3.5 and 1 cP, such as between 3 and 1 cP, such as between 3.5 and 1.5 cP, such as between 3 and 1 cP, such as between 2.5 and 1 cP, such as between 2 and 1 cP. In a preferred embodiment, the dynamic viscosity of the composition is below 3.5 cP, such as below 3 cP, such as below 2.5, for example betweem 3 and 3.5, or 2 and 2.5 cP.

The kinematic viscosity of the composition of the present invention for use as a fuel, such as a lamp fuel, may also be used to define the composition. Thus, in one embodiment, the kinematic viscosity of the fuel composition or lamp fuel of the present invention as measured at 4 mmHg and 22°C is below 15 cSt, such as below 10 cSt, for example below 5 cSt. More preferred, the viscosity is between 1-4 cSt, such as approximately 2, or 2.5 cSt. In one embodiment, the viscosity of the composition is less than 10 cSt, such as less than 5 cSt, such as less than 4 cSt, for example less than 3 cSt, such as less than 2.5 cSt, for example less than 2 cSt, such as less than 1.5 cSt, for example less than 1 cSt. In another embodiment, the composition has a viscosity, which is between 5 and 0 cSt, for example between 4 and 1 cSt, such as between 3 and 1.5 cSt, such as between 2.5 and 1.5 cSt. In a preferred embodiment, the kinematic viscosity of the composition is below 2 cSt.

The relevant viscosity of the composition for use as a fuel, such as a lamp fuel according to the present invention is the viscosity measured at the temperature at which the composition is intended for use as a lamp oil, which is for example broadly in the temperature range from about -10°C to about 40°C, but most commonly between 15 to 25°C. The viscosity always decreases with increasing temperature, and thus, the viscosity of a liquid composition at 40 °C is significantly lower than the viscosity of the same liquid composition at 20°C. For example, a liquid which has a viscosity of 2 cSt at 40°C has a significantly higher viscosity when measure at 20°C. The composition of the present invention for use as a lamp oil has a preferred viscosity of about 2 cSt at 20 °C. However, viscosity is sometimes as a standard measured at 40°C. Since viscosity depends on the temperature of the liquid, the viscosity of a composition for use as a fuel such as a lamp fuel or lamp oil according to the present invention measured at 40°C is lower than the viscosity indicated above at 20°C or 22°C. In particular, any lamp oil, which has a viscosity of 2 cSt or more at 40°C are not suitable as a lamp oil, and such composition are not claimed for use as a lamp oil. A composition comprising a base formulation of one or more alkyl esters of a C₆-C₁₆ carboxylic acid or mixtures thereof for use as a lamp oil according to the present invention, has a viscosity at 40°C below 7 cSt, such as below 6 cSt, such as below 5 cSt, such as below 4 cSt, such as below 3 cSt, such as below 2 cSt, such as below 1.8 cSt, for example below 1.6 cSt, such as below 1.4 cSt, for example below 1.2 cSt, such as below 1.0 cSt, for example below 0.8 cSt, such as below 0.6 cSt, for example below 0.4 cSt, such as below 0.2 cSt. The viscosity at 40°C is for example between 0 and 7 cSt, such as between 0 cSt and 5 cSt, for example between 0 cSt and 3 cSt, such as between 0 cSt and 1 cSt or between 1 cSt and 2 cSt or between 2 and 3 cSt.
In another embodiment, the composition has a viscosity at 40°C below 7 cP, such as below 6 cP, such as below 5 cP, such as below 4 cP, such as below 3 cP, such as below 2 cP, such as below 1.8 cP, for example below 1.6 cP, such as below 1.4 cP, for example below 1.2 cP, such as below 1.0 cP, for example below 0.8 cP, such as below 0.6 cP, for example below 0.4 cP, such as below 0.2 cP. The viscosity at 40°C is for example between 0 and 7 cP, such as between 0 cP and 5 cP, for example between 0 cP and 3 cP, such as between 0 cP and 1 cP or between 1 cP and 2 cP or between 2 and 3 cP.

In particular, the present invention does not relate to the use of fatty acid derivatives with a solidification point below 0°C, an iodine value below 20 and a surface tension of more than 25 mN/m as lamp oils, characterized in that the lamp oil has a viscosity of more than 2 cSt at 40°C,

Thus, the composition preferably has a viscosity that resembles water, and is liquid at temperatures above -5 degrees Celsius. However, the viscosity and physical state of the composition may vary depending on the specific components of the composition, for example on the choice of vegetable oil/carboxylic acid, and the relative concentration of fuel supporter and glycerol in the composition.

Importantly, viscosity is correlated with surface tension. The higher the surface tension, the higher the viscosity. Since the viscosity of the compositions for use as a fuel, such as a lamp fuel or a lamp oil, according to the present invention is an important feature, the surface tension of the composition is also an important feature of the composition, in that it reflects the viscosity of the liquid composition.

As for viscosity, the relevant surface tension of the composition for use as a fuel, such as a lamp fuel according to the present invention is the surface tension measured at the temperature at which the composition is intended for use as a lamp oil, which is for example broadly in the temperature range from about -10°C to about 40°C, but most commonly between 15 to 25°C. Surface tension always decreases with increasing temperature, and thus, the surface tension of a liquid composition at 40°C is significantly lower than the surface tension of the same liquid composition at 20°C. For example, a liquid which has a surface tension of 25 mN/m at 40°C has a significantly higher surface tension when measured at 20°C. The composition of the present invention for use as a lamp oil has a preferred surface tension at 20 °C below 100 mN/m, below 90 mN/m, below 90 mN/m, below 80 mN/m, below 70 mN/m, below 60 mN/m, below 50 mN/m, such as below 40 mN/m, such as below 30 mN/m, such as below 20 mN/m, such as below 10 mN/m. However, viscosity is sometimes as a standard measured at 40°C. Since surface tension depends on the temperature of the liquid, the surface tension of a composition for use as a fuel such as a lamp fuel or lamp oil according to the present invention measured at 40°C is significantly lower than the surface tension indicated at 20°C or 22°C. Thus, the surface tension of the composition claimed for use as a lamp oil measured at 40 °C is, in a preferred embodiment, below 25 mN/m. In fact, any composition of the present invention, wherein the surface tension is above 25 mN/m is not suitable as a lamp oil and such compositions are therefore disclaimed for use as a lamp oil according to the present invention. In particular, the present invention in one embodiment does not relate to the use of fatty acid derivatives with a surface tension of more than 25 mN/m as lamp oils, and more specifically, the present invention does not relate to the use of fatty acid derivatives with a solidification point below 0°C, an iodine value below 20 and a surface tension of more than 25 mN/m as lamp oils. Thus, the present invention relates in one embodiment relates to the use of a composition comprising a base formulation of one or more alkyl esters of a C₆-C₁₆ carboxylic acid or mixtures thereof as a lamp fuel, provided that the composition is not fatty acid derivatives with a solidification point below 0°C, an iodine value below 20 and a surface tension of more than 25 mN/m, or does not comprise fatty acid derivatives with a solidification point below 0°C, an iodine value below 20 and a surface tension at 40°C of more than 25 mN/m.

### Flash point

The flash point of a flammable liquid is the lowest temperature at which it can form an ignitable mixture in air. The flash point of liquids and compositions are important for safety during transport and storage of fuels and compositions. Thus, the higher the flash point, the safer it is to store and transport the liquid/composition. The flash point of the compositions of the present invention is thus preferably above 50 degrees Celsius, such as preferably above 60 degrees Celsius. In a preferred embodiment, the flash point of the composition is between 60 and 100 degrees Celsius, such as between 60-70, 70-80, or 80-90, or 90-100 degrees Celsius. The components of the compositions and formulations of the present invention are, thus, mixed in appropriate ratios in order to obtain a suitable flash point.

### Additional components

The compositions of the present invention may comprise a range of additional components, the choice of which depends on the particular use of the composition. For example, the compositions can optionally include one or more additives, such as lubricants, emulsifiers, wetting agents, densifiers, fluid-loss additives, corrosion inhibitors, oxidation inhibitors, friction modifiers, demulsifers, anti-wear agents, antifoaming agents, detergents, rust inhibitors and the like. Furthermore, other hydrocarbons can be blended with the composition, provided that the final blend has the appropriate physical properties, such as freeze points, kinematic viscosity, flash point, and toxicity properties as described elsewhere herein.

For example, the composition may further comprise dyes for coloring the composition. The composition may also comprise special dyes that will cause the flame to burn a different color, when the composition is used as a lamp fuel. Moreover, the composition may comprise any suitable scent or fragrance.

The fuel composition can be colored so it adds a decorative touch to lanterns or lamps with transparent reservoirs. The fuel can also be aromatic so that when it burns, it spreads a soothing fragrance through the air, much like an air freshener, such as rose or lavender, lemongrass or vanilla. Alternatively, the lamp oil, when burned in outdoor torches, may comprise an additional component, such as a fragrance, which keeps away mosquitoes and other bothersome insects.

According to a particular embodiment of the present invention, the compositions of the present invention further comprise lauryl alcohol. The presence of lauryl alcohol facilitates capillary uptake by the wick, when the fuel composition is used as a lamp fuel.

### Antioxidant

In one embodiment, the compositions of the present invention further comprise at least one antioxidant. An antioxidant is a molecule capable of slowing or preventing the oxidation of other molecules. In the present invention, the presence of an antioxidant prevents the oxidation of the vegetable oil in the composition, and thereby increases the storage and shelf life of the composition. Oxidation is a chemical reaction that transfers electrons from a substance to an oxidizing agent. Antioxidants terminate oxidation reactions by removing free radical intermediates, and inhibit other oxidation reactions by being oxidized themselves. As a result, antioxidants are often reducing agents. Thus, the at least one antioxidant of the present invention is a reducing agent, such as a thiol or a polyphenol. In one embodiment, the antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases. In another embodiment, the antioxidant is selected from the group consisting of , Ellagic acid, Gallic acid, Salicylic acid, Rosmarinic acid, Cinnamic acid, Chlorogenic acid, Chicoric acid, Gallotannins, Ellagitannins, Curcumin, Xanthones, Flavonolignans, Eugenol, Citric acid, oxalic acid, phytic acid, Lignan, Bilirubin,, Uric acid, R-α-Lipoic acid, and/or N-Acetylcysteine.

In one embodiment, the composition further comprises an antioxidant, such as an antioxidant selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidises, and/or the composition may also comprise a coloring agent, such as a coloring agent is selected from the group consisting of a lithium salt or strontiumsalt, boric acid, borax sodiumsalt, barium salt, calcium salt, copper salt, potassium salt, cerium salt, cesium salt, and nitromethane, and/or the composition may comprise a fragrance, which is suitable for use in a fuel composition, such as a lamp oil, in particular a lamp oil for indoor use.

### Method for producing fuel composition

A base formulation of the composition of the present invention may be prepared from any vegetable oil, as defined herein. Methods for producing a fuel composition are also within the scope of the present invention. In one aspect, the present invention relates to a method for producing a fuel composition, such as a lamp fuel, said method comprising the steps of:
a. providing a vegetable oil,
b. preparing an alkyl ester such as a methyl ester of carboxylic acids comprised in said vegetable oil. The alkyl/methyl ester is prepared by conventional methods for esterification/transesterification. In one embodiment, the method comprises the further step of refining the vegetable oil or alkyl/methyl ester. Thus, the vegetable oil or alkyl/methyl ester is in one embodiment refined by distillation, fractionation to purify specific alkyl/methyl ester compounds or specific ranges thereof. In a preferred embodiment, the vegetable oil or alkyl/methyl ester is bleached or extensively bleached/double bleached, such as described elsewhere herein. Thus, in one embodiment of the method of the present invention, the one or more specific alkyl esters are purified from said vegetable oil by distillation and/or fractionation.

In another aspect, the present invention relates the a method for producing a fuel composition comprising the steps of: a) providing a vegetable oil, b) preparing alkyl esters of carboxylic acids comprised in said vegetable oil by esterification and/or transesterification, and c) optionally isolating one or more of said alkyl esters of said carboxylic acids, wherein said alkyl esters of carboxylic acids comprised in said vegetable oil and/or said one or more isolated alkyl esters constitute said fuel composition. The isolation of the one or more alkyl esters of a carboxylic acid is for example obtained by fractionation and/or distillation, and/or the vegetable oil and/or alkyl esters are for example refined by desliming/delicithination, fractionation, distillation, and/or bleaching. In one embodiment, the vegetable oil and/or alkyl esters are refined by of extensive bleaching of the fuel composition, for example the extensive bleaching comprising the steps of a) heating the vegetable oil to 220-300 degrees Celsius, b) adding 1 -10 % bleaching clay, c) stirring optionally under vacuum in at least 15 minutes, and d) separation of the bleaching clay and refined vegetable oil by filtration.
In one embodiment, the alkyl ester isolated according the method of the present invention is selected from the group consisting of methyl ester, ethyl ester, and mixtures thereof.
In a further embodiment, the method comprises removing a substantial amount of C₆ carboxylic acids and/or derivatives thereof from said fuel composition and/or comprising removing a substantial amount of C₁₆ and/or any higher order carboxylic acids and/or derivatives thereof from said fuel composition. A substantial amount is meant as at least 80%, such as at least 90%, and preferably at least 95, such as at least 98% of the C₆ carboxylic acids and/or derivatives thereof and/or C₁₆ and/or any higher order carboxylic acids and/or derivatives thereof.

In one embodiment, the one or more isolated alkyl esters are one or more alkyl esters of C₈ - C₁₄ carboxylic acids, such as one or more alkyl esters of C₈-C₁₀, C₈-C₁₂, C₁₀-C₁₂, C₁₀-C₁₄ or C₁₂-C₁₄ carboxylic acids. For example, the one or more isolated alkyl esters have been isolated to the extent that the fuel composition comprises by weight 10-80% C₈ alkyl esters, 10-80% C₁₀ alkyl esters, 10-70% C₁₂ alkyl esters, and/or 0-40% C₁₄ alkyl esters. Specifically, the one or more isolated alkyl esters have been isolated to the extent that the fuel composition comprises by weight 35-45% C₈ alkyl esters, 25-35% C₁₀ alkyl esters, 15-25% C₁₂ alkyl esters, and/or 5-15% C₁₄ alkyl esters. In another specific embodiment the one or more isolated alkyl esters have been isolated to the extent that the fuel composition comprises by weight 15-25% C₈ alkyl esters, 10-20% C₁₀ alkyl esters, 45-55% C₁₂ alkyl esters, and/or 15-25% C₁₄ alkyl esters.
In another embodiment, the method comprises an additional step of adding at least one alcohol, such as an alcohol defined herein above for compositions for use as a fuel composition, such as a lamp fuel. The method also in a specific embodiment comprises the additional step of adding at least one antioxidant, such as an antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases. The method may also comprise adding at least one coloring agent, such as a coloring agent is selected from the group consisting of a lithium salt or strontiumsalt, boric acid, borax sodiumsalt, barium salt, calcium salt, copper salt, potassium salt, cerium salt, cesium salt, and nitromethane. Moreover, the method may further comprise a fragrance, such as any fragrance suitable for a fuel composition, including a lamp fuel.

The vegetable oil provided in the method of the present invention is in one embodiment selected from the group consisting of coconut, corn, cottonseed, olive, palm, peanut, rape, rapeseed, canola, safflower, sesame, soybean, jatropha and/or sunflower oils; for example, the vegetable oil is selected from the group consisting of sunflower oil, olive oil, rape oil soy bean oil and jatropha oil. In a preferred embodiment, the vegetable oil is a rapeseed oil, and an even more preferred embodiment, the vegetable oil is palm tree oil or palm kernel oil.

The alkyl ester prepared by the method comprise any alkyl ester as described elsewhere herein, however in a preferred embodiment, the alkyl ester is a methyl, ethyl, propyl, butanyl, pentyl or a hexanyl ester or mixtures thereof, such as most preferably a methyl ester.

In an additional embodiment, the method comprises the additional step of adding at least one alcohol. The alcohol may be any suitable alcohol, for example an alcohol as disclosed elsewhere herein, and is in one embodiment selected from the group consisting of methanol, ethanol, propyl alcohol, isopropyl alcohol, butyl alcohol, isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; glycols such as propylene glycol, ethylene glycol, dipropylene glycol, glycerol, diethylene glycol, triethylene glycol, trimethylene glycol, hexylene glycol, butylene glycol, 1,3-butanediol, thiodiethylene glycol, ammonium thioglycolate, cefatrizine glycol, polypropylene glycol, propylene glycol alginate; dichloromethane; butyl acetate; acetone; acetonitrile; ethyl acetate; and the like as well as mixtures thereof. In a preferred embodiment, the fuel supporter or alcohol is ethanol, methanol, butanol, or mixtures thereof, however preferably butanol.

The relative amount of specific alkyl/methyl esters and additional components, such as an alcohol/fuel supporter is adjusted in accordance with the teachings provided elsewhere herein with respect to viscosity, flash point, flame point, melting point etc., and specific examples of such ratios are also provided elsewhere herein.

In an additional embodiment, the method comprises the additional step of adding at least one antioxidant, for example an antioxidant as disclosed herein.

In a preferred embodiment, the composition prepared by the methods of the present invention is a fuel composition, such as a lamp fuel composition.

In one example, a base formulation of the composition of the present invention may be prepared by the following method: First, a vegetable oil is heated to 55° C. Then, an alcohol, such as methanol, or ethanol is added along with a base, e.g. sodium hydroxide. The mixture is then heated and stirred for 20-60 minutes and then allowed to cool to room temperature. The reaction mixture is then washed repeatedly with equal volumes of water, for example 2-10 times. The water was separated from the reaction mixture. The solution is then allowed to sit in a separatory funnel for 5 hours. During this time the glycerine (bottom layer) separated from the alkyl ester/biodiesel (top layer). The biodiesel may then be separated and collected.

In one aspect, the present invention relates to a process or a method for producing a composition of the present invention, such as a lamp fuel composition as described elsewhere herein. The method of producing a composition, for example a lamp fuel composition of the present invention, comprises combining a vegetable oil and hydroxide ions and an alcohol (preferably ethanol or methanol or butanol) in order in order to refine the vegetable oil by alkaline hydrolysis. In this process, a fatty acid fraction is isolated from a glycerol fraction. This means that the glycerol fraction of the refined vegetable oil is reduced compared with the unrefined vegetable oil. The fatty acid fraction of the vegetable oil after alkaline hydrolysis may be completely devoid of glycerol, or may comprise a residual amount of glycerol in the range of 0.1% to 40% by weight.

In another aspect, the present invention relates to a method for producing a fuel composition, such as a lamp fuel, said method comprising the steps of:
a. providing a mixture of an alcohol and hydroxide ions,
b. heating a vegetable oil,
c. adding said mixture of step a. to the heated vegetable oil of step b,
d. stirring the components of step c in order to mix the heated vegetable oil with the alcohol and hydroxide ion mixture,
e. heating the mixture components of step d, and
f. separating a refined vegetable oil or alkyl/methyl ester of a refined/extensively bleached vegetable oil comprising a fatty acid fraction from a glycerol fraction.

The vegetable oil provided in step b. and/or the components of the mixture in step d is heated to at least 30 degrees Celsius, such as at least 35, at least 40, at least 45, preferably heated to at least 50 degrees Celsius, such as at least 55, at least 60, at least 65, preferably heated to at least 70, at least 75, at least 80, at least 85, at least 90, such as at least 95 degrees Celsius. In another embodiment, the mixture is heated to a temperature between 40 and 70 degrees Celsius, such as between 50 and 60 degrees Celsius, or between 55 and 65 degrees Celsius, preferably between 58 and 62 degrees Celsius, such as 60 degrees Celsius. The mixture is optionally stirred before, after and/or during heating.

The stirring of step d and the heating of step e may be performed either sequentially or simultaneously.

The vegetable oil is as defined elsewhere herein. In one embodiment, the vegetable oil of the present invention is selected from the group consisting of coconut, corn, cottonseed, olive, palm, peanut, rape, rapeseed, safflower, sesame, soybean, jatropha, canola and/or sunflower oils as well as any other industrial grown non-eatable oils. In a preferred embodiment, the vegetable oil is rape oil, soybean oil, jatropha or sunflower oil. In another embodiment, the vegetable oil of the present invention is a nut oil, such as oil extracted from almond, cashew, hazelnut, macadamia, mongongo, pecan, pine, pistachio, and/or walnut. In yet another embodiment, the vegetable oil of the present invention is extracted from Castor, Coconut, Corn, Cottonseed, False, Hemp, Mustard, Palm, Peanut, Radish, Rapeseed, Ramtil, Rice, Safflower, Salicornia, Soybean, Sunflower, and/or Tung.

The hydroxide ion provided to the vegetable oil in step a. of the method mentioned above is supplied by any suitable base. In a preferred embodiment, the hydroxide ions are supplied in the form of potassium hydroxide (KOH) or sodium hydroxide (NaOH). The provided amount of potassium hydroxide (KOH), sodium hydroxide (NaOH) or other corresponding base is in the range of 0.5-10 grams per litre of vegetable oil. In a preferred embodiment, 1-5 grams are provided per litre of vegetable oil, such as at least 1 g, for example at least 1.5 g, for example at least 2 g, for example at least 2.5 g, such as at least 3 g, such as at least 3.5 g, for example at least 4 g, such as at least 4.5 g, such at the most 5 g per litre of vegetable oil.

The alcohol of step a. is any alcohol suitable for washing the fatty acid fraction. In a preferred embodiment, the alcohol is ethanol, methanol, propanol or butanol. The provided amount of alcohol is in the range of 20-300 ml per litre of vegetable oil. In a preferred embodiment, 70-200 ml alcohol are provided per litre of vegetable oil, such as at least 70 ml, for example at least 80, at least 90, at least 100, at least 110, at least 120, at least 130, at least 140, at least 150, at least 160, at least 170, at least 180, at least 190 ml, such as at the most 200 ml alcohol per litre of vegetable oil. The fatty acid fraction and alcohol is preferably mixed. The alcohol fraction is subsequently separated from a fatty acid fraction, for example by centrifugation of any other suitable method.

The method of the present invention preferably comprises a further step of adding at least one fuel supporter, such as a fuel supporter as described elsewhere herein. The at least one added fuel supporter is preferably ethanol, methanol and/or butanol. The at least one fuel supporter is added to the refined vegetable oil or alkyl/methyl ester of a refined/extensively bleached vegetable oil (the fatty acid fraction of the hydrolysed vegetable oil) such that the final concentration of fuel supporter (e.g. butanol) is in the range of 0.1%-60% by weight. More preferred, the final concentration of fuel supporter is in the range of 1%-50%, for example 1%-40%, such as 1%-30%, for example 2%-30%, such as 2%-20%, such as 2%-15% by weight, for example 5%-10%, such as 7%-9% by weight.

Steps a.-f. of the method of the present invention lead to the production of a refined vegetable oil or alkyl/methyl ester of a refined/extensively bleached vegetable oil, wherein the fatty acids/carboxylic acids or alkyl/methyl ester have been up-concentrated by removing a glycerol fraction of the vegetable oil. Subsequently, a fuel supporter is preferably added to the refined vegetable oil or alkyl/methyl ester of a refined/extensively bleached vegetable oil, the fatty acid fraction. The final concentration of glycerol by weight of the refined vegetable oil or alkyl/methyl ester of a refined/extensively bleached vegetable oil or the refined vegetable oil or alkyl/methyl ester of a refined/extensively bleached vegetable oil further comprising at least one fuel supporter is as defined elsewhere herein. In a preferred embodiment, the final concentration of glycerol by weight is less than 5%, such as less than 4%, for example less than 3%, such as less than 2, for example less than 1%, such as less than 0.5%, such as 0%. In another preferred embodiment, the final concentration of glycerol by weight is between 0 and 1%, such as between 0.25 and 0.75% by weight. In a most preferred embodiment, the final concentration of glycerol is 0.5% by weight.

The relative amount of refined vegetable oil or alkyl/methyl ester of a refined/extensively bleached vegetable oil and fuel supporter comprised in a composition provided by the methods of the present invention is 60-99% by weight refined vegetable oil or alkyl/methyl ester of a refined/extensively bleached vegetable oil and 1-40% by weight fuel supporter, such as 80-98% by weight refined vegetable oil or alkyl/methyl ester of a refined/extensively bleached vegetable oil and 2-20% by weight fuel supporter, for example 85-98% by weight refined vegetable oil or alkyl/methyl ester of a refined/extensively bleached vegetable oil and 2-15% by weight fuel supporter, such as 85-95% by weight refined vegetable oil or alkyl/methyl ester of a refined/extensively bleached vegetable oil and 5-15% by weight fuel supporter, for example 90-95% by weight refined vegetable oil or alkyl/methyl ester of a refined/extensively bleached vegetable oil and 5-10% by weight fuel supporter. In a preferred embodiment, the relative amount of refined vegetable oil or alkyl/methyl ester of a refined/extensively bleached vegetable oil and fuel supporter comprised in a composition provided by the methods of the present invention is 92.5% by weight refined vegetable oil or alkyl/methyl ester of a refined/extensively bleached vegetable oil and 7.5% by weight fuel supporter, wherein said composition comprises a final concentration of about 0.5% glycerol provided as residual glycerol on the refined vegetable oil or alkyl/methyl ester of a refined/extensively bleached vegetable oil.

The method of the present invention optionally comprises a further step of adding at least one antioxidant. Examples of antioxidants are provided elsewhere herein. In another embodiment, the method of the present invention optionally comprises a further step of adding at least one additional ingredient depending on the specific use of the composition provided by the methods of the invention. Example of an additional ingredient is a colouring agent, a fragrance or lauryl alcohol.

In a specific embodiment of the method of the present invention, the mixture of vegetable oil and hydroxide ions are provided by mixing 1 litre of vegetable oil and 1-5 grams of potassium hydroxide (KOH) or sodium hydroxide (NaOH). Moreover, 70-200 ml ethanol, methanol or butanol is optionally added to said refined vegetable oil or alkyl/methyl ester of a refined/extensively bleached vegetable oil comprising a fatty acid fraction, followed by separating an alcohol fraction from a fatty acid fraction. Subsequently, the fatty acid fraction is preferably mixed with butanol to a final concentration of butanol of 2-15% by weight.

The compositions provided by the methods of the present invention are preferably lamp fuel compositions, however, the compositions may also be used for other purposes, such as fuel for home heating.

### Uses of the composition

The compositions described herein are suitable for a wide range of applications, and thus, the compositions are claimed for use in any such application. The composition is in one aspect broadly described as a composition comprising a base formulation of one or more alkyl esters of a C₆-C₁₆ carboxylic acid or mixtures thereof. More specific embodiments of the composition are described elsewhere herein, and includes compositions comprising at least 50%, such as at least 60%, for example at least 70%, such as at least 80%, for example at least 90% by weight of one or more alkyl esters of C₈-C₁₄ carboxylic acids or mixtures thereof. In a broad aspect, these compositions are claimed for use as a fuel or a fuel composition; in a preferred embodiment as a lamp fuel.

The fuel composition in one embodiment comprises at least 80%, such as at least 90% by weight of one or more alkyl esters of C₈-C₁₄ carboxylic acids, at least 70% by weight of one or more alkyl esters of C₈-C₁₂ carboxylic acids, at least 60% by weight of one or more alkyl esters of C₈-C₁₀ carboxylic acids, at least 70% by weight of one or more alkyl esters of C₁₀-C₁₄ carboxylic acids, and/or at least 40% by weight of one or more alkyl esters of C₁₀-C₁₂ carboxylic acids. In another embodiment, the composition comprises less than 5% by weight of any alkyl ester of a C₆ or any lower chain order carboxylic acid and/or less than 5% by weight of any alkyl ester of a C₁₈ or any higher chain order carboxylic acid. The alkyl ester of a C₆ carboxylic acid has a strong odour, and is therefore in one embodiment, not desirable in the composition of the present invention for use as a lamp oil.
In another embodiment, the composition claimed for use according to the present invention comprises one or more alkyl esters of C₈-C₁₀, C₈-C₁₂, C₁₀-C₁₂, C₁₀-C₁₄ or C₁₂-C₁₄ carboxylic acids, such as by weight 10-80% C₈ alkyl esters, 10-80% C₁₀ alkyl esters, 10-70% C₁₂ alkyl esters, and/or 0-40% C₁₄ alkyl esters, or the composition for example comprises by weight 35-45% C₈ alkyl esters, 25-35% C₁₀ alkyl esters, 15-25% C₁₂ alkyl esters, and/or 5-15% C₁₄ alkyl esters, or for example by weight 15-25% C₈ alkyl esters, 10-20% C₁₀ alkyl esters, 45-55% C₁₂ alkyl esters, and/or 15-25% C₁₄ alkyl esters. Preferably at least 80% of the alkyl esters are fully saturated.

The compositions claimed for use as a fuel, such as a lamp fuel composition has a melting point of less than 0 °C; and the composition is preferably liquid at least in the temperature range from 0-100 °C, such as 0-80 °C, for example 0-60 °C. The composition has in certain embodiments a viscosity, which is less than 10 cPoise (cP), such as less than 5 cP, such as less than 4 cP, for example less than 3 cP, such as less than 2.5 cP, for example less than 2 cP, such as less than 1.5 cP, for example less than 1 cP, preferably between 5 and 0 cP, for example between 4 and 1 cP, such as between 3 and 1.5 cP, such as between 2.5 and 1.5 cP.

The alkyl esters of the used composition are in one embodiment selected from the group consisting of methyl ester, ethyl ester, propyl ester, buthanyl ester and mixtures thereof, such as selected from the group consisting of methyl ester, ethyl ester, and mixtures thereof, preferably the alkyl ester is a methyl ester, and the alkyl ester is preferably methyl octanate, methyl decanoate, methyl dodecanoate, methyl tetradecanoate and/or mixtures thereof.

In another embodiment, the compositions claimed for use according to the present invention further comprises an alcohol, for example between 0.5 and 5 % by weight alcohol. The alcohol is for example selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate. Preferably, the alcohol comprises one to six carbon atoms, and is for example selected from the group consisting of methanol, ethanol, propanol, butanol, pentanol, hexanol, and mixtures thereof, such as methanol, ethanol, propanol and/or butanol, for example the alcohol is ethanol, methanol and/or butanol.

In one embodiment, the composition further comprises an antioxidant, such as an antioxidant selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidises, and/or the composition may also comprise a coloring agent, such as a coloring agent is selected from the group consisting of a lithium salt or strontiumsalt, boric acid, borax sodiumsalt, barium salt, calcium salt, copper salt, potassium salt, cerium salt, cesium salt, and nitromethane, and/or the composition may comprise a fragrance, which is suitable for use in a fuel composition, such as a lamp oil, in particular a lamp oil for indoor use.
In a specific embodiment, the present invention relates to the use of a composition comprising by weight 35-45% C8 alkyl esters, 25-35% C10 alkyl esters, 15-25% C12 alkyl esters, and/or 5-15% C14 alkyl esters as an indoor lamp fuel. In another specific embodiment, a composition comprising by weight 15-25% C8 alkyl esters, 10-20% C10 alkyl esters, 45-55% C₁₂ alkyl esters, and/or 15-25% C₁₄ alkyl esters is claimed for use as an outdoor lamp fuel.

The composition is burnable and may thus replace any burnable compositions, for example petrol-based compositions. Obvious applications of the fuel compositions of the present invention include without limitation its use for lighting, heating, cooling and/or cooking. Thus, the invention relates to use of any composition of the present invention for lighting, heating, cooling and/or cooking, cf. below. Thus, in one embodiment, the present invention relates to use of any composition of the present invention for the preparation of a lamp fuel, heating fuel, fuel for cooking and/or cooling fuel.

For example, the fuel composition may be used as a lamp fuel for lighting in decorative lamps, torches, primus lamps, pressure lamps etc. The fuel composition may also be used as a heating fuel for heating for example domestic heating as a fuel in a primus, an oven etc., which generally use oil as a fuel. Moreover, the composition may be used as a fuel for cooking, for example in a primus, stove, oven, or other devices that may be fuelled by an oil. Additionally, the composition is in one embodiment used for cooling, for example used in refrigerators, freezers, air conditioners and/or other apparatuses which may be fuelled by an oil composition.

The composition of the present invention, such as a composition comprising a base formulation of one or more alkyl esters of a C₆-C₁₆ carboxylic acid or mixtures thereof as a fuel composition, are claimed for use as a fuel. Thus, the composition is used as a fuel composition. The term "fuel" as used herein broadly refers to any composition which comprises energy, which may be released for example by burning. The energy may be used to heat or cool and object, to move an object, and/or for lighting or cooking.

Thus, the compositions may be used for lighting, for example as fuel in lamps, torches, barn lamps, lanterns, mantle lamps, pressure lamps etc. Thus, in a preferred embodiment, the composition of the present invention is a lamp fuel composition, i.e. the composition is suitable for use as lamp fuel. Consequently, the present invention relates to a lamp fuel composition comprising any composition according to the present invention. Moreover, use of a composition of the present invention is claimed for the preparation of a lamp fuel. Similarly, the invention relates to use of any composition of the present invention as a lamp fuel.
In particular, the present invention relates to a composition as defined herein for use as a lamp fuel, lighter fluid, and/or heating fuel.

The compositions of the present invention are claimed for use as a lamp fuel, which is suitable for use in any lamp, which normally uses conventional petrol-based lamp fuel. For example a kerosene lamp (also known as a paraffin lamp), which include any type of lighting device that uses kerosene (paraffin) as a fuel. There are two main types of kerosene lamp which work in different ways, the "wick lamp" and the "pressure lamp". A wick lamp is a simple type of kerosene lamp which works in a similar way to a candle. This type of lamp is also known as an "oil lamp". In a wick lamp there is a small fuel tank at the bottom of the lamp, wherein the vegetable lamp fuel composition if the present invention is applied. There is also a wick, usually made of cotton. The lower half of the wick is dipped into the lamp fuel and absorbs the fuel. The top part of the wick extends out of the top of fuel tank and (usually) a wick adjustment mechanism. There are many variations in wick lamp design, the barn (tubular) and Aladdin being the most common. When the top part of wick is lit, the lamp fuel, which has been absorbed in the wick burns and produces a flame. As the lamp fuel burns, capillary action inside the wick draws more lamp fuel up from the fuel tank to be burned.

Barn lamps (or lanterns) have several design variations. The earliest lanterns used the dead flame design where the flame was fed fresh air from beneath and warm air expelled above. Because this design does not feed air directly, this type of lamp produces only a dim yellow light and is not much brighter than a candle. Most Aladdin style lamps are dead flame. Tubular lamps recirculate a mix of fresh and warm air back to the flame through side tubes thus improving the lamp fuel burning efficiency. Kerosene lamps are especially used for decorative purposes, emergency lighting, or in remote areas without electricity. However, in many countries today lamp oil lighting and stoves fuelled by a suitable fuel are still in regular use and the fuel composition of the present invention are therefore highly suitable for these applications.
A pressure lamp or a blow lamp (a "Tilley lamp") may also be fuel by a lamp fuel composition of the present invention. A pressure lamp is more sophisticated than a wick lamp and produces a much brighter light, although they can be quite complicated and fiddly to use. A pressure lamp has a fuel tank at the bottom with a small pump to pressurize the fuel. There is a narrow gap up to the top of the lamp called a flue, and at the top of the lamp there is a burner (gas outlet). Directly underneath the burner is the mantle, a fabric bag coated with chemicals which incandesce (glow brightly) when heated by the gas flame. To work a pressure lamp the lamp fuel needs to be heated to the point where it is vaporized. This is necessary because vaporized fuel burns much hotter than liquid fuel. The fuel burner has to be heated by means of a primer, usually methylated spirit, which is burnt in a small tray underneath the burner to heat it. The lamp oil in the tank is then forced into the burner, which is done by pumping up the air pressure in the fuel tank. This causes the kerosene to be forced upwards through the flue. After the primer has stopped burning, the flames from the primer should have got the burner hot enough to vaporize the lamp oil. When a valve is opened, the pressurized lamp fuel is forced into the hot burner where it is vaporized. This fuel vapour is then directed downwards into the mantle where it burns hot enough to make the mantle glow and produce a bright white light. The heat from the burning vapour, in turn vaporises the liquid lamp fuel, which is being forced into the burner.

There are also portable stoves which work in much the same way as pressure lamps, and these stoves may also use a fuel composition of the present invention.

The compositions of the present invention are also claimed for use for kindling, such as kindling of fire, firewood in fireplaces, stoves, grills, broilers and the like. Moreover, the compositions may be used for stoking. Therefore, the compositions of the present invention are provided for use as a lighter fluid.

In another application, the compositions of the present invention may be used for heating, for example home heating or heating in auto campers etc. The compositions may be used as fuel in different heating devices, such as heaters.
Moreover, the compositions may be used as fuel in any other specialized engine of device, wherein the use of non-toxic, non-petroleum based fuel is desirable.

The biological non-petrol based fuel of the present invention may be used alone, or blended with conventional petrodiesel in unmodified diesel-engine vehicles.

### Lamp fuel for indoor use

In a preferred embodiment, the lamp fuel of the present invention is employed for indoor use for oil lamps, or indoor torches etc. Indoor lamps and torches are typically characterized by smaller wicks, with diameters in the area of 1-5 mm. The wick diameter affects the temperature at which the fuel is burning, such that the larger the wick diameter, the higher the temperature. A smaller wick as is typically employed in indoor oil lamps sustain a relatively lower flame temperature, and thus, the lamp fuel used in indoor lamps or lamps with smaller wicks (e.g. typically below 5 mm) should preferably comprise distilled and/or fractionated vegetable oil/carboxylic acid esters. Moreover, smaller wick sizes primarily supports capillary transport of liquid compositions with a relatively low viscosity. Thus, specifically, the lamp fuel for indoor use is low viscous vegetable based lamp fuel/lamp oil, wherein the viscosity at 20 °C is below 6 cP, preferably between 2-5 cP, such as between 2-3 cP.

In one embodiment, the present invention relates to a composition comprising a base formulation of one or more alkyl esters of a C₆-C₁₆ carboxylic acid or mixtures thereof for use as a lamp fuel, such as an indoor lamp fuel. The composition is defined elsewhere herein, but for example comprises one or more alkyl esters of C₈-C₁₀, C₈-C₁₂, C₁₀-C₁₂, C₁₀-C₁₄ or C₁₂-C₁₄ carboxylic acids, such as by weight 10-100%, such as 10-20%, 20-30%, 30-40%, 40-50%, 50-60%, 60-70%, 70-80%, 80-90%, or 90-100%, C₈ alkyl esters, and/or by weight 10-100%, such as 10-20%, 20-30%, 30-40%, 40-50%, 50-60%, 60-70%, 70-80%, 80-90%, or 90-100%, and/or by weight 10-100%, such as 10-20%, 20-30%, 30-40%, 40-50%, 50-60%, 60-70%, 70-80%, 80-90%, or 90-100%, C₁₀ alkyl esters, and/or by weight 0-100%, such as 0-10%, 10-20%, 20-30%, 30-40%, 40-50%, 50-60%, 60-70%, 70-80%, 80-90%, or 90-100%, C₁₂ alkyl esters, and/or by weight 0-100%, such as 0-10%, 10-20%, 20-30%, 30-40%, 40-50%, 50-60%, 60-70%, 70-80%, 80-90%, or 90-100%, C₁₄ alkyl esters. In a preferred embodiment, the composition claimed for use as a lamp oil, such as a lamp oil for indoor or outdoor use comprises by weight 10-80% C₈ alkyl esters, 10-80% C₁₀ alkyl esters, 10-70% C₁₂ alkyl esters, and/or 0-40% C₁₄ alkyl esters, or the composition for example comprises by weight 35-45% C₈ alkyl esters, 25-35% C₁₀ alkyl esters, 15-25% C₁₂ alkyl esters, and/or 5-15% C₁₄ alkyl esters, or for example by weight 15-25% C₈ alkyl esters, 10-20% C₁₀ alkyl esters, 45-55% C₁₂ alkyl esters, and/or 15-25% C₁₄ alkyl esters. The alkyl ester is preferably methyl ester and/or ethyl ester.

In a specific embodiment, the present invention relates to the use of a composition comprising by weight 35-45% C₈ alkyl esters, 25-35% C₁₀ alkyl esters, 15-25% C₁₂ alkyl esters, and/or 5-15% C₁₄ alkyl esters as an indoor lamp fuel, wherein the The alkyl ester preferably is methyl ester and/or ethyl ester.

The fuel primarily contains fatty acid alcohols of Caproic acid (C6) and Caprylic acid (C8). Thus in a preferred embodiment, the composition of the present invention for use as an indoor lamp fuel comprises a base formulation of one or more alkyl esters of a C₆ and C₈, preferably a methyl ester, ethyl ester, propyl ester, butyl ester or mixtures thereof, wherein said base formulation comprises between 60-90 % by weight C₆ alkyl ester, and between 10-30 % by weight C₈ alkyl ester, such as between 75-85 % by weight C₆ alkyl ester, and between 15-25 % by weight C₈ alkyl ester, such as between 78-82 % by weight C₆ alkyl ester, and between 8-12 % by weight C₈ alkyl ester, wherein the alkyl ester is most preferably an ethyl ester. The composition further comprise in one embodiment a final concentration of 0.1-10 % by weight of an alcohol, such as 0.1-5 % by weight, for example 1-3 %, such as 1.5-2.5 % by weight of an alcohol, wherein said alcohol comprises or consists of 1 to 6 carbon atoms, as defined elsewhere herein, and is preferably butanol.

The lamp fuel composition may also comprise smaller amounts of capric acid (decanoic acid) (C10) and Lauric acid (dodecanoic acid) (C12). These acids may be laborious or expensive to remove by distillation, and thus, smaller amounts of these fatty acid derivatives are accepted in the compositions of the present invention.

In another embodiment, the fuel composition comprises linoleic acid (C18: 2) and Linolenic acid (C18: 3).

In addition to the fatty acid derivative, the lamp fuel composition further comprises an alcohol as a fuel supporter. The alcohol may be any alcohol, but is preferably methanol, ethanol, and/or most preferably butanol.

The mixing between the fatty acid alcohols and alcohol is optimized to achieve the best viscosity, while maintaining an acceptably low flash point and smoke formation.

### Lamp fuel for use in dispensers

In a preferred embodiment, the lamp fuel of the present invention is employed for use in indoor oil dispensers.
Specifically, the lamp fuel composition for use in dispensers is low viscous vegetable based lamp fuel/lamp oil, wherein the viscosity at 20°C or 22°C is below 6 cP, preferably between 2-5 cP, such as between 2-3 cP.

The fuel primarily contains fatty acid alcohols of Caproic acid (C6) and Caprylic acid (C8).
The fuel composition may also comprise alcohols of pure vegetable oils.

The lamp fuel composition may also comprise smaller amounts of capric acid (decanoic acid) (C10) and Lauric acid (dodecanoic acid) (C12). These acids may be laborious or expensive to remove by distillation, and thus, smaller amounts of these fatty acid derivatives are accepted in the compositions of the present invention.

In another embodiment, the fuel composition comprises linoleic acid (C18: 2) and Linolenic acid (C18: 3).

In addition to the fatty acid derivative, the lamp fuel composition further comprises an alcohol as a fuel supporter. The alcohol may be any alcohol, but is preferably methanol, ethanol, and/or most preferably butanol.

The mixing between the fatty acid alcohols and alcohol is optimized to achieve the best viscosity, while maintaining an acceptably low flash point, and as low smoke formation as possible.

### Lamp fuel for outdoor use

In another preferred embodiment, the compositions of the present invention is a lamp fuel or lighter fuel for outdoor use, for example for use in outdoor torches. Indoor lamps and torches are typically characterized by smaller wicks, with diameters in the area of 5-15 mm or more. The wick diameter affects the temperature at which the fuel is burning, such that the larger the wick diameter, the higher the temperature. A relatively large wick as is typically employed in outdoor oil lamps/torches sustain a relatively higher flame temperature, and thus, the lamp fuel used in outdoor oil lamps/torches with larger wicks (e.g. typically above 5 mm) may comprise more impurities, which burn at the elevated temperature. Thus, a composition of the present invention for use in outdoor oil lamps and torches (employing 5 mm wicks or more) may comprise an alkyl ester derived from undistilled or unfractionated vegetable oil, for example a refined vegetable oil, which has been deslimed and/or bleached or extensively bleached/double bleached before or after esterification/transesterification. That alkyl ester is preferably added to a base formulation as defined herein, comprising one or more alkyl esters of specific carboxylic acids or mixtures thereof.

Moreover, larger wick sizes supports capillary transport of liquid compositions with a relatively higher viscosity; i.e. slightly more "gel-like" compositions. Therefore, a fuel composition for use in lamps with larger wick sizes, primarily above 5 mm, may comprise a relatively larger proportion of alkyl esters of higher number carboxylic acids, which have a relatively larger viscosity. Thus, specifically, the lamp fuel composition for outdoor use or for use in lamps with wick sizes above 5 mm is low viscous vegetable based lamp fuel/lamp oil or a composition of the present invention, wherein the viscosity is above 2 cP, for example above 3, 4, 5, or 6 cP, but still preferably between 2-5 cP, such as between 2-3 cP.

In a specific embodiment, a composition comprising by weight 15-25% C₈ alkyl esters, 10-20% C₁₀ alkyl esters, 45-55% C₁₂ alkyl esters, and/or 15-25% C₁₄ alkyl esters is claimed for use as an outdoor lamp fuel.

The primary ingredient is fatty acid alcohols of pure vegetable oils.
The fuel primarily contains fatty acid alcohols of Caproic acid (C6) and Caprylic acid (C8). Thus in a preferred embodiment, the composition of the present invention for use as an outdoor lamp fuel or lighter fuel comprises a base formulation of one or more alkyl esters of a C₆ and C₈ , preferably a methyl ester, ethyl ester, propyl ester, butyl ester or mixtures thereof, wherein said base formulation comprises between 60-90 % by weight C₆ alkyl ester, and between 10-30 % by weight C₈ alkyl ester, such as between 75-85 % by weight C₆ alkyl ester, and between 15-25 % by weight C₈ alkyl ester, such as between 78-82 % by weight C₆ alkyl ester, and between 8-12 % by weight C₈ alkyl ester, wherein the alkyl ester is most preferably an ethyl ester.

In one specific embodiment, the composition for outdoor use further comprise a final concentration of between 5-70 % by weight of refined vegetable oil, as defined elsewhere herein, preferably a doubled bleached/extensively bleached vegetable oil, such as a rape oil, rapeseed oil or mixtures thereof. Thus, the composition comprise between 30-95 % by weight of a base formulation as defined above and between 5-70 % by weight of said refined vegetable oil, such as between 40-80 % by weight of a base formulation as defined above and between 20-60 % by weight of said refined vegetable oil, such as between 50-70 % by weight of a base formulation as defined above and between 30-50 % by weight of said refined vegetable oil, such as between 35-45 % by weight of a base formulation as defined above and between 55-65 % by weight of said refined vegetable oil, such as between 58-62 % by weight of a base formulation as defined above and between 38-42 % by weight of said refined vegetable oil.

Specifically, the composition further comprise in one embodiment a final concentration of 0.1-10 % by weight of an alcohol, such as 0.1-5 % by weight, for example 1-3 %, such as 1.5-2.5 % by weight of an alcohol, wherein said alcohol comprises or consists of 1 to 6 carbon atoms, as defined elsewhere herein, and is preferably butanol.

The fuel composition may also comprise alcohols of pure vegetable oils.

The lamp fuel composition may also comprise smaller amounts of capric acid (decanoic acid) (C10) and Lauric acid (dodecanoic acid) (C12). These acids may be laborious or expensive to remove by distillation, and thus, smaller amounts of these fatty acid derivatives are accepted in the compositions of the present invention.

In another embodiment, the fuel composition comprises linoleic acid (C18: 2) and Linolenic acid (C18: 3).

In addition to the fatty acid derivative, the lamp fuel composition further comprises an alcohol as a fuel supporter. The alcohol may be any alcohol, but is preferably methanol, ethanol, and/or most preferably butanol.

The mixing between the fatty acid alcohols and alcohol is optimized to achieve the preferred viscosity, flash point, wind resistance etc.

The mixing between the fatty acid alcohols, and alcohol reconciled in economic optimization. How requirement to achieve the necessary viscosity, flash point as the limiting factor I. Factor II oil smoke production. Factor III oil "wind resistance

### Examples

### Example 1

The following example illustrates specific composition and methods of producing those according to the present invention.

**Table 3**

| Ingredients | Amount |
|---|---|
| Vegetable oil | 1 litre |
| Ethanol or methanol | 70-200 ml |
| Potassium hydroxide (KOH) or | 1-5 gram |
| sodium hydroxide (NaOH) | |
| Butanol | 2-15% (w/w) |
| Antioxidant | ∼ |

The composition was prepared as follows:
First, Ethanol or methanol and Potassium hydroxide (KOH) or sodium hydroxide (NaOH) is mixed, and that mixture is then subsequently mixed with the vegetable oil. The mixture is heated until 50-60 degrees Celsius, and stirred. The mixture is precipitated and a glycerol fraction is separated from a fatty acid fraction of the vegetable oil. This step results in the production of a methyl ester (where methanol is used) or ethyl ester (where ethanol is used).
The methyl ester or ethyl ester is mixed with butanol to a final concentration of 2-15% butanol. Finally, an antioxidant is optionally added to prevent premature oxidation of the composition.

### Example 2

Capillary transport, viscosity and flame point
Test of capillary transport, viscosity and flame point of petrol based lamp fuel and lamp fuels of the present invention.

**Test performed in a Mag. Duo oil lamp with a 3 mm cotton wick.**

| Composition | Capillary effect Cm | Viscosity cps | Flame point °C |
|---|---|---|---|
| Petrol based lamp oil | 12 | 2,5 | 80 |
| Methyl ester: C8 70%/C10 30% 5-16 % butanol | 9 -11 | 3-5 | 55-80 |
| Methyl ester 100 % C6 | 15 | appr. 2 | 63 |
| Methyl ester 100 % C6 | 16 (fibre wick) | appr. 2 | 63 |

**Test performed in a torch with a 10 mm cotton wick.**

| Komposition | Capillary effect Cm | Viscosity cps | Flame point Centigrades °C |
|---|---|---|---|
| 50% bio diesel 1) 35 % | Minimum 14 | appr. 4 | appr. 70 |
| Methyl ester 100 % C6 15 % Methyl ester C8 70%/C10 30% | | | |

### Example 3

### Preparation of biodiesel

Biodiesel may be prepared from any vegetable oil, as defined herein. For example, by the following method. First, 200 mL of canola oil was added to an round bottom flask and heated to 55° C. Then, 50 mL of methanol were added along with 2.9 g of sodium hydroxide. The mixture was heated and stirred for 40 minutes and then allowed to cool to room temperature. The reaction mixture was then washed with equal volumes of DI water five times. The water was separated from the reaction mixture. The solution was allowed to sit in the separatory funnel for 5 hours. During this time the glycerine (bottom layer) separated from the biodiesel (top layer). The biodiesel was then separated and collected.

### Example 4

Tests of smell of the liquid of different compositions of the present invention, the smell of the flame when the liquid is burned, the efficiency of capillary transport of the composition in different wick types and types of oil lamps in an unlit wick and when the fuel is burning from the wick.

The results are provided in the tables below.
Smell is estimated by a test person.
Capillary efficiency designate the extent of capillary transport in the wick, when the fuel is burning from the wick and when the wick is soaked in the fuel without burning, burning vs. suction, respectively.

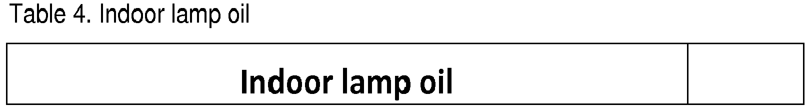

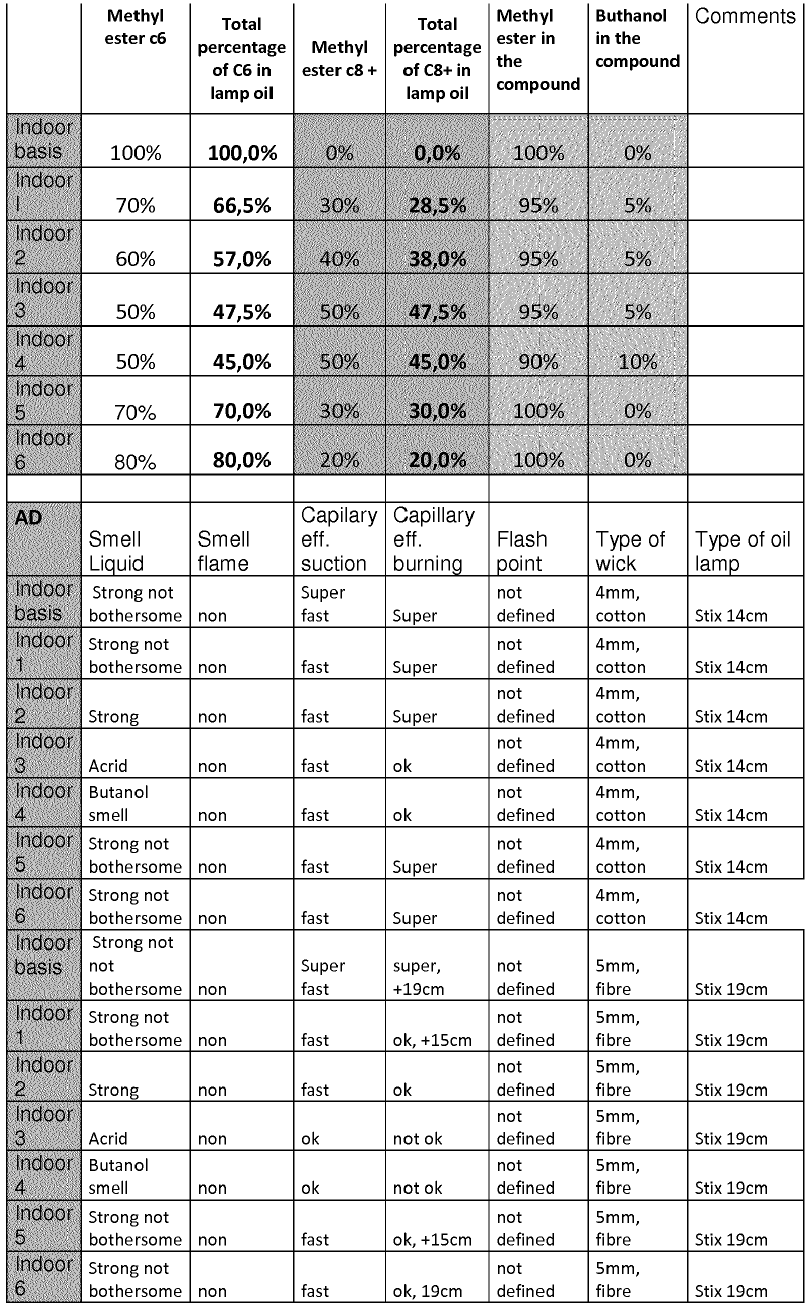

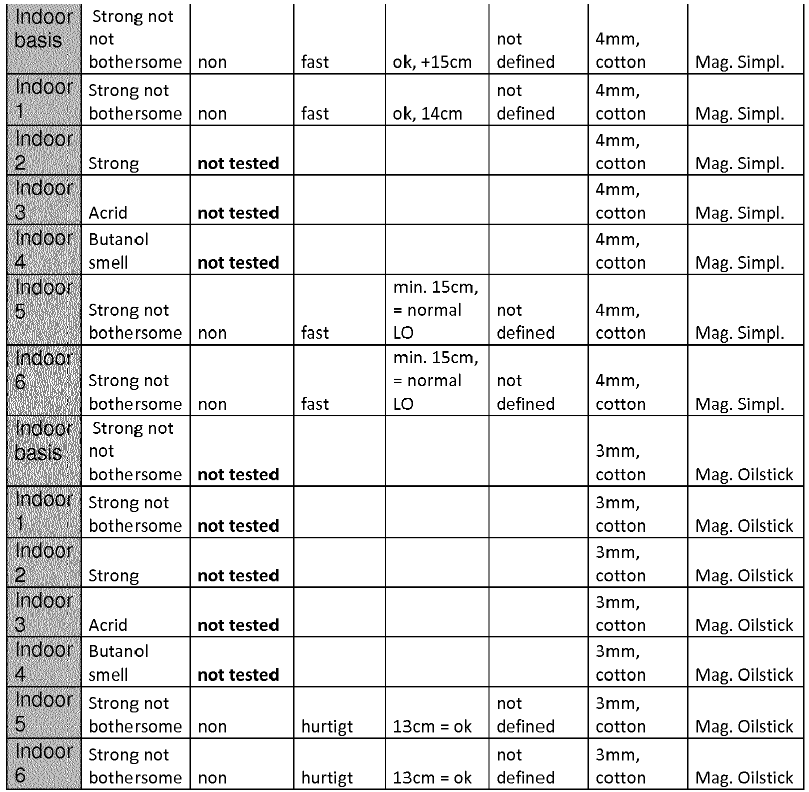

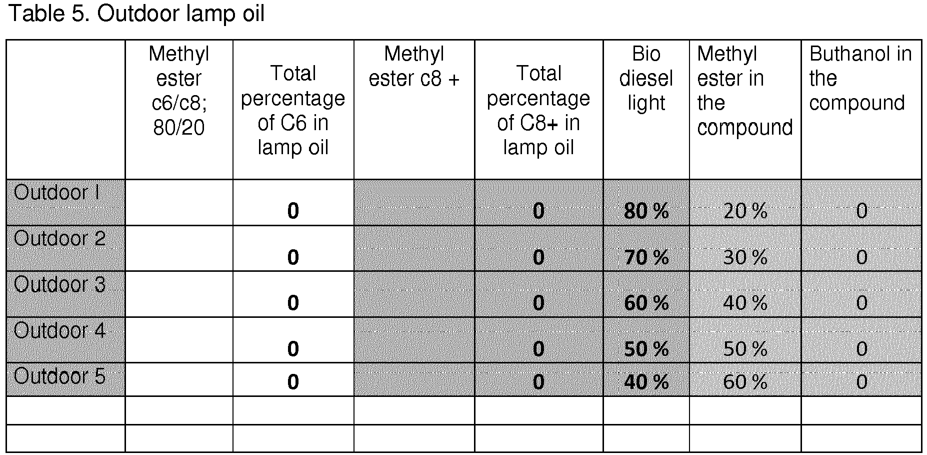

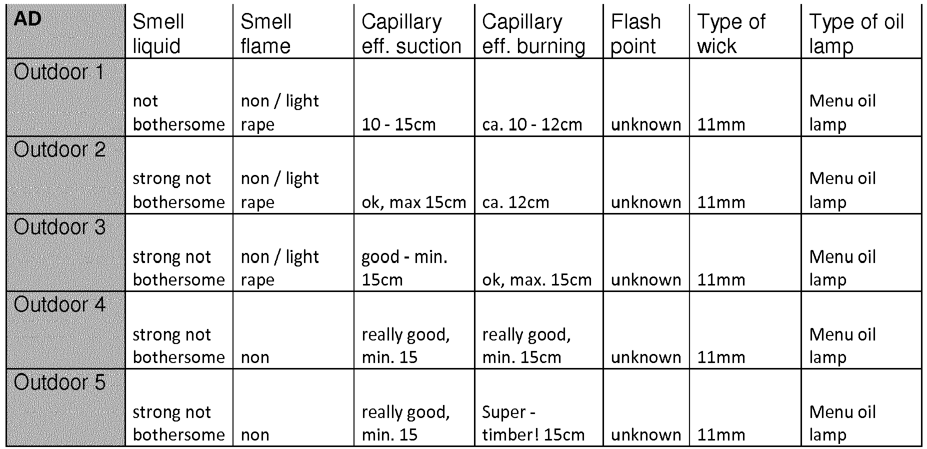

### Example 5

Test results for renewable and non-toxic lamp oil and lighter fuel.

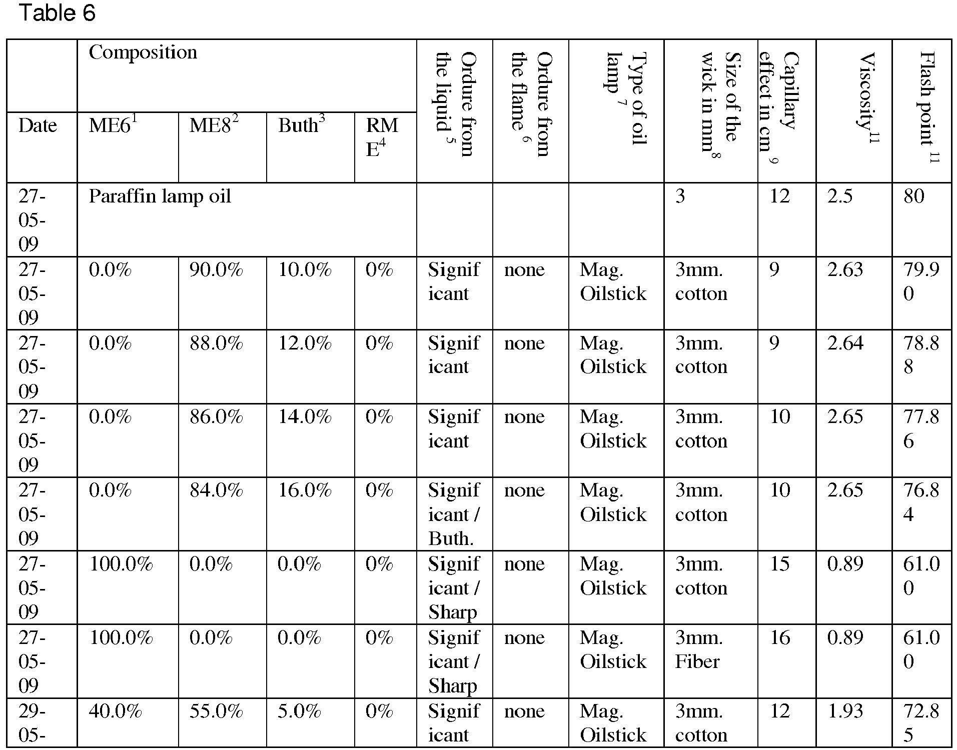

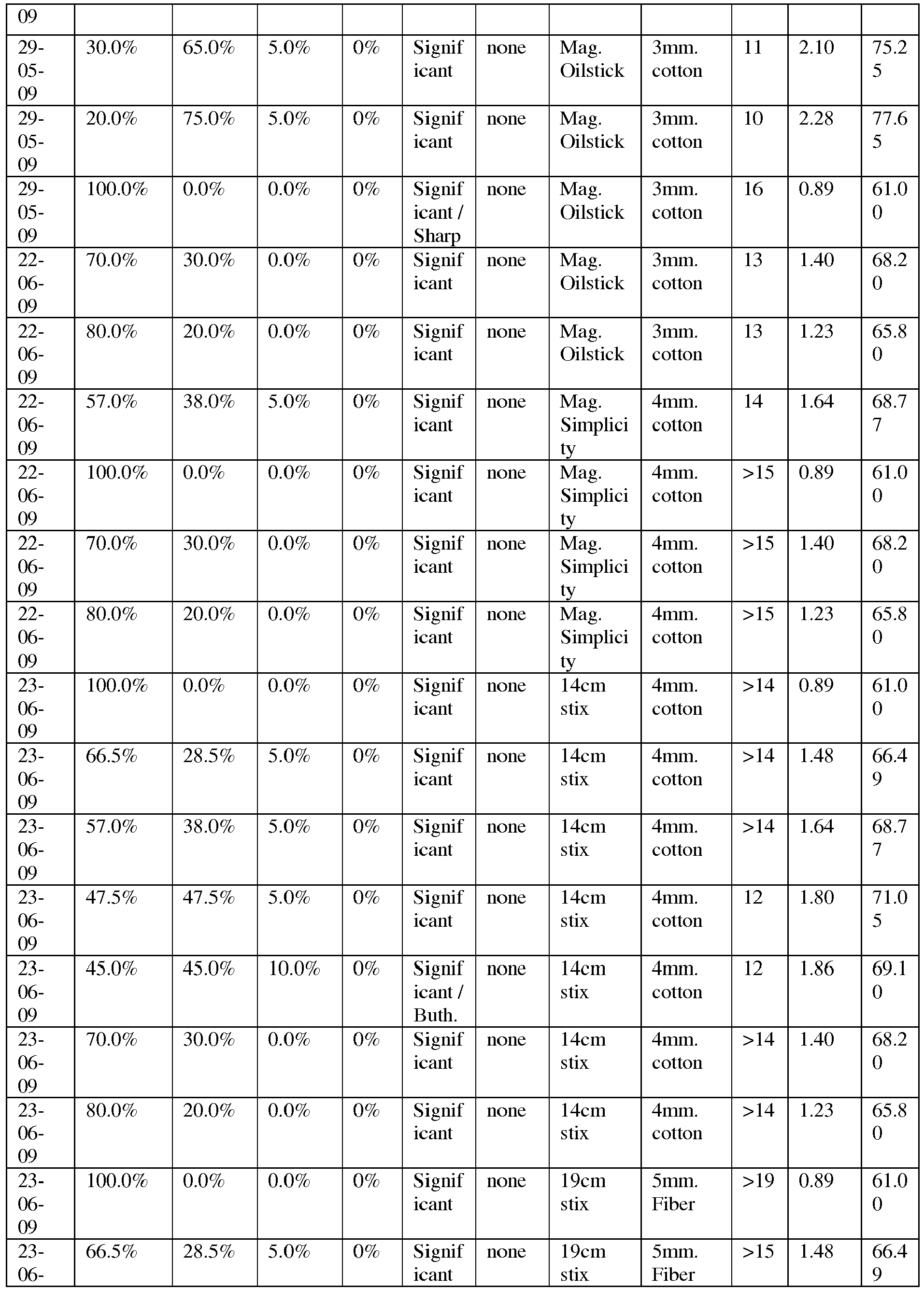

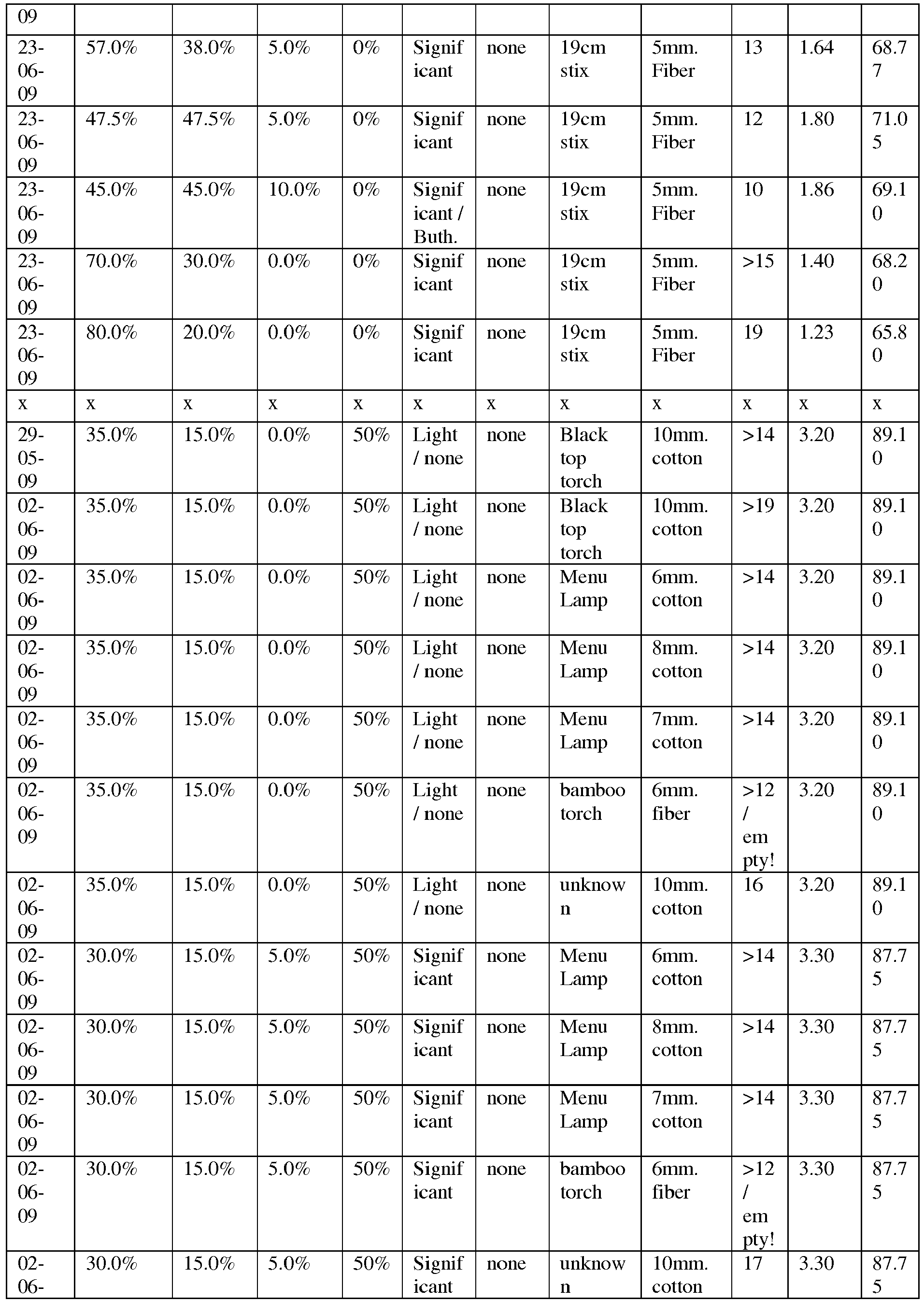

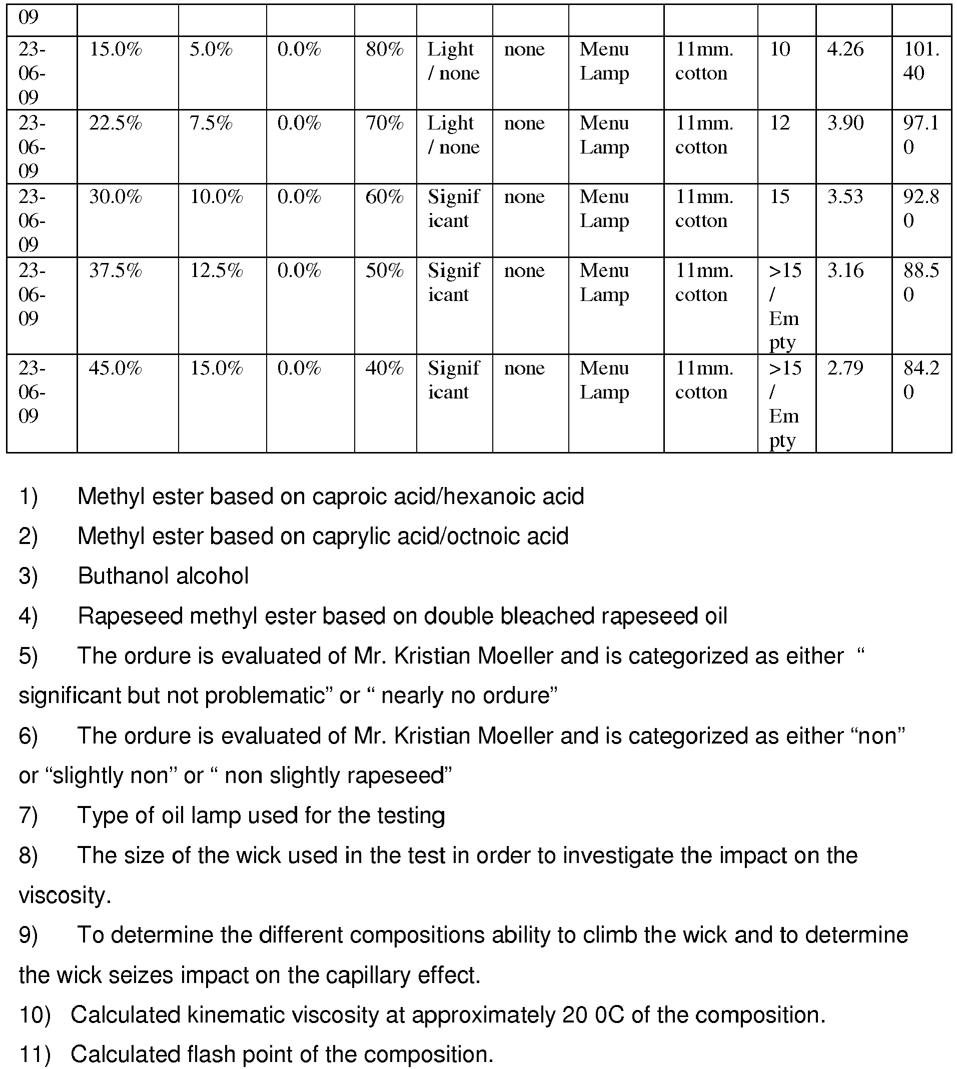

### Example 6

Processing of crude vegetable oils to double bleached vegetable oil, and generation of methyl ester from double bleached vegetable oil.

### Step I:

In a first step, the crude vegetable oil may be subject to Delecithination/desliming Delecithination/ desliming of crude vegetable oil.
0,1 - 0,4 % phosphorus acid (75 %) is added into 80 degrees celsius heated crude oil under constant stirring in 30 minutes. The lecithin/slime is separated by filtration. Optionally 0.5 % bleaching clay may be added to the crude oil in order to ease the process.

### Step II:

Double bleaching/extensive bleaching of the crude vegetable oil.
The oil is heated to 260 degrees Celsius and added 2 -3 % bleaching clay and stirred under vacuum in 30 minutes. After the process the bleaching clay is separated by filtration.

### Step III:

Esterification of the crude oil into a fatty acid alcohol.

### Ingredients

1 litre crude double bleached/extensively bleached vegetable oil
200 ml Methanol
3,5 gram NaOH
The lye (NaOH) is mixed with the methanol and the crude vegetable oil is added. The mixture is heated up to 55 degrees celsius under steering and the steering remains in 30 minutes.

The mixture is separating into the fatty acid alcohol and glycerol, and after 8 hours the glycerol is drained from the bottom. To clean out the remaining lye from the fatty acid alcohol, the double amount of 45 degrees celsius hot water, calculated by the volume of fatty acid alcohol, is sprayed on the surface in order to absorb the lye. After 8 hours the water is drained from the bottom.

### Example 7

Emission tests of three different lamp oils in two different lamp types.

In this example, the soot emission from three different lamp oils - one conventional paraffin-based lamp oil, and an outdoor and an indoor lamp oil of the present invention was measured in two different types of lamp. The purpose of the tests is to show the soot emission of lamps fuelled with a lamp oil of the present invention compared with a paraffin-based lamp oil. The soot production of the lamp oils is tested using a well-defined method to describe the resulting particle concentration and size distribution in the range 5-225 nm.

### Materials

The tested lamp oils are a lamp oil of the present invention for indoor use and outdoor use respectively, and a conventional paraffin-based lamp oil.

**Vegetable lamp oil (Agowa oil), methyl ester-based lamp oil, indoor**

| | Chain length of methyl ester | | | | | | |
|---|---|---|---|---|---|---|---|
| Agowa vegetable lamp oil, indoor | C-6 | C-8 | C-10 | C-12 | C-14 | C-16 | C-18 |
| | 1% | 39% | 30% | 22% | 7% | 2% | 0% |

| | | | | | | | |
|---|---|---|---|---|---|---|---|
| Flashpoint: 66 °C Viscosity at ambient temperature (22 °C): 2,2 cPs | | | | | | | |

**Vegetable lamp oil (Agowa oil), methyl ester-based lamp oil, outdoor**

| | Chain length of methyl ester | | | | | | |
|---|---|---|---|---|---|---|---|
| Agowa vegetable lamp oil, outdoor | C-6 | C-8 | C-10 | C-12 | C-14 | C-16 | C-18 |
| | 1% | 17% | 13% | 49% | 17% | 4% | 0% |

| | | | | | | | |
|---|---|---|---|---|---|---|---|
| Flashpoint: 72 °C Viscosity at ambient temperature (22 °C): 3,2 cPs | | | | | | | |

**Reference oil, n-paraffin-based lamp oil, indoor:**

| | |
|---|---|
| Molecular Structure: | |
| Name: | Alkanes, C10-14 |
| CAS Number: | 93924-07-3 93924-07-3 |
| Molecular Formula: | C₁₂H₂₆ |
| Molecular Weight: | 170.3348 |
| Density: | 0..751g/cm³ |
| Boiling Point: | 216.1°Cat760mmHg |
| Flash Point: | 71.1°C |

### Soot emission

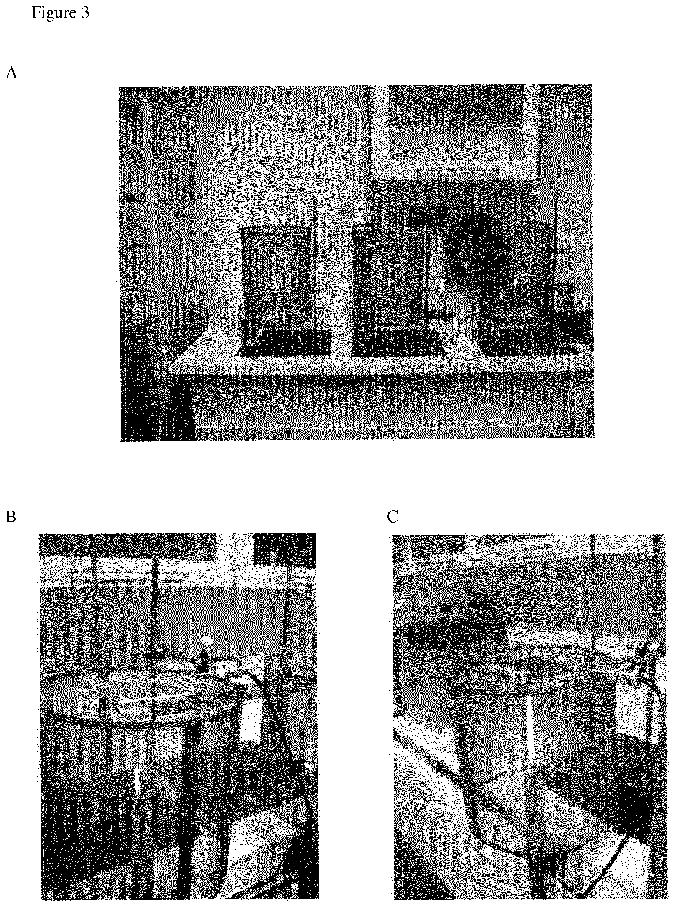

The lamp oil was tested according to the method contained in EN 15426:2007 Candles - Specification for sooting behaviour. The method was developed for the measurement of sooting (soot emission) from candles. The soot emitted during the burning of a lamp oil is collected on a glass plate over a defined burning period determined by the dimensions of the lamp. Subsequently the reduction of light intensity due to sooting is measured using a lux meter. An important element in the test is the height from the fuel to the collection plate which are both standardised. See also Figure 3.

### Measurement of particle concentration

Particle concentration and size distribution of particles in the range 5-225 nm were measurement with an SMPS (Scanning Mobility Particle Sizer) connected to a CPC (Condensation Particle Counter) - both instruments from TSI. The determination of size and concentration takes place by gathering particles at the same height over the flame as for the soot test. For all tests, the probe for the collection of sample air was mounted at the same distance from the glass plate as for the soot test. The measuring period was two minutes and determination of the particle concentration and size distribution was carried out three times for each set-up. This means that the results are an average of nine measurements for each lamp and oil type.

### Results

### Soot test

| **Brand** | **Individual soot index** | **Soot index/h** |
|---|---|---|
| Agowa inside 3 | **0.1** | |
| Agowa inside 2 | **0.07** | 0.07 Si/h |
| Agowa inside 1 | **0.03** | |
| Agowa outside 3 | **0.37** | |
| Agowa outside 2 | **0.53** | 0.6 Si/h |
| Agowa outside 1 | **0.8** | |
| Ref. oil paraffin oil inside 3 | **174*** | |
| Ref. oil paraffin oil inside 2 | **204*** | 189 Si/h |
| Ref. oil paraffin oil inside 1 | **1366** | |
| Ref. oil paraffin oil inside 3 | **1366** | |
| Ref. oil paraffin oil inside 2 | **1514** | 1427 Si/h |
| Ref. oil paraffin oil inside 1 | **1402** | |

| | | |
|---|---|---|
| * only two of the burnings are included in the soot index calculation as individual burnings vary greatly. | | |

According to the EN 15426:2007 standard Candles - Specification for sooting behaviour the average soot index on the tested candles may not exceed 1.0 Si/h. No individual candle may exceed 2.0 Si/h.

### Conclusion

The soot indices show that the vegetable lamp oils of the present invention (Agowa oil), both indoors and outdoors, do not give rise to any significant sooting whereas the reference lamp oil supplied by the client produces significant sooting. The present invention is thus a considerable improvement over conventional lamp oils in terms of soot emission. The total particle concentration released during use of Agowa indoor and outdoor lamp oil was significantly less (by more than a factor of 10) than during use of the reference paraffin-based lamp oil. Particles released when using the outdoor Agowa lamp oil were fewer than particles released during use of the reference lamp oil based on paraffin. Moreover, very small particles in the 5-20 nm range were released when using Agowa outdoor lamp oil compared to use of the reference paraffin-based lamp oil.

### Items

In specific embodiments, the present invention specifically relates to the items listed herein below.

### First set of items

1-1. A fuel composition comprising refined vegetable oil, and at least one fuel supporter.
1-2. The composition according to item 1-1, wherein said vegetable oil is selected from the group consisting of coconut, corn, cottonseed, olive, palm, peanut, rape, rapeseed, canola, safflower, sesame, soybean, jatropha and/or sunflower oils.
1-3. The composition according to item 1-1, wherein said vegetable oil is selected from the group consisting of sunflower oil, olive oil, rape oil soy bean oil and jatropha oil.
1-4. The composition according to item 1-1, wherein said vegetable oil is rape oil.
1-5. The composition according to any of the preceding items comprising 60-99% by weight refined vegetable oil and 1-40% by weight fuel supporter.
1-6. The composition according to any of the preceding items comprising 80-98% by weight refined vegetable oil and 2-20% by weight fuel supporter.
1-7. The composition according to any of the preceding items comprising 85-98% by weight refined vegetable oil and 2-15% by weight fuel supporter.
1-8. The composition according to any of the preceding items comprising 85-95% by weight refined vegetable oil and 5-15% by weight fuel supporter.
1-9. The composition according to any of the preceding items comprising 90-95% by weight refined vegetable oil and 5-10% by weight fuel supporter.
1-10. The composition according to any of the preceding items comprising 92.5% by weight refined vegetable oil and 7.5% by weight fuel supporter.
1-11. The composition according to any of the preceding items, wherein said at least one fuel supporter is an alcohol.
1-12. The composition according to any of the preceding items, wherein said at least one fuel supporter is selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate.
1-13. The composition according to item 1-11, wherein said alcohol is selected from the group consisting of ethanol, methanol and butanol.
1-14. The composition according to item 1-11, wherein said alcohol is butanol.
1-15. The composition according to any of the preceding items, wherein said vegetable oil is refined by removing a glycerol fraction of said vegetable oil by alkaline hydrolysis.
1-16. The composition according to item 1-15, wherein said alkaline hydrolysis is performed by addition of hydroxide ions.
1-17. The composition according to item 1-16, wherein said hydroxide ions are supplied in the form of potassium hydroxide (KOH) or sodium hydroxide (NaOH).
1-18. The composition according to any of the preceding items, wherein said refined vegetable oil comprises a fatty acid fraction of said vegetable oil
1-19. The composition according to item 1-18, wherein said refined vegetable oil further comprises a residual glycerol fraction of said vegetable oil.
1-20. The composition according to any of the preceding items, wherein the final concentration of glycerol by weight is less than 5%, such as less than 4%, for example less than 3%, such as less than 2, for example less than 1%, such as less than 0.5%, such as 0%.
1-21. The composition according to any of the preceding items, wherein the final concentration of glycerol is between 0 and 1%, such as between 0.25 and 0.75% by weight.
1-22. The composition according to any of the preceding items, wherein the final concentration of glycerol is 0.5% by weight.
1-23. The composition according to any of the preceding items comprising 60-99% by weight refined vegetable oil and 1-40% by weight butanol.
1-24. The composition according to any of the preceding items comprising 80-98% by weight refined vegetable oil and 2-20% by weight butanol.
1-25. The composition according to any of the preceding items comprising 85-98% by weight refined vegetable oil and 2-15% by weight butanol.
1-26. The composition according to any of the preceding items comprising 85-95% by weight refined vegetable oil and 5-15% by weight butanol.
1-27. The composition according to any of the preceding items comprising 90-95% by weight refined vegetable oil and 5-10% by weight butanol.
1-28. The composition according to any of the preceding items comprising 92.5% by weight refined vegetable oil and 7.5% by weight butanol.
1-29. The composition according to item 1-27, comprising a final concentration by weight of fatty acid of 92%, 0.5% of glycerol and 7.5% of butanol.
1-30. The composition according to item 1-1, further comprising an antioxidant.
1-31. The composition according to item 1-30, wherein said antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases.
1-32. The composition according to any of the preceding items, further comprising a coloring agent.
1-33. The composition according to item 1-32, wherein the coloring agent is selected from the group consisting of a lithium salt or strontiumsalt, boric acid, borax sodiumsalt, barium salt, calcium salt, copper salt, potassium salt, cerium salt, cesium salt, and nitromethane.
1-34. The composition according to any of the preceding items, further comprising a fragrance.
1-35. A lamp fuel composition comprising a composition as defined in any of the preceding items.
1-36. A composition as defined in any of the preceding items for use as a lamp fuel, a fuel for heating or for kindling.
1-37. A method for producing a fuel composition, such as a lamp fuel, said method comprising the steps of:
   a. providing a mixture of an alcohol and hydroxide ions,
   b. heating a vegetable oil,
   c. adding said mixture of step a. to the heated vegetable oil of step b,
   d. stirring the components of step c in order to mix the heated vegetable oil with the alcohol and hydroxide ion mixture,
   e. heating the mixture components of step d, and
   f. separating a refined vegetable oil comprising a fatty acid fraction from a glycerol fraction.
1-38. The method according to item 1-37, wherein said alcohol is ethanol, methanol or butanol.
1-39. The method according to any of items 1-37 to 1-38, wherein said mixture in step b. or step e. is heated to at least 50 degrees Celsius, such as between 55 and 65 degrees Celsius, preferably 60 degrees Celsius.
1-40. The method according to any of items 1-37 to 1-39, wherein said vegetable oil is as defined in any of items 1-2 to 1-4.
1-41. The method according to any of items 1-37 to 1-39, wherein said hydroxide ions are supplied in the form of potassium hydroxide (KOH) or sodium hydroxide (NaOH).
1-42. The method according to any of items 1-37 to 1-41 comprising the further step of adding at least one fuel supporter.
1-43. The method according to item 1-42, wherein said fuel supporter is as defined in any of items 1-11 to 1-14.
1-44. The method according to any of items 1-37 to 1-43, wherein the final concentration of glycerol by weight is as defined in any of items 1-20 to 1-22.
1-45. The method according to any of items 1-37 to 1-44, wherein the relative amount of refined vegetable oil and/or fuel supporter is as defined in any of items 1-4 to 1-10.
1-46. The method according to any of items 1-37 to 1-45, comprising the further step of adding at least one antioxidant.
1-47. The method according to any of items 1-37 to 1-46, wherein said mixture of vegetable oil and hydroxide ions are provided by mixing 1 litre of vegetable oil and 1-5 grams of potassium hydroxide (KOH) or sodium hydroxide (NaOH).
1-48. The method according to item 1-47, wherein 70-200 ml ethanol, methanol or butanol is added to said refined vegetable oil comprising a fatty acid fraction and separating an alcohol fraction from a fatty acid fraction
1-49. The method according to item 1-48, wherein said fatty acid fraction is mixed with butanol to a final concentration of butanol of 2-15% by weight.
1-50. The method according to any of items 1-37 to 1-49, wherein said fuel composition is a lamp fuel composition.

### Second set of items

2-1. A fuel composition comprising
   a. a base formulation of one or more alkyl esters of a C2-C12 carboxylic acid or mixtures thereof, and/or
   b. one or more alkyl esters of a vegetable oil.
2-2. The composition according to item 2-1, wherein said base formulation comprises one or more alkyl esters of a C6-C10 carboxylic acid.
2-3. The composition according to any of the preceding items, wherein said base formulation comprises one or more alkyl esters of a C6-C8 carboxylic acid.
2-4. The composition according to any of the preceding items, wherein said one or more alkyl esters of a C6-C8 carboxylic acid is an alkyl hexate or an alkyl octanate or a mixture thereof.
2-5. The composition according to any of the preceding items, wherein said base formulation comprises between 50-100 % by weight of said alkyl hexate and between 0-50 % by weight of said alkyl octanate.
2-6. The composition according to any of the preceding items, wherein said alkyl ester is selected from the group consisting of methyl ester, ethyl ester, propyl ester, buthanyl ester and mixtures thereof.
2-7. The composition according to any of the preceding items, wherein said alkyl ester is selected from the group consisting of methyl ester, ethyl ester, and mixtures thereof.
2-8. The composition according to any of the preceding items, further comprising an alcohol.
2-9. The composition according to item 2-8 wherein said alcohol comprises one to six carbon atoms.
2-10. The composition according to item 2-9, wherein said alcohol is selected from the group consisting of methanol, ethanol, propanol, butanol, pentanol, hexanol, and mixtures thereof.
2-11. The composition according to item 2-10, wherein said alcohol is butanol.
2-12. The composition according to any of the preceding items comprising between 0.5 and 5 % by weight butanol.
2-13. The composition according to any of the preceding items, wherein said base formulation comprises alkyl ester selected from the group consisting of methyl hexate, methyl octanate and mixtures thereof.
2-14. The composition according to item 2-13, wherein said base formulation comprises between 50-100 % by weight of said methyl hexate and between 0-50 % by weight of said methyl octanate.
2-15. The composition according to any of the preceding items, wherein said base formulation consists substantially of methyl hexate.
2-16. The composition according to any of the preceding items, wherein said base formulation comprises between 68-72 % by weight methyl hexate and between 28-32 % by weight methyl octanate.
2-17. The composition according to any of the preceding items, wherein said base formulation comprises between 58-62 % by weight methyl hexate and between 38-42 % by weight methyl octanate.
2-18. The composition according to any of the preceding items, wherein said base formulation comprises between 48-52 % by weight methyl hexate and between 48-52 % by weight methyl octanate.
2-19. The composition according to any of the preceding items, comprising between 90-100 % by weight of said base formulation and between 0-10 % by weight butanol.
2-20. The composition according to any of the preceding items, comprising between 98-100 % by weight of said base formulation and between 0-2 % by weight butanol.
2-21. The composition according to any of the preceding items, comprising 98.9-99.1 % by weight of said base formulation and 0.9-1.1 % by weight butanol.
2-22. The composition according to any of the preceding items, wherein said carboxylic acid is obtained from a vegetable oil.
2-23. The composition according to any of the preceding items, further comprising a refined vegetable oil and/or a refined transesterified or esterified vegetable oil.
2-24. The composition according to item 2-23, wherein said vegetable oil and/or a refined transesterified or esterified vegetable oil has been refined by isolation of carboxylic acids, desliming/delicithination, fractionation, distlliation, and/or bleaching.
2-25. The composition according to item 2-24, wherein said vegetable oil and/or a refined transesterified or esterified vegetable oil has been refined by extensive bleaching/double bleaching.
2-26. The composition according to any one of items 2-23 to 2-25, wherein said refined vegetable oil and/or a refined transesterified or esterified vegetable oil has been refined by extensive bleaching comprising the steps of
   a. heating the vegetable oil to 220-300 degrees Celsius,
   b. adding 1 -10 % bleaching clay,
   c. stirring optionally under vacuum in at least 15 minutes, and
   d. separation of the bleaching clay and refined vegetable oil by filtration.
2-27. The composition according to any one of items 2-23 to 2-26, comprising between 0-100 % by weight of said refined vegetable oil and/or a refined transesterified or esterified vegetable oil.
2-28. The composition according to any of the preceding items comprising between 50 and 70 % by weight of said base formulation and between 30 and 50% by weight of said one or more refined vegetable oil and/or a refined transesterified or esterified vegetable oil.
2-29. The composition according to any of the preceding items, wherein said refined vegetable oil and/or a refined transesterified or esterified vegetable oil is based on a rapeseed oil.
2-30. The composition according to item 2-29, wherein said rapeseed oil based vegetable oil and/or transesterified or esterified vegetable oil is extensively bleached. 2-31. The composition according to any of the preceding items, wherein said vegetable oil is selected from the group consisting of coconut, corn, cottonseed, olive, palm, peanut, rape, rapeseed, canola, safflower, sesame, soybean, jatropha and/or sunflower oils.
2-32. The composition according to any of the preceding items, wherein said vegetable oil is selected from the group consisting of sunflower oil, olive oil, rape oil soy bean oil and jatropha oil.
2-33. The composition according to item 2-32, wherein said vegetable oil is rape oil or rapeseed oil.
2-34. The composition according to any of the preceding items, wherein said at least one alcohol is selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate.
2-35. The composition according to any of the preceding items, wherein said alcohol is selected from the group consisting of ethanol, methanol and butanol.
2-36. The composition according to any of the preceding items, wherein said alcohol is butanol.
2-37. The composition according to any of the preceding items, wherein the final concentration of glycerol by weight is less than 5%, such as less than 4%, for example less than 3%, such as less than 2, for example less than 1%, such as less than 0.5%, such as 0%.
2-38. The composition according to any of the preceding items, wherein the final concentration of glycerol is between 0 and 1%, such as between 0.25 and 0.75% by weight.
2-39. The composition according to any of the preceding items, wherein the final concentration of glycerol is 0.5% by weight.
2-40. The composition according to any of the preceding items comprising 60-99% by weight refined vegetable oil and 1-40% by weight butanol.
2-41. The composition according to any of the preceding items comprising 80-98% by weight refined vegetable oil and 2-20% by weight butanol.
2-42. The composition according to any of the preceding items comprising 85-98% by weight refined vegetable oil and 2-15% by weight butanol.
2-43. The composition according to any of the preceding items comprising 85-95% by weight refined vegetable oil and 5-15% by weight butanol.
2-44. The composition according to any of the preceding items comprising 90-95% by weight refined vegetable oil and 5-10% by weight butanol.
2-45. The composition according to any of the preceding items comprising 92.5% by weight refined vegetable oil and 7.5% by weight butanol.
2-46. The composition according to 2-44, comprising a final concentration by weight of fatty acid of 92%, 0.5% of glycerol and 7.5% of butanol.
2-47. The composition according to any of the preceding items, further comprising an antioxidant.
2-48. The composition according to item 2-47, wherein said antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases.
2-49. The composition according to any of the preceding items, further comprising a coloring agent.
2-50. The composition according to item 2-49, wherein the coloring agent is selected from the group consisting of a lithium salt or strontiumsalt, boric acid, borax sodiumsalt, barium salt, calcium salt, copper salt, potassium salt, cerium salt, cesium salt, and nitromethane.
2-51. The composition according to any of the preceding items, further comprising a fragrance.
2-52. A lamp fuel composition comprising a composition as defined in any of the preceding items.
2-53. Use of a composition as defined in any of the preceding items for the preparation of a lamp fuel, heating fuel, fuel for cooking and/or cooling fuel.
2-54. A composition as defined in any of the preceding items 2-1 to 2-52 for use as a lamp fuel, lighter fluid, and/or heating fuel.
2-55. A method for producing a fuel composition, such as a lamp fuel, said method comprising the steps of:
   a. providing a vegetable oil,
   b. preparing an alkyl ester of carboxylic acids comprised in said vegetable oil.
2-56. The method according to item 2-55, wherein said vegetable oil is refined as defined in any one of items 2-24 to 2-26.
2-57. The method according to any of items 2-55 to 2-56, wherein said alkyl ester is selected from the group consisting of methyl ester, ethyl ester, and mixtures thereof.
2-58. The method according to any of items 2-55 to 2-57, wherein one or more specific alkyl esters are purified from said vegetable oil by distillation and/or fractionation.
2-59. The method according to any of items 2-55 to 2-58 comprising the additional step of adding at least one alcohol.
2-60. The method according to item 2-59, wherein said alcohol is as defined in any of items 2-34 to 2-36.
2-61. The method according to any of items 2-55 to 2-60, wherein the relative amount of refined vegetable oil and/or fuel supporter is as defined in any of the preceding items.
2-62. The method according to any of items 2-55 to 2-61, comprising the additional step of adding at least one antioxidant.
2-63. The method according to any of items 2-55 to 2-62, wherein said fuel composition is a lamp fuel composition.

### Third set of items

3-1 A fuel composition comprising a base formulation of one or more alkyl esters of a C6-C16 carboxylic acid or mixtures thereof.
3-2 The composition according to item 3-1, said composition comprising at least 80% by weight of a base formulation of one or more alkyl esters of a C6-C16 carboxylic acid or mixtures thereof
3-3 The composition according to any of the preceding items, wherein said composition comprises at least 80%, such as at least 90% by weight of one or more alkyl esters of C8-C14 carboxylic acids.
3-4 The composition according to any of the preceding items, said composition comprising at least 90% by weight of one or more alkyl esters of C8-C14 carboxylic acids.
3-5 The composition according to any of the preceding items, said composition comprising at least 90% by weight of one or more alkyl esters of C8-C14 carboxylic acids.
3-6 The composition according to any of the preceding items, said composition comprising at least 70% by weight of one or more alkyl esters of C8-C12 carboxylic acids.
3-7 The composition according to any of the preceding items, said composition comprising at least 70% by weight of one or more alkyl esters of C10-C14 carboxylic acids.
3-8 The composition according to any of the preceding items, said composition comprising at least 60% by weight of one or more alkyl esters of C8-C10 carboxylic acids.
3-9 The composition according to any of the preceding items, said composition comprising less than 5% by weight of any alkyl ester of a C6 or any lower chain order carboxylic acid.
3-10 The composition according to any of the preceding items, said composition comprising less than 5% by weight of any alkyl ester of a C18 or any higher chain order carboxylic acid.
3-11 The composition according to any of the preceding items, said composition comprising less than 5% by weight of any alkyl ester of a C16 or any higher chain order carboxylic acid.
3-12 The composition according to any of the preceding items, said composition comprising one or more alkyl esters of C8-C10, C8-C12, C10-C12, C10-C14 or C12-C14 carboxylic acids.
3-13 The composition according to items 3-12, said composition comprising by weight 10-80% C8 alkyl esters, 10-80% C10 alkyl esters, 10-70% C12 alkyl esters, and/or 0-40% C14 alkyl esters.
3-14 The composition according to items 3-12, said composition comprising by weight 35-45% C8 alkyl esters, 25-35% C10 alkyl esters, 15-25% C12 alkyl esters, and/or 5-15% C14 alkyl esters.
3-15 The composition according to items 3-12, said composition comprising by weight 15-25% C8 alkyl esters, 10-20% C10 alkyl esters, 45-55% C12 alkyl esters, and/or 15-25% C14 alkyl esters.
3-16 The composition according to any of the preceding items, wherein at least 80% of the alkyl esters are fully saturated.
3-17 The composition according to any of the preceding items, wherein said composition has a melting point of less than 0 °C
3-18 The composition according to any of the preceding items, wherein said composition is liquid in the temperature range from 0-60 °C
3-19 The composition according to any of the preceding items, wherein said composition has a viscosity, which is less than 10 cPoise (cP), such as less than 5 cP, such as less than 4 cP, for example less than 3 cP, such as less than 2.5 cP, for example less than 2 cP, such as less than 1.5 cP, for example less than 1 cP.
3-20 The composition according to any of the preceding items, wherein said composition has a viscosity, which is between 5 and 0 cP, for example between 4 and 1 cP, such as between 3 and 1.5 cP, such as between 2.5 and 1.cP.
3-21 The composition according to any of the preceding items, wherein said alkyl ester is selected from the group consisting of methyl ester, ethyl ester, propyl ester, buthanyl ester and mixtures thereof.
3-22 The composition according to any of the preceding items, wherein said alkyl ester is selected from the group consisting of methyl ester, ethyl ester, and mixtures thereof.
3-23 The composition according to any of the preceding items, wherein said alkyl ester is a methyl ester.
3-24 The composition according to any of the preceding items, wherein said alkyl ester is methyl octanate, methyl decanoate, methyl dodecanoate, methyl tetradecanoate and/or mixtures thereof.
3-25 The composition according to any of the preceding items, further comprising an alcohol.
3-26 The composition according to preceding item 3-24 comprising between 0.5 and 5 % by weight alcohol.
3-27 The composition according to any of items 3-24 and 3-26, wherein said alcohol comprises one to six carbon atoms.
3-28 The composition according to item 3-27, wherein said alcohol is selected from the group consisting of methanol, ethanol, propanol, butanol, pentanol, hexanol, and mixtures thereof.
3-29 The composition according to item 3-28, wherein said alcohol is methanol, ethanol, propanol and/or butanol.
3-30 The composition according to any of the preceding items, wherein said at least one alcohol is selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate.
3-31 The composition according to any of the preceding items, wherein said alcohol is selected from the group consisting of ethanol, methanol and butanol.
3-32 The composition according to any of the preceding items, further comprising an antioxidant.
3-33 The composition according to item 3-32, wherein said antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases.
3-34 The composition according to any of the preceding items, further comprising a coloring agent.
3-35 The composition according to item 3-34, wherein the coloring agent is selected from the group consisting of a lithium salt or strontiumsalt, boric acid, borax sodiumsalt, barium salt, calcium salt, copper salt, potassium salt, cerium salt, cesium salt, and nitromethane.
3-36 The composition according to any of the preceding items, further comprising a fragrance.
3-37 A method for producing a fuel composition as defined in any of the preceding items 3-1 to Fejl! Henvisningskilde ikke fundet., said method comprising the steps of:
   a) providing a vegetable oil,
   b) preparing alkyl esters of carboxylic acids comprised in said vegetable oil by esterification and/or transesterification
   c) optionally isolating one or more of said alkyl esters of said carboxylic acids,
   wherein said alkyl esters of carboxylic acids comprised in said vegetable oil and/or said one or more isolated alkyl esters constitute said fuel composition.
3-38 The method according to item 3-37, wherein said isolation of said one or more alkyl esters of a carboxylic acid is obtained by fractionation and/or distillation.
3-39 The method according to any of items 3-37 to 3-38, further comprising refining said vegetable oil and/or alkyl esters by desliming/delicithination, fractionation, distillation, and/or bleaching.
3-40 The method according to any of items 3-37 to 3-39, comprising the further step of extensive bleaching of the fuel composition.
3-41 The method according to item 3-40, wherein said extensive bleaching comprising the steps of
   a) heating the vegetable oil to 220-300 degrees Celsius,
   b) adding 1 -10 % bleaching clay,
   c) stirring optionally under vacuum in at least 15 minutes, and
   d) separation of the bleaching clay and refined vegetable oil by filtration.
3-42 The method according to any of items 3-37 to 3-41, wherein said alkyl ester is selected from the group consisting of methyl ester, ethyl ester, and mixtures thereof.
3-43 The method according to any of items 3-37 to 3-42, further comprising removing C6 carboxylic acids and/or derivatives thereof from said fuel composition.
3-44 The method according to any of items 3-37 to 3-43, further comprising removing C16 and any higher order carboxylic acids and/or derivatives thereof from said fuel composition.
3-45 The method according to any of items 3-37 to 3-44, wherein said one or more isolated alkyl esters are one or more alkyl esters of C8 - C14 carboxylic acids.
3-46 The method according to item 3-45, wherein said one or more isolated alkyl esters are one or more alkyl esters of C8-C10, C8-C12, C10-C12, C10-C14 or C12-C14 carboxylic acids.
3-47 The method according to any of items 3-37 to 3-44, wherein said one or more isolated alkyl esters have been isolated to the extent that the fuel composition comprises by weight 10-80% C8 alkyl esters, 10-80% C10 alkyl esters, 10-70% C12 alkyl esters, and/or 0-40% C14 alkyl esters.
3-48 The method according to any of items 3-37 to 3-47, wherein said one or more isolated alkyl esters have been isolated to the extent that the fuel composition comprises by weight 35-45% C8 alkyl esters, 25-35% C10 alkyl esters, 15-25% C12 alkyl esters, and/or 5-15% C14 alkyl esters.
3-49 The method according to any of items 3-37 to 3-47, wherein said one or more isolated alkyl esters have been isolated to the extent that the fuel composition comprises by weight 15-25% C8 alkyl esters, 10-20% C10 alkyl esters, 45-55% C12 alkyl esters, and/or 15-25% C14 alkyl esters.
3-50 The method according to any of items 3-37 to 3-49 comprising the additional step of adding at least one alcohol.
3-51 The method according to item 3-50, wherein said alcohol is as defined in any of items 3-25 to 3-31.
3-52 The method according to any of items 3-37 to 3-51, wherein the alkyl esters and the relative amount of alkyl ester in the composition is as defined in any of the preceding items.
3-53 The method according to any of items 3-37 to 3-52, comprising the additional step of adding at least one antioxidant.
3-54 The method according to any of items 3-37 to 3-53, wherein said vegetable oil is selected from the group consisting of coconut, corn, cottonseed, olive, palm, peanut, rape, rapeseed, canola, safflower, sesame, soybean, jatropha and/or sunflower oils.
3-55 The method according to any of items 3-37 to 3-54, wherein said vegetable oil is selected from the group consisting of sunflower oil, olive oil, rape oil soy bean oil and jatropha oil.
3-56 The method according to any of items 3-37 to 3-55, wherein said vegetable oil is a rapeseed oil.
3-57 A lamp fuel composition, said lamp fuel composition comprising a fuel composition as defined in any of items 3-1 to 3-36, and/or a fuel composition prepared by a method as defined in any of items 3-37 to 3-56.
3-58 Use of a fuel composition as defined in any of items 3-1 to 3-36, and/or a fuel composition prepared by a method as defined in any of items 3-37 to 3-56, as a lamp fuel, lighter fluid, and/or heating fuel.
3-59 The use according to item 3-58 of a fuel composition as defined in item 3-14 as an indoor lamp fuel.
3-60 The use according to item 3-58 of a fuel composition as defined in item 3-15 as an outdoor lamp fuel.
3-61 Use of a fuel composition as defined in any of items 3-1 to 3-36, and/or a fuel composition prepared by a method as defined in any of items 3-37 to 3-56 for the preparation of a lamp fuel, heating fuel, fuel for cooking and/or cooling fuel.

### Further embodiments

1. Use of a composition comprising a base formulation of one or more alkyl esters of a C₆-C₁₆ carboxylic acid or mixtures thereof as a fuel composition.
2. The use according to embodiment 1 of a composition comprising at least 80% by weight of one or more alkyl esters of a C₆-C₁₆ carboxylic acid or mixtures thereof as a lamp fuel.
3. The use according to any of the preceding embodiments, wherein said fuel composition is used as a lighter fluid, heating fuel, fuel for cooking and/or cooling fuel.
4. The use according to any of the preceding embodiments, wherein said composition comprises at least 80% by weight of one or more alkyl esters of C₈-C₁₄ carboxylic acids.
5. The use according to any of the preceding embodiments, wherein said composition comprises at least 70% by weight of one or more alkyl esters of C₈-C₁₂ carboxylic acids.
6. The use according to any of the preceding embodiments, wherein said composition comprises at least 60% by weight of one or more alkyl esters of C₈-C₁₀ carboxylic acids.
7. The use according to any of the preceding embodiments, wherein said composition comprises at least 70% by weight of one or more alkyl esters of C₁₀-C₁₄ carboxylic acids.
8. The use according to any of the preceding embodiments, wherein said composition comprises at least 40% by weight of one or more alkyl esters of C₁₀-C₁₂ carboxylic acids.
9. The use according to any of the preceding embodiments, wherein said composition comprises less than 5% by weight of any alkyl ester of a C₆ or any lower chain order carboxylic acid.
10. The use according to any of the preceding embodiments, wherein said composition comprises less than 5% by weight of any alkyl ester of a C₁₈ or any higher chain order carboxylic acid.
11. The use according to any of the preceding embodiments, wherein said composition comprises less than 5% by weight of any alkyl ester of a C₁₆ or any higher chain order carboxylic acid.
12. The use according to any of the preceding embodiments, wherein said composition comprises one or more alkyl esters of C₈-C₁₀, C₈-C₁₂, C₁₀-C₁₂, C₁₀-C₁₄ or C₁₂-C₁₄ carboxylic acids.
13. The composition according to embodiments 12, wherein said composition comprises by weight 10-80% C₈ alkyl esters, 10-80% C₁₀ alkyl esters, 10-70% C₁₂ alkyl esters, and/or 0-40% C₁₄ alkyl esters.
14. The composition according to embodiments 12, wherein said composition comprises by weight 35-45% C₈ alkyl esters, 25-35% C₁₀ alkyl esters, 15-25% C₁₂ alkyl esters, and/or 5-15% C₁₄ alkyl esters.
15. The composition according to embodiments 12, wherein said composition comprises by weight 15-25% C₈ alkyl esters, 10-20% C₁₀ alkyl esters, 45-55% C₁₂ alkyl esters, and/or 15-25% C₁₄ alkyl esters.
16. The use according to any of the preceding embodiments, wherein at least 80% of the alkyl esters are fully saturated.
17. The use according to any of the preceding embodiments, wherein said composition has a melting point of less than 0 °C
18. The use according to any of the preceding embodiments, wherein said composition is liquid in the temperature range from 0-60 °C
19. The use according to any of the preceding embodiments, wherein said composition has a viscosity at 22 °C, which is less than 10 cPoise (cP), such as less than 5 cP, such as less than 4 cP, for example less than 3 cP, such as less than 2.5 cP, for example less than 2 cP, such as less than 1.5 cP, for example less than 1 cP.
20. The use according to any of the preceding embodiments, wherein said composition has a viscosity at 22°C, which is between 5 and 0 cP, for example between 4 and 1 cP, such as between 3 and 1.5 cP, such as between 2.5 and 1.cP.
21. The use according to any of the preceding embodiments, wherein said composition has a surface tension at 40°C, which is below 25 mN/m, such as between 25 and 0 mN/m, for example between 25 and 10 mN/m, or between 10 and 0 mN/m.
22. The use according to any of the preceding embodiments, wherein said composition has a surface tension at 20°C, which is below 100 mN/m, such as below 75 mN/m, such as below 50 mN/m, such as below 25 mN/m, or between 100 and 0 mN/m, for example between 75 and 25 mN/m, or between 60 and 25 mN/m.
23. The use according to any of the preceding embodiments, wherein said alkyl ester is selected from the group consisting of methyl ester, ethyl ester, propyl ester, buthanyl ester and mixtures thereof.
24. The use according to any of the preceding embodiments, wherein said alkyl ester is selected from the group consisting of methyl ester, ethyl ester, and mixtures thereof.
25. The use according to any of the preceding embodiments, wherein said alkyl ester is a methyl ester.
26. The use according to any of the preceding embodiments, wherein said alkyl ester is methyl octanate, methyl decanoate, methyl dodecanoate, methyl tetradecanoate and/or mixtures thereof.
27. The use according to any of the preceding embodiments, wherein said composition further comprises an alcohol.
28. The use according to embodiment 27, wherein said composition comprises between 0.5 and 5 % by weight alcohol.
29. The use according to any of embodiments 26 to 28, wherein said at least one alcohol is selected independently from the group consisting of alcohols such as dichloromethane, butyl acetate, acetone, acetonitrile, ethyl acetate, methanol, ethanol, propyl alcohol, isopropyl alcohol, butyl alcohol (butanol), isobutyl alcohol, sec-butyl alcohol, tert-butyl alcohol, pentyl alcohol, hexyl alcohol, heptyl alcohol, octyl alcohol, nonyl alcohol, decyl alcohol, allyl alcohol, cyclopentanol, cyclohexanol, benzyl alcohol and the like; and glycols such as propylene glycol, ethylene glycol, dipropylene glycol, glycerol, diethylene glycol, tri-ethylene glycol, trimethylene glycol, hexylene glycol, butylenes glycol, 1,3-butanediol, thiodiethylene glycol, ammonium thioglycolate, cefatrizine glycol, polypropylene glycol, propylene glycol alginate; dichloromethane, butyl acetate, acetone, acetonitrile, and ethyl acetate.
30. The use according to any of embodiments 26 to 28, wherein said alcohol comprises one to six carbon atoms.
31. The use according to embodiment 30, wherein said alcohol is selected from the group consisting of methanol, ethanol, propanol, butanol, pentanol, hexanol, and mixtures thereof.
32. The use according to embodiment 31, wherein said alcohol is methanol, ethanol, propanol and/or butanol.
33. The use according to any of the preceding embodiments 26 to 31, wherein said alcohol is ethanol, methanol and/or butanol.
34. The use according to any of the preceding embodiments, wherein said composition further comprises an antioxidant.
35. The use according to embodiment 34, wherein said antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases.
36. The use according to any of the preceding embodiments, further comprising a coloring agent.
37. The use according to embodiment 36, wherein the coloring agent is selected from the group consisting of a lithium salt or strontiumsalt, boric acid, borax sodiumsalt, barium salt, calcium salt, copper salt, potassium salt, cerium salt, cesium salt, and nitromethane.
38. The use according to any of the preceding embodiments, wherein said composition further comprises a fragrance.
39. The use according to any of the preceding embodiments of a composition comprising by weight 35-45% C₈ alkyl esters, 25-35% C₁₀ alkyl esters, 15-25% C₁₂ alkyl esters, and/or 5-15% C₁₄ alkyl esters as an indoor lamp fuel.
40. The use according to any of the preceding embodiments of a composition comprising by weight 15-25% C₈ alkyl esters, 10-20% C₁₀ alkyl esters, 45-55% C₁₂ alkyl esters, and/or 15-25% C₁₄ alkyl esters as an outdoor lamp fuel.
41. A method for producing a fuel composition comprising the steps of:
   a. providing a vegetable oil,
   b. preparing alkyl esters of carboxylic acids comprised in said vegetable oil by esterification and/or transesterification
   c. optionally isolating one or more of said alkyl esters of said carboxylic acids,
   wherein said alkyl esters of carboxylic acids comprised in said vegetable oil and/or said one or more isolated alkyl esters constitute said fuel composition.
42. The method according to embodiment 41, wherein said isolation of said one or more alkyl esters of a carboxylic acid is obtained by fractionation and/or distillation.
43. The method according to any of embodiments 41 to 42, further comprising refining said vegetable oil and/or alkyl esters by desliming/delicithination, fractionation, distillation, activated carbon purification, carbon adsorption, and/or bleaching.
44. The method according to any of embodiments 41 to 43, comprising the further step of extensive bleaching of the fuel composition.
45. The method according to embodiment 44, wherein said extensive bleaching comprising the steps of
   a. heating the vegetable oil to 220-300 degrees Celsius,
   b. adding 1 -10 % bleaching clay,
   c. stirring optionally under vacuum in at least 15 minutes, and
   d. separation of the bleaching clay and refined vegetable oil by filtration.
46. The method according to any of embodiments 41 to 45, wherein said alkyl ester is selected from the group consisting of methyl ester, ethyl ester, and mixtures thereof.
47. The method according to any of embodiments 41 to 46, further comprising removing C₆ carboxylic acids and/or derivatives thereof from said fuel composition.
48. The method according to any of embodiments 41 to 47, further comprising removing C₁₆ and any higher order carboxylic acids and/or derivatives thereof from said fuel composition.
49. The method according to any of embodiments 41 to 48, wherein said one or more isolated alkyl esters are one or more alkyl esters of C₈ - C₁₄ carboxylic acids.
50. The method according to embodiment 49, wherein said one or more isolated alkyl esters are one or more alkyl esters of C₈-C₁₀, C₈-C₁₂, C₁₀-C₁₂, C₁₀-C₁₄ or C₁₂-C₁₄ carboxylic acids.
51. The method according to any of embodiments 41 to 48, wherein said one or more isolated alkyl esters have been isolated to the extent that the fuel composition comprises by weight 10-80% C₈ alkyl esters, 10-80% C₁₀ alkyl esters, 10-70% C₁₂ alkyl esters, and/or 0-40% C₁₄ alkyl esters.
52. The method according to any of embodiments 41 to 51, wherein said one or more isolated alkyl esters have been isolated to the extent that the fuel composition comprises by weight 35-45% C₈ alkyl esters, 25-35% C₁₀ alkyl esters, 15-25% C₁₂ alkyl esters, and/or 5-15% C₁₄ alkyl esters.
53. The method according to any of embodiments 41 to 51, wherein said one or more isolated alkyl esters have been isolated to the extent that the fuel composition comprises by weight 15-25% C₈ alkyl esters, 10-20% C₁₀ alkyl esters, 45-55% C₁₂ alkyl esters, and/or 15-25% C₁₄ alkyl esters.
54. The method according to any of embodiments 41 to 53 comprising the additional step of adding at least one alcohol.
55. The method according to embodiment 54, wherein said alcohol is as defined in any of embodiments 27 to 33.
56. The method according to any of embodiments 41 to 55, wherein the alkyl esters and the relative amount of alkyl ester in the composition is as defined in any of the preceding embodiments.
57. The method according to any of embodiments 41 to 56, comprising the additional step of adding at least one antioxidant.
58. The method according to embodiment 56, wherein said antioxidant is selected from the group consisting of glutathione, vitamin C (ascorbic acid), melatonin and vitamin E (tocopherols and tocotrienols), Carotenoids (lycopene, carotenes), and enzymes such as catalase, superoxide dismutase and various peroxidases.
59. The use according to any of embodiments 41 to 58, comprising the additional step of adding at least one coloring agent.
60. The use according to embodiment 59, wherein the coloring agent is selected from the group consisting of a lithium salt or strontiumsalt, boric acid, borax sodiumsalt, barium salt, calcium salt, copper salt, potassium salt, cerium salt, cesium salt, and nitromethane.
61. The use according to any of embodiments 41 to 60, wherein said composition further comprises a fragrance..
62. The method according to any of embodiments 41 to 61, wherein said vegetable oil is selected from the group consisting of coconut, corn, cottonseed, olive, palm, peanut, rape, rapeseed, canola, safflower, sesame, soybean, jatropha and/or sunflower oils.
63. The method according to any of embodiments 41 to 62, wherein said vegetable oil is selected from the group consisting of sunflower oil, olive oil, rape oil soy bean oil and jatropha oil.
64. The method according to any of embodiments 41 to 63, wherein said vegetable oil is a rapeseed oil.
65. Use of a fuel composition prepared by a method as defined in any of embodiments 41 to 64 as a lamp fuel, lighter fluid, heating fuel, fuel for cooking and/or cooling fuel.
66. Use of a fuel composition prepared by a method as defined in any of embodiments 41 to 64 for the preparation of a lamp fuel, lighter fluid, heating fuel, fuel for cooking and/or cooling fuel.

## Claims

1. Use of a composition comprising 30-90% by weight of one or more methyl esters of C₁₂-C₁₄ carboxylic acids or mixtures thereof as a lamp fuel, wherein said composition has a dynamic viscosity below 5 cP.

2. The use of a composition according to claim 1, wherein said composition has a melting point of less than 5°C.

3. The use according to any of the preceding claims, wherein said composition comprises 60-90% by weight of one or more methyl esters of C₁₂-C₁₄ carboxylic acids.

4. The use according to any of the preceding claims, wherein said composition comprises by weight 10-80% C₈ methyl esters, 10-80% C₁₀ methyl esters, 10-70% C₁₂ methyl esters, and/or 0-40% C₁₄ methyl esters.

5. The use according to any of the preceding claims, wherein at least 80% by weight of the alkyl esters are fully saturated.

6. The use according to any of the preceding claims, wherein said composition is liquid in the temperature range from 0-60 °C

7. The use according to any of the preceding claims, wherein said composition has a dynamic viscosity at 22°C, which is between 2.5 and 1 cP.

8. The use according to any of the preceding claims of a composition comprising by weight 15-25% C₈ methyl esters, 10-20% C₁₀ methyl esters, and/or 45-55% C₁₂ methyl esters, and/or 15-25% C₁₄ methyl esters as an outdoor lamp fuel.

9. The use according to any of the preceding claims of a composition comprising by weight 35-45% C₈ alkyl esters, 25-35% C₁₀ alkyl esters, 15-25% C₁₂ alkyl esters, and/or 5-15% C₁₄ alkyl esters as an indoor lamp fuel
